# EUROPEAN PATENT APPLICATION

(11) **EP 4 815 489 A1**
(43) Date of publication of application: **30.09.2026**
(21) Application number: 26168435.1
(22) Date of filing: 27.03.2026
(51) Int. Cl.: H04N 25/47, H04N 19/70, H04N 25/79

(54) **ASYNCHRONOUS READOUT ENCODING FOR EVENT-BASED VISION SENSOR**

(30) Priority: 28.03.2025 US 202563780112 P; 30.05.2025 WO PCT/CN2025/098427; 30.05.2025 WO PCT/CN2025/098453; 13.03.2026 US 202619566629; 13.03.2026 US 202619566665; 13.03.2026 US 202619566724; 13.03.2026 US 202619566782; 13.03.2026 US 202619566807; 13.03.2026 US 202619566810
(71) Applicant: OmniVision Technologies, Inc., Santa Clara California 95054 (US)
(72) Inventor: Saito, Daisuke, Los Altos (US); Yang, Wenlei, Shanghai (CN); Hu, Xiaoqin, Shanghai (US); Lin, Cheng-Pin, Saratoga (US); Dai, Tiejun, Santa Clara (US); Mu, Bo, San Jose (US); Zhang, Jin-Long, Santa Clara (US)
(74) Representative: Mewburn Ellis LLP

(57) **Abstract**

Asynchronous readout encoding for event-based vision sensors (and associated systems, devices, and methods) is disclosed herein. In one embodiment, an encoding format for transmitting event data from an event-based vision sensor includes a row address MSB package including a first prefix code and content bits for encoding MSB row address information, a row address LSB package including a second prefix code and content bits for encoding LSB row address information, a column address MSB package including a third prefix code and content bits for encoding MSB column address information, and a column address LSB package including a fourth prefix code and content bits for encoding LSB column address information. The encoding format can further include a column-append package, a row-append package, an embedded event packet comprising an embedded packet identifier package having a fifth prefix code, or any combination thereof.

## Description

### CROSS-REFERENCE TO RELATED APPLICATION(S)

The present application claims priority to U.S. Provisional Patent Application No. 63/780,112, filed March 28, 2025; International (PCT) Patent Application No. PCT/CN2025/098427, filed May 30, 2025; and International (PCT) Patent Application No. PCT/CN2025/098453, filed May 30, 2025, the disclosures of each of which is incorporated herein by reference in its entirety. The present application further claims priority to the following applications filed on March 13, 2026: U.S. Patent App. No. 19/566,629, U.S. Patent App. No. 19/566,665, U.S. Patent App. No. 19/566,724, U.S. Patent App. No. 19/566,782, U.S. Patent App. No. 19/566,807, U.S. Patent App. No. 19/566,810, the disclosures of each of which is incorporated herein by reference in its entirety.

### TECHNICAL FIELD

The present technology relates generally to image sensors. For example, several embodiments of the present technology described in detail below relate to encoding formats for event-based vision sensors that utilize variable-length prefix codes or flags, package sharing methodologies, and/or flexible data structures to reduce data overhead while maintaining temporal and spatial information for events detected by pixels of an event vision sensor array.

### BACKGROUND

Image sensors have become ubiquitous and are now widely used in digital cameras, cellular phones, security cameras, as well as medical, automobile, and other applications. As image sensors are integrated into a broader range of electronic devices, it is desirable to enhance their functionality, performance metrics, and the like in as many ways as possible (e.g., resolution, power consumption, dynamic range, etc.) through both device architecture design as well as image acquisition processing.

A typical image sensor operates in response to image light from an external scene being incident upon the image sensor. The image sensor includes an array of pixels having photosensitive elements (e.g., photodiodes) that absorb a portion of the incident image light and generate image charge upon absorption of the image light. The image charge photogenerated by the pixels may be measured as analog output image signals on column bitlines that vary as a function of the incident image light. In other words, the amount of image charge generated is proportional to the intensity of the image light, which is read out as analog image signals from the column bitlines and converted to digital values to provide information that is representative of the external scene.

### BRIEF DESCRIPTION OF THE DRAWINGS

Many aspects of the present disclosure can be better understood with reference to the following drawings. The components in the drawings are not necessarily to scale. Instead, emphasis is placed on illustrating clearly the principles of the present disclosure. The drawings should not be taken to limit the disclosure to the specific embodiments shown, but are provided for explanation and understanding.
**FIG. 1A** is a partially schematic diagram of a stacked hybrid complementary metal oxide semiconductor (CMOS) image sensor (CIS) and event-based vision sensor (EVS) system, configured in accordance with various embodiments of the present technology.
**FIG. 1B** is a partially schematic diagram of a specific example of the system of **FIG. 1A****.**
**FIG. 2** illustrates an encoding format for transmitting event data from an event-based vision sensor, the encoding format configured in accordance with various embodiments of the present technology.
**FIGs. 2A** and **2B** illustrate various package sharing methodologies for the encoding format of **FIG. 2** in accordance with various embodiments of the present technology.
**FIG. 2C** illustrates a pixel-level encoding methodology for the encoding format of **FIG. 2** in accordance with various embodiments of the present technology.
**FIG. 2D** illustrates a group-based encoding methodology for the encoding format of **FIG. 2** in accordance with various embodiments of the present technology.
**FIG. 2E** illustrates an event run-length encoding methodology for the encoding format of **FIG. 2** in accordance with various embodiments of the present technology.
**FIG. 2F** illustrates various methodologies for communicating timestamp information using the encoding format of **FIG. 2** in accordance with various embodiments of the present technology.
**FIG. 2G** illustrates (a) an embedded event packet structure for the encoding format of **FIG. 2** and (b) example embedded event packets that can be used to communicate timestamp information, in accordance with various embodiments of the present technology.
**FIG. 3** illustrates several packet sequences that demonstrate compression efficiency achieved by various encoding techniques in accordance with various embodiments of the present technology.
**FIG. 4** illustrates possible package orders for the encoding format of **FIG. 2** in accordance with various embodiments of the present technology.
**FIG. 5** illustrates another encoding format for pixel-wise encoding, configured in accordance with various embodiments of the present technology.
**FIG. 6** illustrates another encoding format for pixel-wise encoding with per-event timestamps, configured in accordance with various embodiments of the present technology.
**FIG. 7** illustrates an encoding format with both row-wise and column-wise timestamping, configured in accordance with various embodiments of the present technology.
**FIG. 8** illustrates another encoding format for pixel-wise encoding, configured in accordance with various embodiments of the present technology.
**FIG. 9** illustrates another encoding format for pixel group vector encoding in sparse event scenarios, configured in accordance with various embodiments of the present technology.
**FIG. 10** illustrates an encoding format for pixel group vector encoding in dense event scenarios, configured in accordance with various embodiments of the present technology.
**FIG. 11** is a block diagram of an event vision sensor system configured in accordance with various embodiments of the present technology.
**FIG. 12** is a block diagram of a hybrid image sensor system configured in accordance with various embodiments of the present technology.
**FIG. 13** illustrates another encoding format for transmitting event data from an event-based vision sensor, the encoding format configured in accordance with various embodiments of the present technology.
**FIG. 13A** illustrates an encoding methodology for the encoding format of **FIG. 13** in accordance with various embodiments of the present technology.
**FIG. 13B** illustrates a group-based encoding methodology for the encoding format of **FIG. 13** in accordance with various embodiments of the present technology.
**FIG. 13C** illustrates an event run-length encoding methodology for the encoding format of **FIG. 13** in accordance with various embodiments of the present technology.
**FIG. 14** illustrates another encoding format for transmitting event data from an event-based vision sensor, the encoding format configured in accordance with various embodiments of the present technology.
**FIGs. 14A-14F** illustrate various example embedded event packets that can be used in the encoding format of **FIG. 14** to communicate information in accordance with various embodiments of the present technology.
**FIG. 15** illustrates single-bit and multi-bit techniques for encoding event polarity information for in-line vector event encoding and line vector encoding in accordance with various embodiments of the present technology.

Skilled artisans will appreciate that elements in the figures are illustrated for simplicity and clarity and are not necessarily drawn to scale. For example, the dimensions of some of the elements in the figures may be exaggerated relative to other elements to aid in understanding of various aspects of the present technology. In addition, common but well-understood elements or methods that are useful or necessary in a commercially feasible embodiment are often not depicted in the figures, or described in detail below, to avoid unnecessarily obscuring the description of various aspects of the present technology.

### DETAILED DESCRIPTION

The present technology relates to encoding formats for event-based vision sensors that utilize variable-length prefix codes or flags, package sharing methodologies, and flexible data structures to reduce data overhead while maintaining temporal and spatial information for events detected by pixels of an event vision sensor array. The encoding format includes various package types such as row address, column address, and timestamp packages that can be shared across multiple pixels or events to improve encoding efficiency. Different encoding modes are provided, including pixel-level encoding, group-based encoding, and event run-length encoding, allowing for optimization based on event density and sensor characteristics. The technology also incorporates embedded packet identifiers and flexible timestamp implementations to enable additional functionality and synchronization capabilities in hybrid image sensor systems.

In the following description, specific details are set forth to provide a thorough understanding of aspects of the present technology. One skilled in the relevant art will recognize, however, that the systems, devices, and techniques described herein can be practiced without one or more of the specific details set forth herein, or with other methods, components, materials, etc.

Reference throughout this specification to an "example" or an "embodiment" means that a particular feature, structure, or characteristic described in connection with the example or embodiment is included in at least one example or embodiment of the present technology. Thus, use of the phrases "for example," "as an example," or "an embodiment" herein are not necessarily all referring to the same example or embodiment and are not necessarily limited to the specific example or embodiment discussed. Furthermore, features, structures, or characteristics of the present technology described herein may be combined in any suitable manner to provide further examples or embodiments of the present technology.

Spatially relative terms (e.g., "beneath," "below," "over," "under," "above," "upper," "top," "bottom," "left," "right," "center," "middle," and the like) may be used herein for ease of description to describe one element's or feature's relationship relative to one or more other elements or features as illustrated in the figures. It will be understood that the spatially relative terms are intended to encompass different orientations of a device or system in use or operation, in addition to the orientation depicted in the figures. For example, if a device or system illustrated in the figures is rotated, turned, or flipped about a horizontal axis, elements or features described as "below" or "beneath" or "under" one or more other elements or features may then be oriented "above" the one or more other elements or features. Thus, the exemplary terms "below" and "under" are non-limiting and can encompass both an orientation of above and below. The device or system may additionally, or alternatively, be otherwise oriented (e.g., rotated ninety degrees about a vertical axis, or at other orientations) than illustrated in the figures, and the spatially relative descriptors used herein are interpreted accordingly. In addition, it will also be understood that when an element is referred to as being "between" two other elements, it can be the only element between the two other elements, or one or more intervening elements may also be present.

It will be understood that, although the terms first, second, third, etc., may be used in the disclosure and claims to describe various elements, these elements should not be limited by these terms and should not be used to determine the process sequence or formation order of associated elements. Unless otherwise indicated, these terms are merely used to distinguish one element from another element. Thus, a first element discussed below could be termed a second element without departing from the teachings of the disclosed embodiments.

It is appreciated that the term "photosensor" or "photodiode" may correspond to a doped region disposed within the semiconductor material configured to photogenerate image charge(s) (e.g., one or more electrons or holes) in response to incident light. For example, photodiode may correspond to an n-doped region disposed within a p-type semiconductor material or an n-doped region surrounded by a p-type well disposed within the semiconductor material or a p-doped region disposed within an n-type semiconductor.

Throughout this specification, several terms of art are used. These terms are to take on their ordinary meaning in the art from which they come, unless specifically defined herein or the context of their use would clearly suggest otherwise. It should be noted that element names and symbols may be used interchangeably through this document (*e.g.*, Si vs. silicon); however, both have identical meaning.

### A. Overview

Event-based vision sensors (EVS) have emerged as a promising technology for capturing dynamic visual information with high temporal resolution and low latency. Unlike traditional frame-based image sensors, EVS pixels asynchronously detect and report local brightness changes, generating sparse event data that can efficiently represent visual motion and temporal contrast. The asynchronous nature of EVS data, however, presents challenges for data transmission and processing, particularly when integrating EVS capabilities into hybrid image sensor systems that combine both CMOS image sensor (CIS) imaging and event-based sensing.

Many existing EVS encoding schemes utilize fixed-length flags to represent event data, which can lead to inefficient use of bandwidth and increased data overhead. For example, some approaches employ address event representation (AER) formats with fixed word lengths for flag bits and address information. While these methods provide a straightforward encoding structure, they may not optimally compress event data, particularly in scenarios with varying event densities or distributions across the pixel array.

Other EVS encoding techniques implement row-wise grouping strategies to reduce data redundancy. However, these approaches often require sending event blocks for every column, which can result in significant data overhead. Additionally, many existing encoding schemes lack flexibility in representing different types of event information, such as polarity, timestamps, or additional sensor metadata, within a unified data structure.

The present technology addresses challenges associated with encoding event-based vision sensor data by introducing an innovative encoding format that utilizes variable-length prefix codes or flags, package sharing methodologies, and flexible data structures. This approach significantly reduces data overhead while maintaining temporal and spatial information for events detected by pixels of an event vision sensor array. The encoding format comprises various package types, including row address, column address, and timestamp packages, which can be shared across multiple pixels or events to improve encoding efficiency. Different encoding modes, such as pixel-level encoding, group-based encoding, and event run-length encoding, are supported, allowing for optimization based on event density and sensor characteristics.

The implementation of variable-length prefix codes for package flags is expected to allow for more efficient use of bit space by assigning shorter flag sequences to frequently occurring packages and longer sequences to less common ones. The encoding format also incorporates a package sharing methodology that enables multiple events sharing the same row or column segment to reuse address information, further reducing data redundancy. The package sharing methodology can also be used to share timestamp and/or other information in addition to or in lieu of address information. Additionally, the technology introduces embedded packet identifiers and flexible timestamp implementations, enabling additional functionality and synchronization capabilities in hybrid image sensor systems that combine both CMOS image sensor (CIS) imaging and event-based sensing.

The disclosed encoding format provides several advantages over existing approaches. Unlike fixed-length flag schemes that can lead to inefficient bandwidth usage, the variable-length prefix codes optimize bit allocation based on package frequency. The package sharing methodology addresses the limitations of row-wise grouping strategies that require sending event blocks for every column, significantly reducing data overhead. Furthermore, the flexible data structures allow for efficient representation of various types of event information, including polarity, timestamps, and additional sensor metadata, within a unified format. This versatility enables the encoding scheme to adapt to different event distributions, sensor configurations, and application requirements, potentially improving overall system performance in areas such as low-light imaging, high-speed motion capture, and dynamic range optimization. Encoding formats (and associated systems, devices, and methods) of the present technology disclosed herein are therefore expected to reduce power consumption and reduce use of data bandwidth for overhead in comparison to other existing encoding formats. By reducing the amount of data sent out from the image sensor via a MIPI transmitter, the present technology is also expected to reduce data loss of event data, which in turn is expected to improve temporal information reconstruction (e.g., video frame interpolation, image deblurring).

### B. Selected Embodiments of Encoding Formats for Event-Based Vision Sensors, and Associated Systems, Devices, and Methods

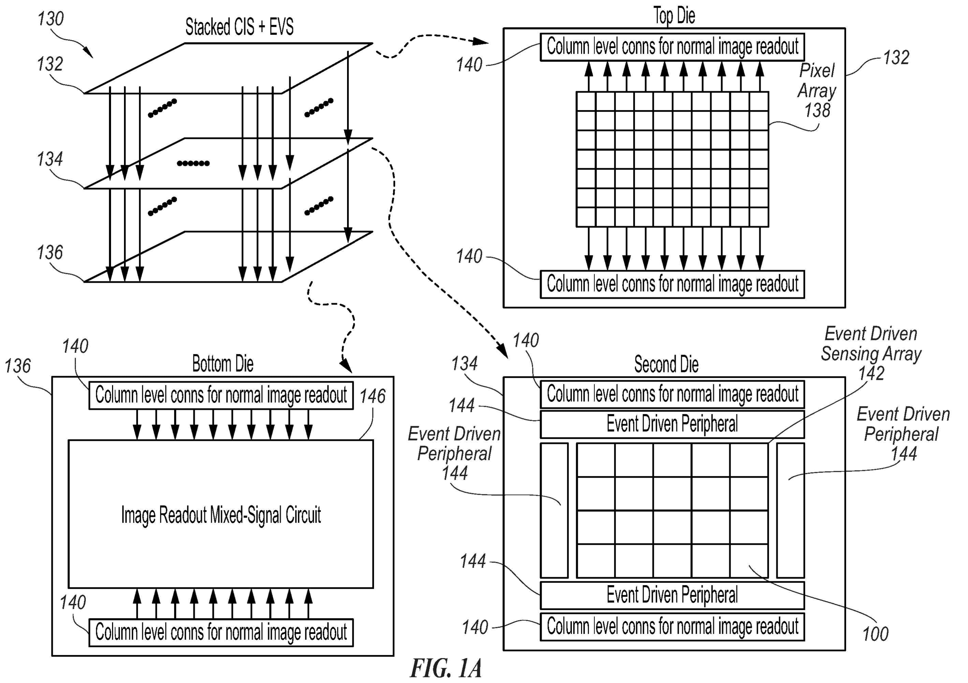

**FIG. 1A** is a partially schematic diagram of a stacked complementary metal oxide semiconductor (CMOS) image sensor (CIS) with an event-based vision sensor (EVS) system 130 ("the stacked system 130" or "the image sensor 130"), configured in accordance with various embodiments of the present technology. As shown, the stacked system 130 includes a first die 132, a second die 134, and a third die 136 that are stacked and coupled together in a stacked chip scheme. In some embodiments, the first die 132, the second die 134, and the third die 136 are semiconductor dies that include a suitable semiconductor material (e.g., silicon). In illustrated embodiment, the first die 132 (also referred to herein as the "top die") includes a pixel array 138. The third die 136 (also referred to herein as the "bottom die") includes image readout circuitry 146 (also referred to herein as "image readout mixed-signal circuitry"). The image readout circuitry 146 can be coupled to the pixel array 138 of the first die 132 through column level connections for normal image readout 140. In some embodiments, the column level connections for normal image readout 140 are implemented from column bitlines of the pixel array 138 with through silicon vias (TSVs) that extend between the first die 132 and the third die 136, and that are routed through the second die 134.

In some embodiments, the pixel array 138 is a two-dimensional (2D) array including a plurality of pixel cells (also referred to as "pixels") that each includes at least one photosensor (e.g., at least one photodiode) exposed to incident light. As shown in the illustrated embodiment, the pixels are arranged into rows and columns. Some of the pixels can be configured as CMOS image sensor (CIS) pixels that are configured to acquire image data of a person, place, object, etc., which can then be used to render images and/or video of a person, place, object, etc. For example, each CIS pixel is configured to photogenerate image charge in response to the incident light. After each CIS pixel has acquired its image charge, the corresponding analog image charge data can be read out by the image readout circuitry 146 in the third die 136 through the column bit lines. In some embodiments, the image charge from each row of the pixel array 138 may be read out in parallel through column bit lines by the image readout circuitry 146. As discussed in greater detail below, others of the pixels of the pixel array 138 can be configured as event vision sensor (EVS) pixels.

The image readout circuitry 146 in the third die 136 can include amplifiers, analog to digital converter (ADC) circuitry, associated analog support circuitry, associated digital support circuitry, etc., for normal image readout and processing. In some embodiments, the image readout circuitry 146 may also include event driven readout circuitry, which will be described in greater detail below. In operation, the photogenerated analog image charge signals are read out from the pixel cells of pixel array 138, amplified, and converted to digital values in the image readout circuitry 146. In some embodiments, image readout circuitry 146 may read out a row of image data at a time. In other examples, the image readout circuitry 146 may read out the image data using a variety of other techniques (not illustrated), such as a serial readout or a full parallel readout of all pixels simultaneously. The image data may be stored or even manipulated by applying post image effects (e.g., crop, rotate, remove red eye, adjust brightness, adjust contrast, and the like).

In the illustrated embodiment, the second die 134 (also referred to herein as the "middle die") includes an event driven sensing array 142 that is coupled to at least some of the pixels (e.g., EVS pixels) of the pixel array 138 in the first die 132. In some embodiments, the event driven sensing array 142 is coupled to the pixels of the pixel array 138 through hybrid bonds between the first die 132 and the second die 134. The event driven sensing array 142 can include an array of event driven circuits. In some embodiments, each one of the event driven circuits in the event driven sensing array 142 is coupled to at least one of the plurality of pixels of the pixel array 138 through hybrid bonds between the first die 132 and the second die 134 to asynchronously detect events that occur in light that is incident upon the pixel array 138 in accordance with the teachings of the present disclosure.

In some embodiments, corresponding event detection signals are generated by the event driven circuits in the event driven sensing array 142. The event detection signals can be received and processed by event driven peripheral circuitry 144 that, in some embodiments, is arranged around the periphery of the event driven sensing array 142 in the second die 134, as is shown in FIG. 1A. The embodiment illustrated in **FIG. 1A** also illustrates column level connections for normal image readout 140 that are routed through the second die 134 between the first die 132 and the third die 136.

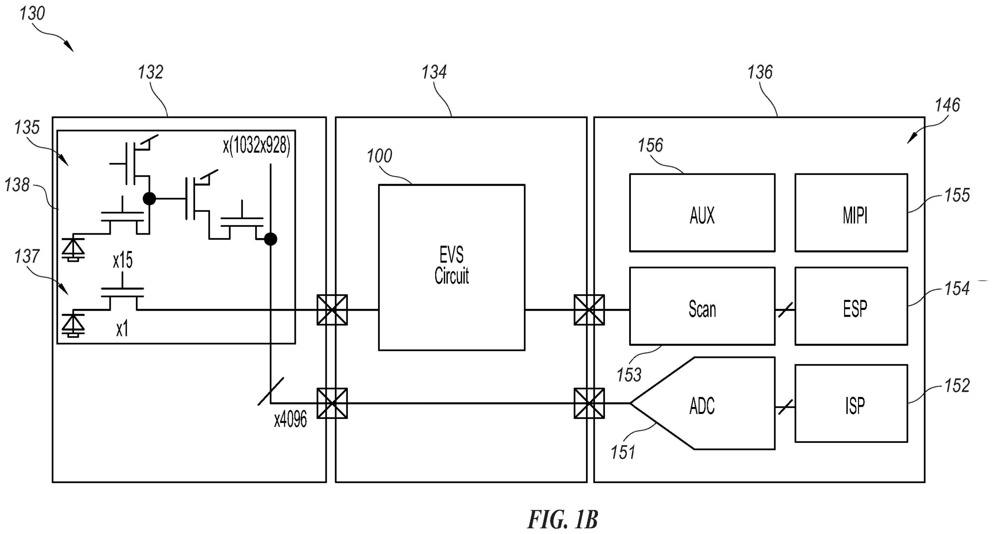

**FIG. 1B** is a partially schematic diagram of a specific example of the stacked system 130 of **FIG. 1A****.** As shown in **FIG. 1B**, the stacked system 130 includes the pixel array 138 on the first die 132 (only a portion of the pixel array 138 is shown in **FIG. 1B****),** an event driven circuit 100 of the event driven sensing array 142 on the second die 134, and image readout circuitry 146 on the third die 136. The image readout circuitry 146 includes analog-to-digital converters 151 ("the ADC 151"), an image signal processor 152, scan readout circuitry 153, an event signal processor 154, a synchronous communications interface 155 (e.g., a mobility industry processor interfaces (MIPI) transmitter and/or receiver), and various auxiliary circuits 156. As discussed in greater detail below, the image readout circuitry 146 can also include a deblur circuit (e.g., for performing event-guided deblur of CIS data).

The portion of the pixel array 138 shown in **FIG. 1B** corresponds to a 4x4 cluster of pixels in the pixel array 138. Such a cluster can be repeated across the pixel array 138. In the illustrated embodiment, fifteen (15) of the pixels of the cluster are configured as active (CIS) pixels 135 to capture CIS information (e.g., intensity information) corresponding to light incident on photosensors of those pixels. In addition, one of the pixels of the cluster is configured as an EVS pixel 137 to capture non-CIS information (e.g., contrast information, event data) corresponding to light incident on a photosensor of the EVS pixel 137.

The CIS pixels 135 of the cluster and the EVS pixel 137 of the cluster are read out independently. More specifically, CIS information captured by the CIS pixels 135 are read out through the second die 134 to the ADC 151 on the third die 136 using corresponding row/column control circuitry (not shown). Non-CIS information captured by the EVS pixel 137 is read out to the event driven circuit 100 on the second die 134 using corresponding row/column control circuitry (not shown), and events detected by the event driven circuit 100 are read out by the scan readout circuitry 153 on the third die 136. The CIS information captured by the CIS pixels 135 of the pixel array 138 is frame-based and can be readout out from the CIS pixels 135 row-by-row at the end of an exposure period. By contrast, the non-CIS information captured by the EVS pixel 137 is used by the event driven circuit 100 to asynchronously detect/trigger events, and the events can be read out according to a row scan readout scheme or a column scan readout scheme. Row scan readout schemes are discussed in greater detail below.

In some embodiments, row/column control circuitry corresponding to the CIS pixels 135 can be allocated on a same die as-or a different die from-the die (e.g., the third die 136) on which the ADC 151 is allocated. In these and other embodiments, row/column control circuitry corresponding to the EVS pixels 137 can be allocated on a same die as-or a different die from-the die (e.g., the third die 136) on which the scan readout circuitry 153 is allocated. In these and still other embodiments, the ADC 151 and/or the row/column control circuitry corresponding to the CIS pixels 135 can be allocated on a same die as-or a different die from-the die (e.g., the third die 136) on which the scan readout circuitry 153 and/or the row/column control circuitry corresponding to the EVS pixel 137 is/are allocated.

In the illustrated embodiment, the EVS pixel 137 is dedicated to capturing non-CIS (EVS) information while the CIS pixels 135 are dedicated to capturing CIS information. In other embodiments, the EVS pixel 137 and/or one or more of the CIS pixels 135 can be switched between being configured to capture CIS information and non-CIS information. This can enable the stacked system 130 to operate in a CIS-only mode in which all of the pixels 135 and the pixel 137 are used to capture CIS information, an EVS-only mode in which all of the pixels 135 and the pixel 137 are used to capture non-CIS (EVS) information, and/or a hybrid CIS and EVS mode in which a first subset of the pixels 135, 137 are used to capture CIS information and a second subset of the pixels 135, 137 are used to capture non-CIS (EVS) information.

In some embodiments, the event driven circuit 100 on the second die 134 has a same die size as the 4x4 pixel cluster on the first die 132. In other embodiments, the event driven circuit 400 can have a different die size from the 4x4 pixel cluster. Additionally, or alternatively, although the ratio of CIS pixels to EVS pixels is 15:1 in the 4x4 pixel cluster, other ratios of CIS pixels to EVS pixels (e.g., 14:2, 12:4, 8:8, 4:12, 2:14, 15:1) are possible and fall within the scope of the present technology. Moreover, although the EVS pixel 157 of **FIG. 1B** corresponds to a 4x4 pixel cluster, other arrangements (e.g., an EVS pixel corresponding to 1X1 pixels clusters, 4X2 pixel clusters, etc.) are possible and within the scope of the present technology. Furthermore, although one row of EVS pixels (e.g., the row including the EVS pixel 157) corresponds to four rows of CIS pixels in **FIG. 1B****,** other arrangements are possible and within the scope of the present technology. For example, each row of EVS pixels can correspond to (a) one row of CIS pixels, (b) to two rows of CIS pixels, (c) to three rows of CIS pixels, or (d) to more than four rows of CIS pixels.

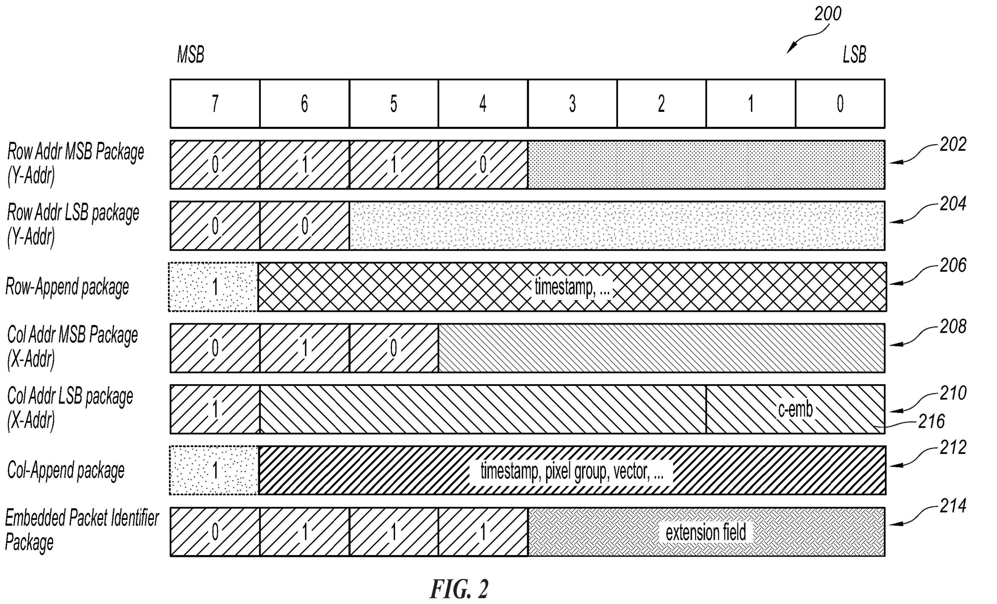

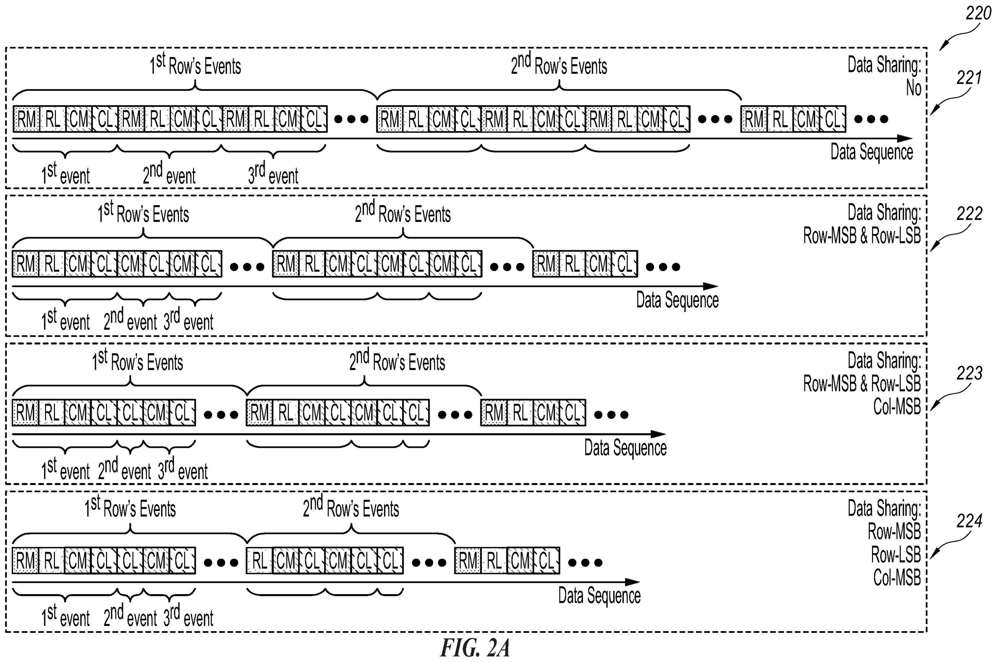

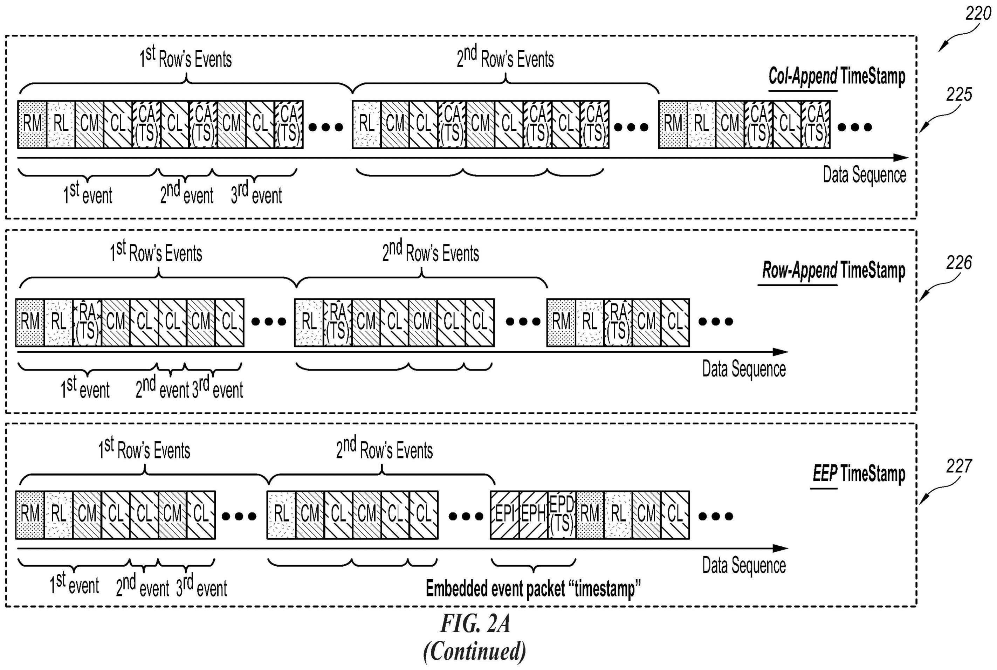

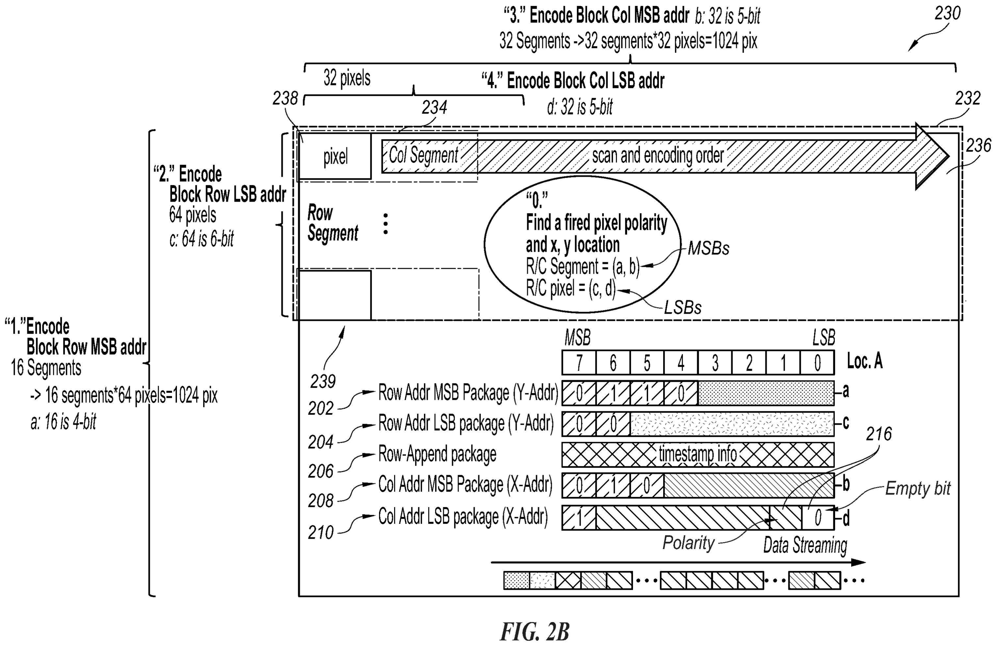

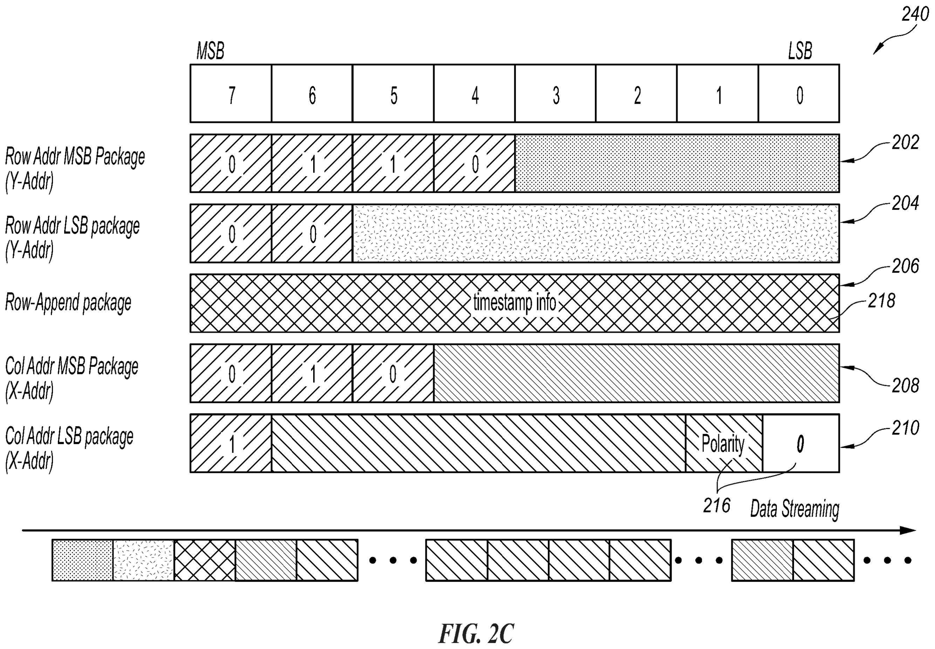

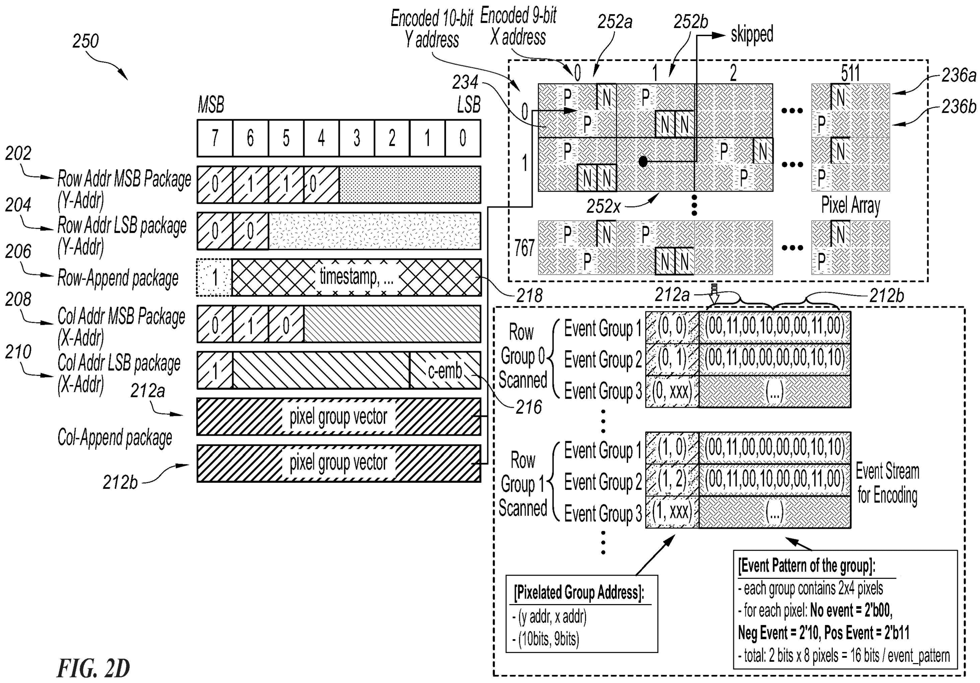

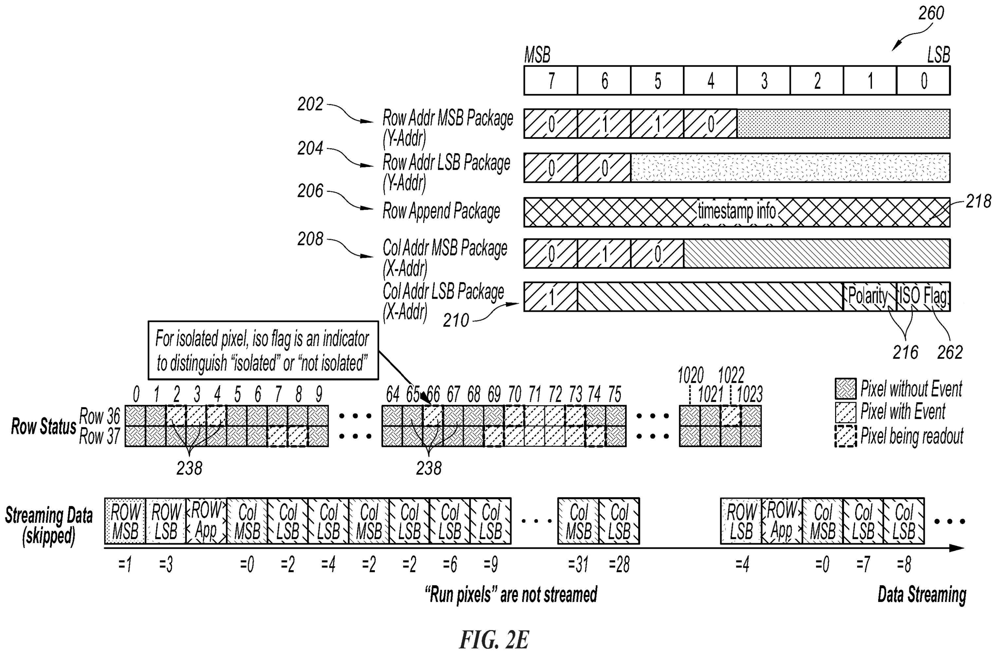

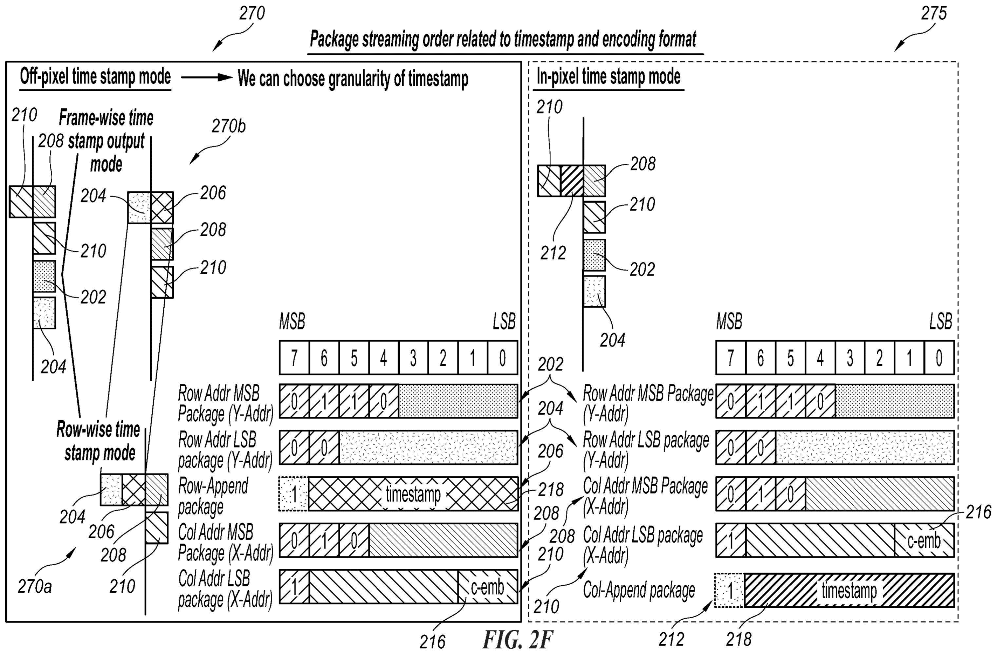

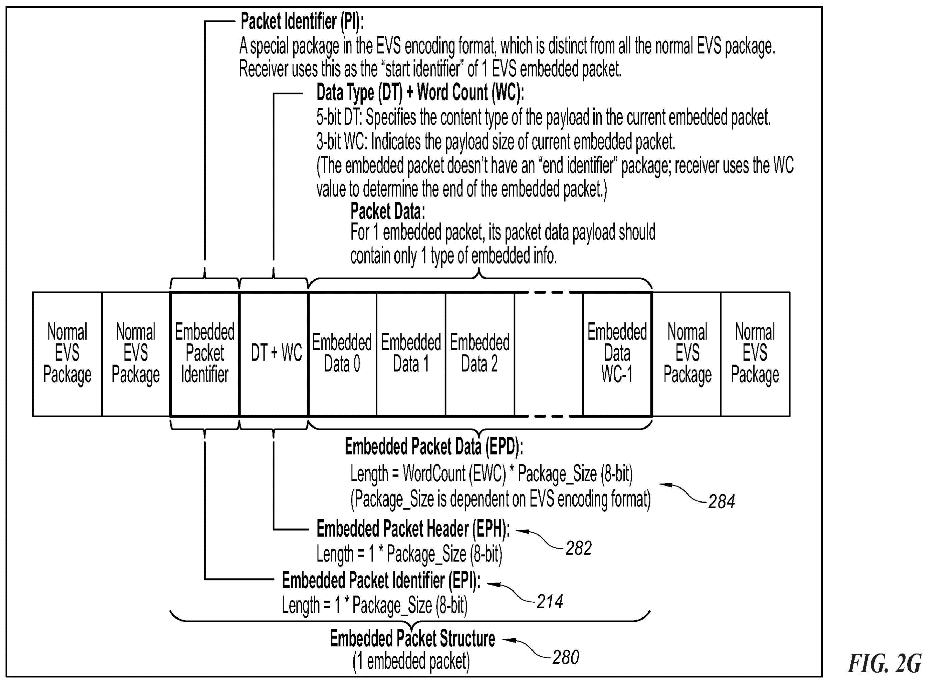

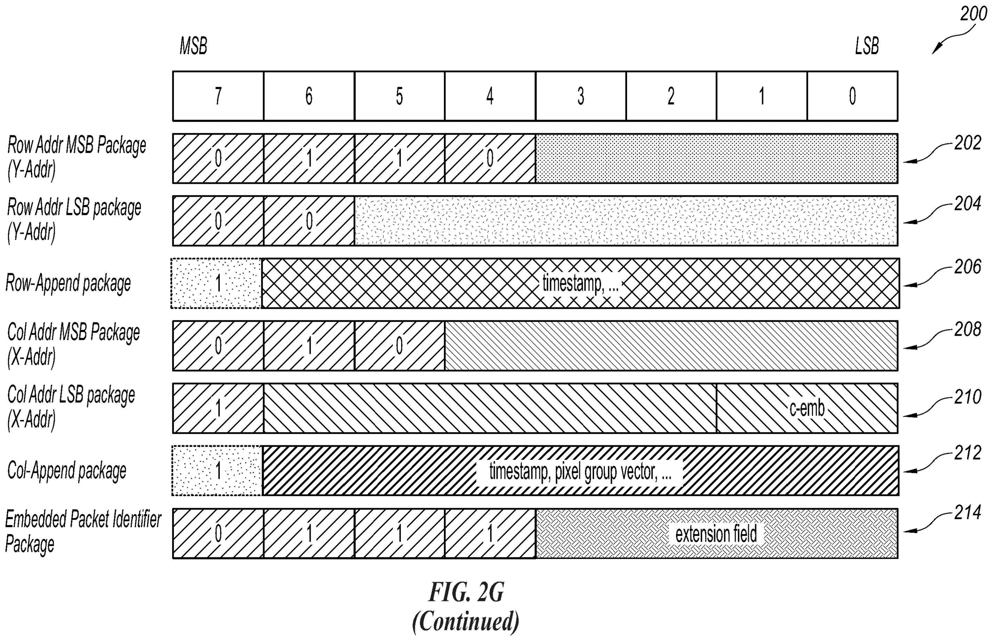

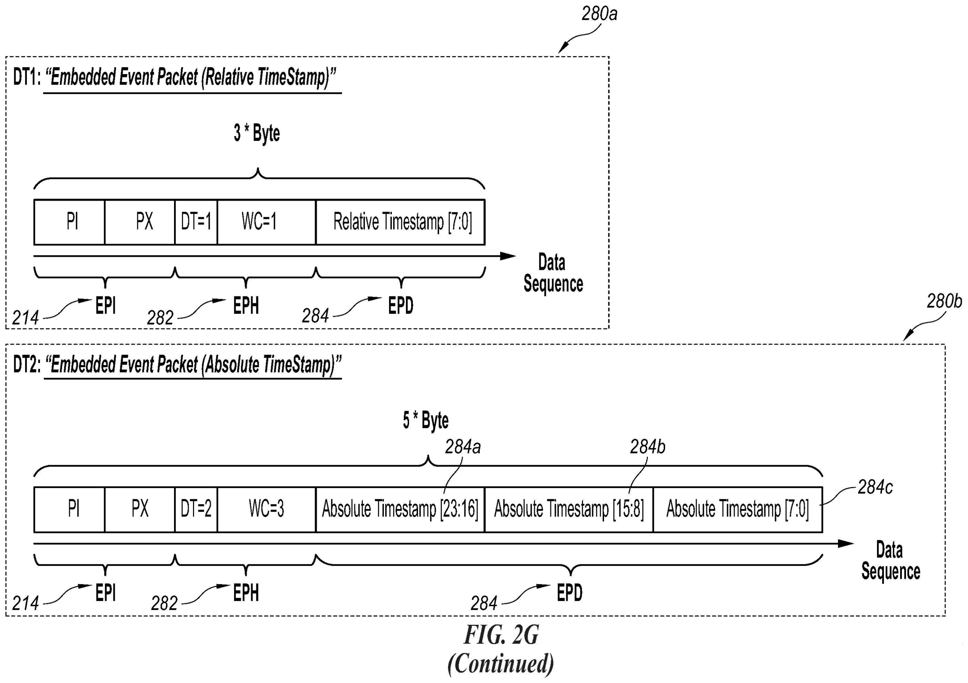

**FIG. 2** illustrates an encoding format 200 for transmitting event data from an event-based vision sensor, in accordance with various embodiments of the present technology. The encoding format 200 provides a structured approach for efficiently transmitting event information, such as pixel location (x-address and y-address information), polarity, and timestamps, while reducing data overhead. The format 200 supports stream-order-dependent encoding and decoding, making it well-suited for address-ordered, row-major streaming event sequences. The encoding format 200 assumes that only EVS pixels that have detected events are read out. Thus, as detected events are asynchronously read out of the EVS pixel array, they can be encoded using the encoding format 200 illustrated in **FIG. 2** and thereafter provided to a MIPI transmitter for transmission out of the image sensor.

The encoding format 200 comprises a sequence of packages: a row address most significant bit (MSB) package 202, a row address least significant bit (LSB) package 204, an optional row-append package 206, a column address MSB package 208, a column address LSB package 210, an optional col-append package 212, and an optional embedded packet identifier package 214. Each of these packages are described in greater detail below.

In the illustrated embodiment, the encoding format 200 utilizes packages with a length of 8 bits. However, this package length may be adjusted to accommodate different system requirements or design preferences. For example, in some implementations, the package length may be extended to 16 bits, 32 bits, or any other suitable bit length.

The format 200 further utilizes variable-length prefix codes for package flags that identify/distinguish the package types from one another. These variable-length prefix codes are inspired by Huffman encoding principles, which allows for efficient use of bit space. More specifically, by utilizing variable-length prefix codes for package flags, the encoding format may achieve improved efficiency in bit space utilization. This approach allows for shorter flag sequences for more frequently occurring packages, potentially reducing the overall data overhead. In some cases, commonly used packages can be assigned shorter flag sequences, while less frequent packages may have longer flag sequences. This variable-length flag scheme may enable more efficient compression of event data, potentially leading to reduced bandwidth requirements and improved transmission speeds. Additionally, the flexibility of variable-length flags may allow the encoding format to be optimized for different event distribution patterns or sensor configurations, adapting to various use cases and scenarios in event-based vision sensing applications. The flags can assist with maintaining an internal state of the encoding sequence to properly encode or decode the data, ensuring the correct interpretation of the package sequence.

As described above, the flags can be used to identify a package and distinguish it from other packages defined in the encoding format 200. For a package of the encoding format 200 that is assigned and transmitted with a flag, the position of that package in an encoded data stream can vary as the flag can be used by a decoder to identify the package and distinguish it from the other packages included in the encoded data stream. For a package of the encoding format 200 that is not assigned a flag (or is assigned an optional flag that is not used when transmitting the package), the position of that package in an encoded data stream can be fixed, meaning that its front neighbor (e.g., another package immediately preceding the package) and/or its rear neighbor (e.g., another package immediately following the package) is/are always the same. For example, a package without a flag can, when transmitted in an encoded data stream, be positioned in the encoded data stream such that it always (a) immediately follows another package with a first flag, (b) immediately follows another package of the same type (e.g., that also lacks a flag), (c) immediately precedes another package with a second flag, and/or (d) immediately precedes another package of the same type (e.g., that also lacks a flag). Continuing with this example, the flag(s) of the package(s) positioned ahead of or following the package without the flag in the encoded data stream can be used by a decoder to identify the package without the flag and distinguish it from other packages transmitted in the encoded data stream.

The specific pattern of package flags shown in **FIG. 2** represents one possible configuration, but alternative flag patterns may be employed. Indeed, various alternative flag patterns are described in greater detail below. The flexibility of the encoding formats described herein allows for customization of both package length and flag patterns, provided that the resulting implementation adheres to the underlying hardware encoding algorithm. This adaptability enables encoding formats of the present technology to be optimized for various applications and hardware configurations while maintaining its core functionality and efficiency.

At the beginning of the sequence shown in **FIG. 2****,** row address information is communicated using two packages: the row address MSB package 202 and the row address LSB package 204. In the example shown, four bits of the row address MSB package 202 are used for the actual address information, with the remaining four bits (shown as '0110') serving as a flag to identify the package type. The row address LSB package 204 uses six bits for address information and two bits (shown as '00') for the flag. This allocation allows for a total of 10 bits of row address information, capable of addressing up to 1024 rows. For larger arrays, additional row address packages (e.g., one or more row-append packages 206) may be added to the sequence to expand the addressable range. In some embodiments, an optional one-bit flag (shown as '1') can be used to identify a row-append package 206 and distinguish it from other packages of the sequence. The optional row-append package(s) 206 may follow the row address LSB package. As a specific example, when the one-bit flag is not used, row-append packages 206 may be required to follow another package (e.g., a row address LSB package 204 or another row-append package 206), such as to assist a decoder with identifying the row-append package 206 (e.g., using the flag of the preceding row address LSB package 204). If enabled, the row-append package(s) 206 can contain custom-defined content such as row-wise information or timestamps, providing flexibility in the data representation.

The sequence continues with column address packages. More specifically, column address information is split between the column address MSB package 208 and the column address LSB package 210. The column address MSB package 208 uses five bits for address information and three bits (shown as '010') for its flag, while the column address LSB package 210 uses five bits for address information and one bit (shown as '1') for its flag. In addition, two bits of the column address LSB package 210 can be used for column embedded information. These column embedded bits 216 can be used to convey various information, such as event polarity or other pixel-specific attributes. One or both of the column embedded bits 216 may also be used to provide additional column address bit-width, thereby expanding column wise resolution up to 4096 columns. As with row addressing, additional column address packages (e.g., one or more column-append packages 212) may be added to the sequence to expand the addressable range beyond 1024 columns. In some embodiments, an optional one-bit flag (shown as '1') can be used to identify a column-append package 212 and distinguish it from other packages of the sequence. The optional column-append package(s) 212 may follow the column address LSB package 210. As a specific example, when the one-bit flag is not used, column-append packages 212 may be required to follow another package (e.g., a column address LSB package 210 or another column-append package 212), such as to assist a decoder with identifying the column-append package 212 (e.g., using the flag of the preceding column address LSB package 210). If enabled, the column-append package(s) can contain custom-defined content such as pixel-wise information, timestamps, or pixel group vectors, offering additional flexibility in event representation.

The encoding format 200 may optionally include an embedded packet identifier package 214, which can appear anywhere in the sequence and can be used to identify a start of an embedded event packet stream. As described in greater detail below with reference to **FIG. 2G****,** an embedded event packet stream can include a sequence of packets that includes (a) an embedded packet identifier package 214, an embedded packet header package (not shown in **FIG. 2****),** and one or more embedded packet data packages (not sown in **FIG. 2****).** Embedded event packet streams may be used to encode special types of events with low generation frequency, such as externally triggered events.

The encoding format 200 illustrated in **FIG. 2** can implement a package sharing methodology for both row and column address information. As discussed in detail below, this approach allows multiple events sharing the same row or column segment to reuse address information, reducing redundancy and improving compression efficiency. This sharing methodology can be also or alternatively be applied for sharing timestamp and/or other information, as described in greater detail below with reference to **FIG. 2F** and **FIG. 2G****.** Indeed, the present technology facilitates sharing any event information across several events using the principles of the package sharing methodology described here.

Various encoding modes are supported within this encoding format. "Event pixel" encoding allows for individual pixel event representation, while "pixel group vector" encoding in the column-append package 212 enables efficient representation of events for groups of pixels. Additionally, event run-length representation can be implemented in the column address LSB package 210 to compress consecutive events efficiently.

By utilizing the encoding format 200 of **FIG. 2****,** event-based vision sensor systems can achieve high encoding efficiency while maintaining the flexibility to represent various types of event information. The format's design allows for on-chip integration with low cost, low latency, and low power consumption, making it suitable for a wide range of applications in event-based vision sensing.

**FIG. 2A** illustrates various package sharing methodologies 220 for the encoding format 200 of **FIG. 2** in accordance with various embodiments of the present technology. The encoded event sequence shown can be row-major, column-ordered (e.g., such that in each row, events are encoded and streamed with ascending-ordered column addresses). The package sharing methodologies 220 shown in **FIG. 2A** utilize the row address MSB package 202, row address LSB package 204, column address MSB package 208, and column address LSB package 210 of the encoding format 200 of **FIG. 2** to efficiently encode address information for multiple pixels or events. More specifically, seven scenarios 221-227 are illustrated in **FIG. 2A****.** In scenario 221, event information for two rows are encoded and streamed without package sharing. In scenario 222, the event information for the two rows are encoded and streamed using shared row address packages. In particular, row address MSB packages 202 and row address LSB packages 204 are shared such that events detected by two or more pixels of a same row can be encoded and streamed using a same row address MSB package 202 and/or a same row address LSB package 204. In scenario 223, the event information for the two rows are encoded and streamed using shared row address packages and shared column address MSB packages 208. In particular, similar to scenario 222, events detected by two or more pixels of a same row can be encoded and streamed using a same row address MSB package 202 and/or a same row address LSB package 204. In addition, events detected by two or more pixels having the same column address MSB can be encoded and streamed using a shared column address MSB package 208. In scenario 224, similar to scenario 223, the event information for the two rows are encoded and streamed using shared row address packages and shared column address MSB packages 208. In contrast to scenario 223, events detected by two or more pixels of rows having the same row address MSB can, under scenario 224, be encoded and streamed using a same/shared row address MSB package.

Other possible package sharing techniques are possible and within the scope of the present technology. For example, scenarios 225-227 illustrate how the encoding format 200 of FIG. 2 can be utilized to encode event timestamps using shared timestamp packages. In scenario 225, timestamp information for each event is encoded and transmitted using column-append packages 212. In scenario 226, timestamp information for events detected by pixels of a same row is encoded and transmitted using a shared row-append package 206. In scenario 224, timestamp information is encoded and transmitted using shared embedded event packages (e.g., including an embedded packet identifier package 214) such that all events having a same timestamp share a same embedded event package. As still another example, events detected by two or more pixels located in different rows but having a same column address MSB can share a same column address MSB package 208.

**FIG. 2B** illustrates a package sharing methodology 230 for communicating row address information and column address information using the encoding format 200 of **FIG. 2** in accordance with various embodiments of the present technology. In some cases, the package sharing methodology 230 may be applied to a pixel array with 1024 rows and 1024 columns. The row address MSB package 202 may utilize a four-bit flag (shown as '0110'), allowing the remaining four bits to encode row address MSB information. This configuration enables the division of the array into sixteen row segments 232, with each segment 232 containing 64 pixels. The four bits in the row address MSB package 202 may be used to address these sixteen segments 232.

Within each row segment 232, individual pixels 238 may be addressed using row address LSB packages 204. A row address LSB package 204 may employ a two-bit flag (shown as '00'), leaving six bits available for encoding the specific row 236 within the identified segment 232. This arrangement allows for precise addressing of each of the 64 pixels 238 within a given row segment 232.

For column addressing, the column address MSB package 208 may use a three-bit flag (shown as '010'), providing five bits for encoding column address MSB information. This configuration allows the division of the pixel array columns into 32 segments 234, each containing 32 pixels 238. The five bits in the column address MSB package 208 may be used to address these 32 column segments 234.

Within each column segment 234, individual pixels 238 may be addressed using the column address LSB package 210. The column address LSB package 210 may employ a one-bit flag (shown as '1'), leaving five bits available for encoding the specific column 239 within the identified segment 234. This arrangement allows for precise addressing of each of the 32 pixels 238 within a given column segment 234. Additionally, the column address LSB package 210 may include two bits 216 for column embedded information, which may be used to communicate event polarity or other pixel-specific data. In some implementations, one or both of these column embedded bits 216 may be unused or may be repurposed/used as column address bits to expand column address bit length and thereby expand the number of addressable columns.

The package sharing methodology 230 reduces data overhead by allowing multiple events sharing the same row or column segment to reuse address information. For example, when encoding events, the process may begin by transmitting a row address MSB package 202 to identify the row segment 232, followed by a row address LSB package 204 to specify the exact row 236 within that segment 232. A timestamp package (e.g., a row-append package 206) may then be transmitted to provide temporal information for the events in that row 236.

Next, a column address MSB package 208 may be sent to identify the column segment 234, followed by a column address LSB package 210 to specify the exact column 239 within that segment 234. This combination of packages uniquely identifies an individual pixel 238 given the row address and column address information.

If another pixel 238 in the same row segment 232 and column segment 234 detects an event (e.g., corresponding to a same timestamp), that event information may be encoded by sending (e.g., only) another column address LSB package 210. In this case, the previously transmitted row address MSB package 202, row address LSB package 204, and column address MSB package 208 are not resent, as they can be shared for multiple pixels within the same row segment 232 and column segment 234. This sharing of address information across multiple events significantly reduces the amount of data that needs to be transmitted.

When a new row segment 232 or a new column segment 234 is encountered, a new corresponding row or column MSB package 202 or 208, respectively, is encoded. For instance, if events are detected in a different column segment 234, a new column address MSB package 208 is transmitted, followed by one or more corresponding column address LSB packages 210 for the events in that new segment 234.

While the example in **FIG. 2B** demonstrates sharing of row address packages, the concept may be extended to sharing column address packages as well. This flexibility allows for efficient encoding of event data regardless of the distribution pattern of events across the pixel array.

In the context of single-pixel encoding, the package sharing methodology 230 offers additional efficiency. Instead of separately encoding event polarity, this information may be included in the column embedded bits 216 of the column address LSB packages 210. Since a column address LSB package 210 is transmitted for each detected event in single-pixel encoding, incorporating polarity information in this package 210 eliminates the need for separate polarity packages, further reducing the total number of packages transmitted. As a specific example, one of the column embedded bits 216 (e.g., bit 1) in the column address LSB package 210 can be set to "1" to indicate that pixel detected a positive event and can be set to "0" to indicate that pixel detected a negative event, or *vice versa.*

Timestamp information may also be efficiently encoded using the package sharing methodology 230. In some implementations, a timestamp package (e.g., a row-append package 206) may be inserted at the start of each row. This approach allows for temporal information to be associated with events while minimizing the number of timestamp packages that need to be transmitted.

The package sharing methodologies 220 and 230 described in FIGs. 2A and 2B, respectively, provide a flexible and efficient approach to encoding event data from event-based vision sensors. By segmenting address information and sharing packages across multiple events, this methodology can significantly reduce data overhead while maintaining precise spatial and temporal information for each detected event.

**FIG. 2C** illustrates a pixel-level encoding methodology 240 for the encoding format 200 of **FIG. 2** in accordance with various embodiments of the present technology. In pixel-level encoding, event information for individual pixels may be encoded efficiently within the existing encoding format 200 of **FIG. 2****.** In some embodiments, events can be encoded in blocks, with each event assigned a row address and a column address. A timestamp 218 for each row or each EVS frame can be transmitted in a row-append package 206 following a row address LSB package 204. Stated another way, events detected by pixels of a same row or a same EVS frame can share a same timestamp and/or row-append package 206. In addition, event polarity information for each event may be incorporated into each column address LSB package 210, specifically within the column embedded bits 216. As discussed above, this approach may eliminate the need for separate packages to communicate event polarity, potentially reducing the overall data overhead. For example, one of the column embedded bits 216 in the column address LSB package 210 may be designated to represent event polarity, with a value of '0' indicating a negative event and a value of '1' indicating a positive event, or *vice versa.*

**FIG. 2D** depicts a group-based encoding methodology 250 (also referred herein to as "pixel group vector encoding") for the encoding format 200 of **FIG. 2** in accordance with various embodiments of the present technology. Group-based encoding may differ from pixel-level encoding by encoding events for multiple pixels together, potentially further reducing data overhead.

In some implementations of group-based encoding, events from a group 252 of pixels 238 may be encoded together. For example, events from a 2x4 pixel block 252 (two rows and four columns of pixels, also referred to as an event group 252) may be encoded together. Each event group 252 may be assigned an x, y address for identification.

In an example of a 1536 x 2048 array, the pixel array may be divided into 768 y-addresses (addressable using a 10-bit y-address) and 512 x-addresses (addressable using a 9-bit x-address) for event groups 252. Event information for each pixel 238 within a group 252 may be represented using two bits, allowing for encoding of no event, positive polarity event, or negative polarity event.

The event information for a pixel group 252 may be communicated using two 8-bit column-append packages 212a and 212b. For instance, event group 1 (labeled as event group 252a and shown with x-address 0 and y-address 0 in **FIG. 2D****)** may have its event information encoded as: 00 (no event), 11 (positive polarity event), 00, 10 (negative polarity event) in a first column-append package 212a and 00, 00, 11, and 00 in a second column-append package 212b. These two column-append packages 212a and 212b may follow a corresponding column address LSB package 210 that identifies the event group 252a.

In some implementations, each column-append package 212 may include an 8-bit pixel group vector of event information corresponding to four pixels 238 of the same event group 252 (e.g., a same row 236 of a same event group 252). This approach may allow for efficient communication of event information for multiple pixels 238 while maintaining the ability to identify individual pixel events within the group 252. In these and other embodiments, event groups 252 in which no pixels detected an event (e.g., event group 252x in **FIG. 2D****)** can be skipped to reduce an amount of data encoded and transmitted.

The use of column-append packages 212 for pixel group vector encoding may provide flexibility in the encoding format. In addition to event information, column-append packages 212 may be used to communicate other types of information, such as timestamp data, potentially allowing for further customization of the encoding scheme based on specific application requirements.

In some embodiments,
**FIG. 2E** illustrates an event run-length encoding methodology 260 for the encoding format 200 of **FIG. 2** in accordance with various embodiments of the present technology. The event run-length encoding methodology 260 can be used in combination with pixel-level encoding described above with reference to **FIG. 2C****.** The event run-length methodology 260 may provide an efficient method for encoding consecutive events, potentially further reducing data overhead in scenarios where multiple adjacent pixels 238 detect events.

In some implementations of event run-length representation, run length information 262 (also referred to herein as an "isolation flag") may be inserted into the column embedded bits 216 of the column address LSB package 210. For example, one bit (e.g., bit 1) of the column embedded bits 216 may be used to communicate event polarity, while another bit (referred to as the "ISO flag bit"), such as bit 0, may indicate whether an immediately adjacent pixel 238 also detected an event.

In some cases, isolated events may be encoded differently from consecutive events. For instance, consider the pixel 238 at row 36, column 66 of **FIG. 2E****,** which has detected an isolated event (e.g., because neither the pixel 238 at row 36, column 65 nor the pixel 238 at row 36, column 67 detected an event). In this example, a column address LSB package 210 may be used to encode the event detected by the pixel 238 at row 36, column 66. In this column address LSB package 210, one column embedded bit 216 (e.g., bit 1) may communicate the event polarity, while the other column embedded bit 216 (e.g., bit 0) may indicate (e.g., via a '1' bit) that the event is isolated.

In comparison, when consecutive pixels 238 detect events of the same polarity, a different encoding approach may be used. For example, consider the pixels 238 at row 36, columns 70-73. Each of these pixels 238 has detected an event of the same polarity. Thus, under event run-length representation, only the first and last events in the sequence may be encoded using column address LSB packages 210. More specifically, a first column address LSB package 210 may be used to encode the event detected by the pixel 238 at row 36, column 70 (corresponding to the start of the event sequence). One column embedded bit 216 of this package 210 can be used to communicate event polarity and another column embedded bit 216 of this package can be used to indicate (e.g., via a '0' bit) that the event is not isolated. A second column address LSB package 210 immediately following the first column address LSB package 210 can be used to encode the event detected by the pixel 238 at row 36, column 73 (corresponding to the end of the event sequence). One column embedded bit 216 of this second package 210 can be used to communicate event polarity and another column embedded bit 216 of this second package 210 can be used to indicate (e.g., via a '0' bit) that the event is not isolated.

In this scenario, no column address LSB packages 210 are streamed for the "run pixels" (e.g., pixels 238 at row 36, columns 71 and 72). Instead, the decoder may identify these as run pixels based on the first and second column address LSB packages 210. More specifically, the column address LSB bits included in the first and second column address LSB packages 210 can identify the start pixel 238 and the end pixel 238 of an event sequence (thereby identifying pixels 238 in between the start pixel 238 and the end pixel 238 as "run pixels"), the polarity indicated in the column embedded bits 216 can indicate that every pixel 238 of the sequence detected an event of a same polarity, and the isolation flag bit 262 in the column embedded bits 216 can identify that these events were not isolated events. Such an approach may significantly reduce the number of packages streamed for consecutive events, potentially improving encoding efficiency.

The event run-length representation may be particularly effective in scenarios with spatially correlated events, such as moving edges or objects in a scene. By encoding only the start and end of event runs, this method may achieve substantial data compression while preserving the spatial and temporal information of the events.

**FIG. 2F** illustrates various methodologies for communicating timestamp information using the encoding format 200 of **FIG. 2** in accordance with various embodiments of the present technology. The encoding format may support different modes for incorporating timestamp information, including an off-pixel timestamp mode 270 and an in-pixel timestamp mode 275.

In some cases, the in-pixel timestamp mode 275 may communicate timestamp information 218 for each event detected by each pixel. This timestamp information 218 may be encoded in a column-append package 212 that follows a column address LSB package 210. After transmitting the column-append package 212 containing timestamp information, the encoding format may allow for four possible package types to follow: a column address MSB package 208, a column address LSB package 210, a row address MSB package 202, or a row address LSB package 204. The flags associated with these packages may be used by a decoder to identify which of the four package types follows the column-append package 212.

The off-pixel timestamp mode 270 may communicate a single timestamp 218 for a group of pixels, such as for each row of pixels or for each EVS frame. A frame may represent a full scan of all rows of the event-based vision sensor pixel array from top to bottom.

In some implementations, a row-based or row-wise off-pixel timestamp mode 270a may be used. In this mode 270a, a single timestamp 218 may be output for each row. At the start of each row, timestamp information 218 may be communicated in a row-append package 206 that follows a row address LSB package 204. The row-append package 206 may then be followed by either a column address MSB package 208 or a column address LSB package 210.

When not at the start of a row in the row-wise off-pixel timestamp mode 270a, timestamp information 218 may not be output in a row-append package 206. Instead, column address LSB packages 210 may be used to communicate each event. Each of these column address LSB packages 210 may be followed by either a column address MSB package 208, a column address LSB package 210, a row address MSB package 202, or a row address LSB package 204. If followed by a row address LSB package 204, a next row-append package 206 may be used to communicate timestamp information 218.

In some cases, a frame-based or frame-wise off-pixel timestamp mode 270b may be implemented. In this mode 270b, a single timestamp 218 may be output for each frame of event-based vision sensor data. At the start of each frame (e.g., at the start of the first row of the event-based vision sensor pixel array), a row address LSB package 204 may be output followed by a row-append package 206 that includes timestamp information 218.

When not at the start of the frame in the frame-wise off-pixel timestamp mode 270b, row address LSB packages 204 may be followed by either column address MSB packages 208 or column address LSB packages 210. Each column address LSB package 210 may be followed by either a column address MSB package 208, a column address LSB package 210, a row address MSB package 202, or a row address LSB package 204.

The flexibility of the encoding format in implementing different timestamp representations (pixel-wise, row-wise, frame-wise) in row and column append packages 206 and 212 may allow for efficient encoding of temporal information while maintaining compatibility with the overall package structure. This approach may enable the encoding format to adapt to different event-based vision sensor configurations and application requirements, potentially optimizing the balance between temporal resolution and data efficiency. If a higher precision of timestamp 218 is required, the embedded event packet identifier package 214 can be utilized, which is described in greater detail below with reference to **FIG. 2G****.**

**FIG. 2G** illustrates an embedded event packet structure 280 (also referred to herein as an "embedded event packet 280") for the encoding format 200 of **FIG. 2** in accordance with various embodiments of the present technology. As shown, the embedded packet data structure 280 includes an embedded packet identifier package 214, an embedded event packet header package 282, and one or more embedded event packet data packages 284. Embedded event packets 280 may be optional packets of the encoding format 200 of **FIG. 2** that can be inserted at any point in the package sequence (e.g., by using the flag (shown as '0111') of an embedded event packet identifier package 214 to identify a start of an embedded event packet 280). Thus, the presence of an embedded event packet identifier package 214 in a data stream may signal to a decoder that additional information will follow in subsequent packages of an embedded event packet 280. This feature may allow for the flexible inclusion of various types of data within the event stream without disrupting the primary encoding structure. In some embodiments, four-bit extension fields of embedded event packet identifier packages 214 (e.g., bits of the embedded event packet identifier packages 214 that are not part of the flags) can be unused. In other embodiments, the four-bit extension fields of embedded event packet identifier packages 214 may be used to encode additional information in the data stream, such as data type (DT) information for data included in corresponding embedded event packet data packages 284.

As shown, an embedded event packet identifier package 214 may be immediately followed by an embedded event packet header package 282. The embedded event packet header package 282 may contain information about the type and quantity of data contained in the subsequent embedded event packet data packages 284. For example, an embedded event packet header package 282 may include a data type (DT) field and a word count (WC) field. In the illustrated embodiment, the data type field may use five bits to specify the nature of the information contained in the following embedded event packet data packages 284. The word count field may use three bits to indicate the number of embedded event packet data packages 284 that will follow the embedded event packet header package 282.

The data type field in the embedded event packet header package 282 may be used to specify various kinds of information. In some cases, the data type may indicate CIS-Sync information, which may include details such as frame numbers or exposure settings. This capability may be particularly useful in hybrid image sensor systems that combine event-based vision sensors with CMOS image sensors, allowing for synchronization between the two types of data (event vision sensor (EVS) data and CMOS image sensor (CIS) data).

In some implementations, the data type may specify that embedded event packet data packages 284 contain timestamp information. For example, the data type field may be used to specify a free-run (or asynchronous readout event) timestamp. This may allow for more precise temporal information to be included in an encoded data stream when needed, potentially enhancing the temporal resolution of the event data beyond what is provided by the standard timestamp packages. For example, this capability may allow for enhanced temporal precision when required by specific applications or use cases.

**FIG. 2G** further illustrates two example embedded event packets 280a and 280b that may be used to transmit timestamp information in an encoded data stream. In the embedded event packet 280a, relative timestamp information may be shared by transmitting (1) an embedded event packet identifier package 214 comprising (i) a package identifier (PI) or flag and (ii) an extension field (PX) and (2) an embedded event packet header package 282 specifying a data type of 1 (DT=1) to indicate relative timestamp information is included in following embedded event packet data package(s) 284. In this example, a word count field of the embedded event packet header package 282 is set to 1 (WC=1), indicating that a single embedded event packet data package 284 containing relative timestamp information (Relative Timestamp [7:0]) will follow the embedded event packet header package 282.

In the embedded event packet 280b, absolute timestamp information may be communicated. This may be achieved by transmitting an embedded event packet identifier package 214 followed by an embedded event packet header package 282 in which (a) the data field indicates a data type of 2 (DT=2) to indicate absolute timestamp information and (b) the word count field is set to 3 (WC=3) to signal that three embedded event packet data packages 284 (identified individually in **FIG. 2G** as embedded event packet data packages 284a-284c) containing absolute timestamp information (Absolute Timestamp [23:16], Absolute Timestamp [15:8], Absolute Timestamp [7:0]) will follow the embedded event packet header package 282.

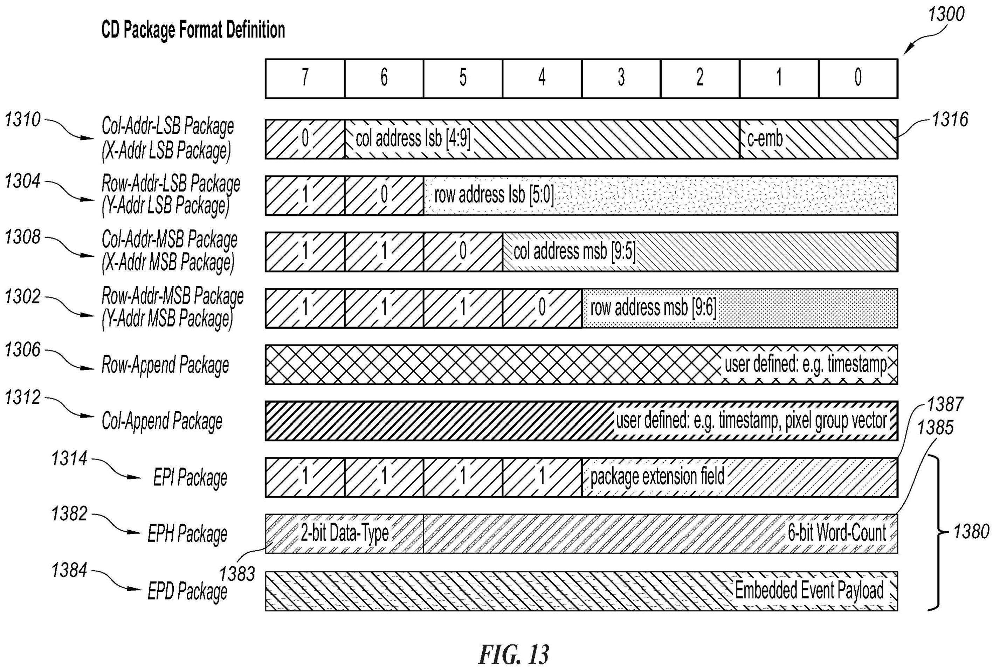

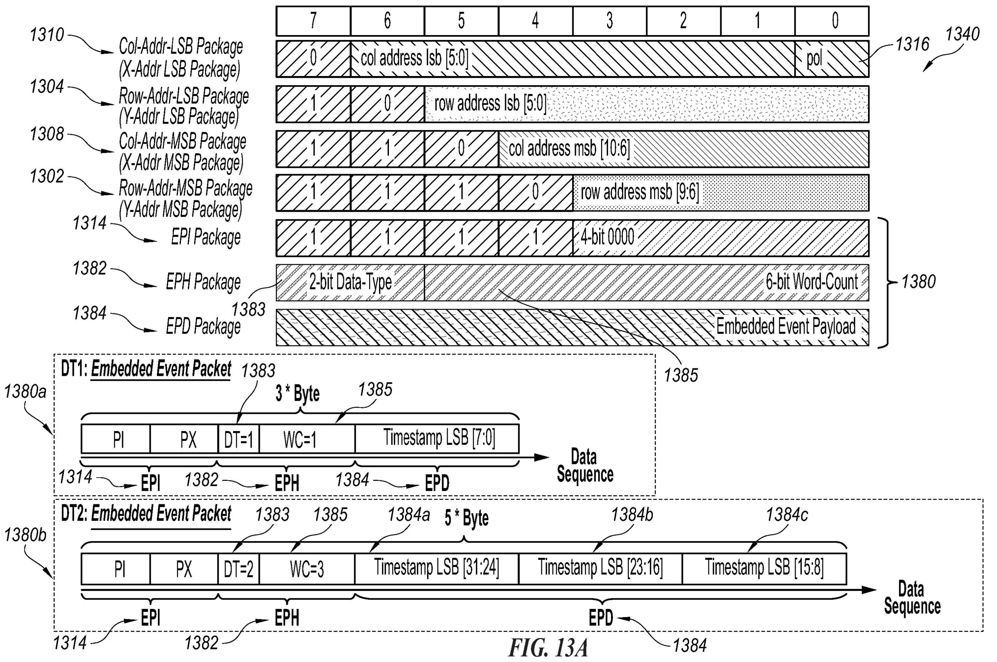

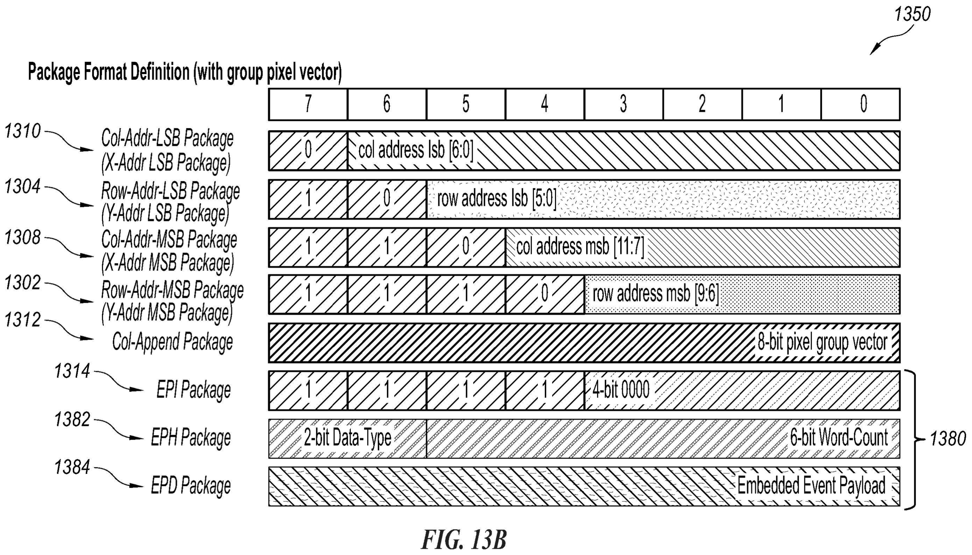

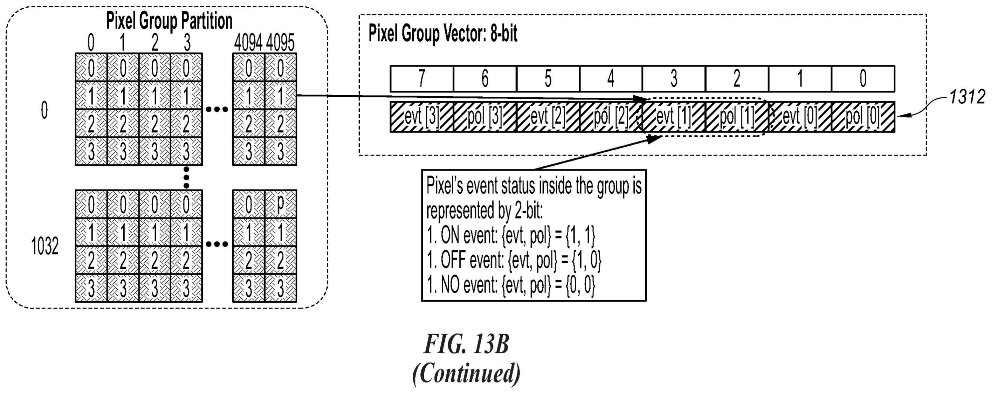

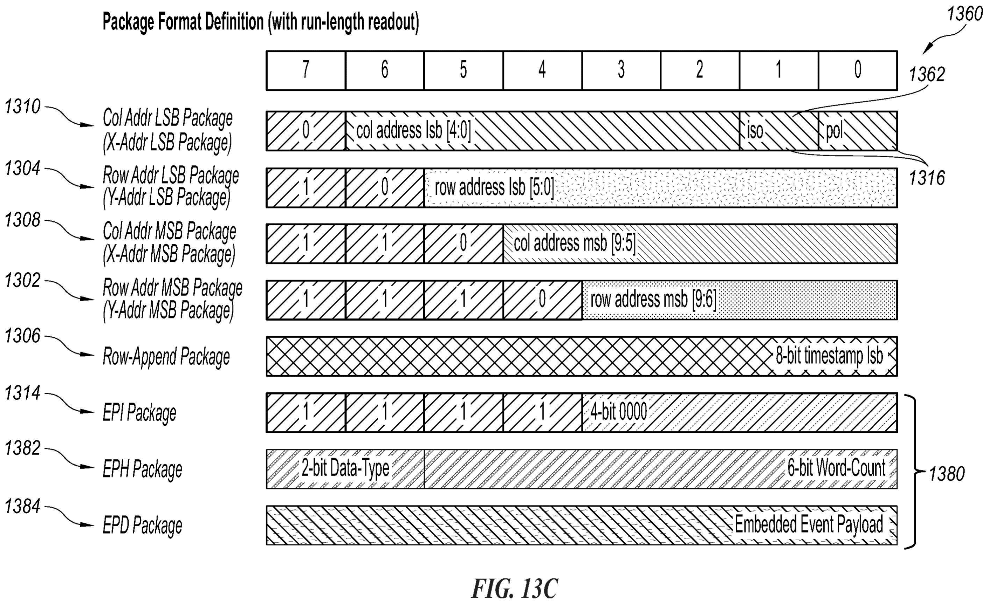

The data type field of embedded event packet header packages 282 may also be used to indicate that embedded event packet data packages 284 contain statistical information or time-slice order/scanning order identification. Additionally, or alternatively, embedded event packets 280 may also be used to insert General Purpose Input/Output (GPIO) information into the data stream. In some cases, this may be used for multi-camera synchronization, allowing multiple event-based vision sensors to coordinate their data streams. These and other example data types (and associated embedded event packets 280) are described in greater detail below with reference to **FIGs. 13-14F****.**

By providing a flexible mechanism for including additional information within the event data stream, the embedded event packets 280 may enhance the versatility and functionality of the encoding format. This approach may allow for adaptation to various application requirements and sensor configurations without necessitating changes to the core encoding structure. Stated another way, embedded event packets 280 may provide a flexible mechanism for including various types of additional information within the event data stream and/or may allow for the encoding format 200 of **FIG. 2** to be adapted to different application requirements or sensor configurations without altering the fundamental structure of the event data encoding.

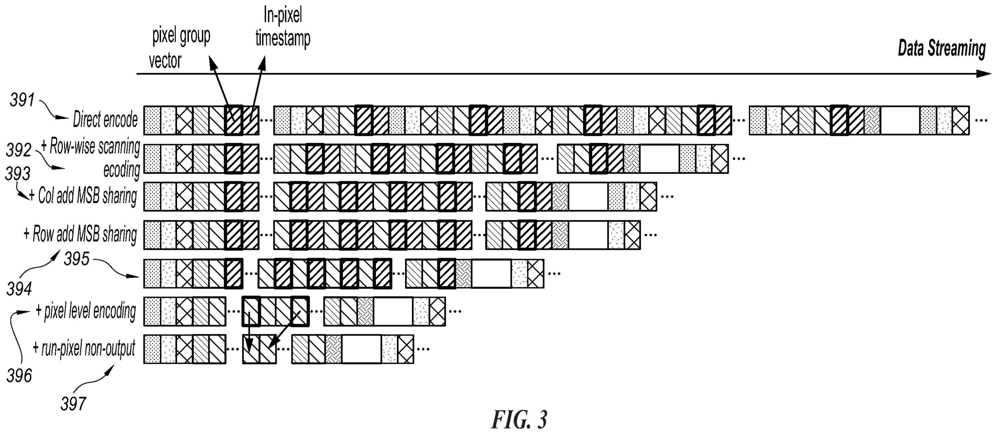

**FIG. 3** illustrates several packet sequences 391-397 that demonstrate compression efficiency achieved by various encoding techniques in accordance with various embodiments of the present technology. More specifically, **FIG. 3** provides a comparison of different encoding methods and their impact on reducing the number of packets transmitted.

The topmost packet sequence 391 in **FIG. 3** represents a direct encode approach, which may have the lowest packet efficiency. This approach may encode each event individually without sharing any address information between events.

The second packet sequence 392 in **FIG. 3** illustrates row-wise scanning encoding. This approach may reduce the number of packets by sharing row address MSB packages 202, row address LSB packages 204, and row-append packages 206 that include timestamp information for pixels across the same row of an event-based vision sensor pixel array. By sharing this information among multiple events in the same row, the total number of packages transmitted may be reduced compared to the direct encode approach (corresponding to the first packet sequence 391).

The third packet sequence 393 in **FIG. 3** demonstrates the addition of column address MSB package sharing to the row-wise scanning encoding (corresponding to the second packet sequence 392). This technique (corresponding to the third packet sequence 393) may further reduce the number of packets by sharing column address MSB packages 208 for all event-based vision sensor pixels within the same column MSB segment. This approach may allow for more efficient encoding of events that occur in the same column or nearby columns.

The fourth packet sequence 394 in **FIG. 3** shows implementation of row address MSB package sharing. This technique may reduce the number of packets by sharing row address MSB packages 202 for all event-based vision sensor pixels within the same row MSB segment. This approach may provide additional compression for events occurring in the same or nearby rows.

The fifth packet sequence 395 in **FIG. 3** illustrates implementation of pixel group vector encoding. In this approach, pixel group vector packages may be used to communicate event information for groups of pixels. In-pixel timestamp packages (e.g., implemented using column-append packages 212) may be skipped, and timestamp information may be shared among pixels within a group (e.g., using row-append packages 206). This technique may reduce the number of packets even further by encoding multiple events within a single package.

The sixth packet sequence 396 in **FIG. 3** demonstrates pixel-wise or pixel-level encoding. In this approach, event information may be communicated in each column address LSB package 210 without using pixel group vector encoding. This method may provide a balance between compression efficiency and individual pixel event representation.

The seventh packet sequence 397 in **FIG. 3** shows implementation of run-pixel encoding. This technique may further reduce the number of packages streamed by encoding only the first and last events of consecutive (or non-isolated) events (e.g., using one or more column embedded bits, such as one to communicate event polarity and one as an isolation flag to identify isolated versus run events, in column address LSB packages 210). By representing runs of events more efficiently, this approach may achieve significant compression for scenarios with spatially correlated events.

The progression of encoding techniques illustrated in **FIG. 3** demonstrates how various methods may be combined to achieve increasingly efficient compression of event data. Each technique may build upon the previous ones, potentially resulting in a reduction in the total number of packets required to represent the same event information. This compression may lead to reduced bandwidth requirements and improved transmission efficiency for event-based vision sensor data.

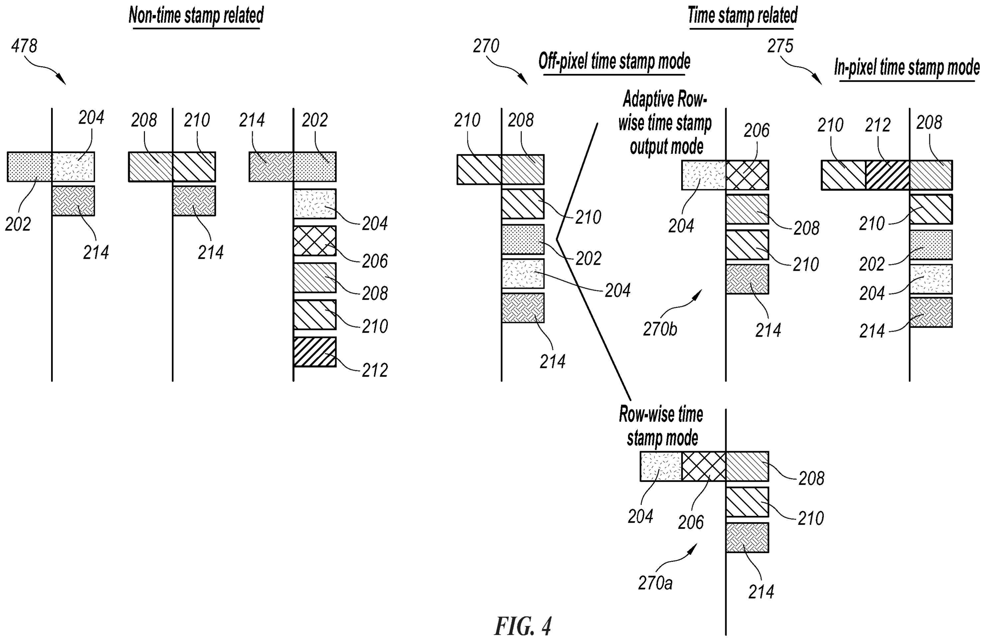

**FIG. 4** illustrates possible package orders for the encoding format 200 of **FIG. 2** in accordance with various embodiments of the present technology. **FIG. 4** also provides a summary of how different package sequences may be used in various timestamp modes and encoding scenarios. In some embodiments, the possible package orders illustrated in **FIG. 4** can be used by a decoder to assist with decoding an encoded data stream. For example, given a certain package type and operating mode, a decoder can update a candidate pool that reflects all possible package types that may immediately follow the given package type. The decoder can then parse through the candidate pool to identify the type of the immediately following package. This process (e.g., updating the candidate pool based on a current package type and parsing through the updated candidate pool to identify a type of the next received package) can be repeated, such as until the encoded data stream has been decoded.

**FIG. 4** illustrates three possible package sequence scenarios 478 when transmitting non-timestamp related packages. For example, when a row address MSB package 202 is streamed, the row address MSB package 202 may be followed by either a row address LSB package 204 or an embedded event packet identifier package 214 indicating a start of an embedded event packet 280 (not shown in **FIG. 4****).** As another example, when a column address MSB package 208 is streamed, the column address MSB package 208 may be followed by either a column address LSB package 210 or an embedded packet identifier package 214.

As discussed above, the embedded event packet identifier package 214 may appear at any point in the encoding format sequence to indicate a start of an embedded event packet 280. When an embedded event packet identifier package 214 is streamed, an embedded event packet data packet 284 (not shown in **FIG. 4****)** of an embedded event packet 280 corresponding to the embedded event packet identifier package 214 may be followed by various package types, including a row address MSB package 202, a row address LSB package 204, a row-append package 206, a column address MSB package 208, a column address LSB package 210, a column-append package 212, or another embedded event packet identifier package 214 to indicate a start of a next embedded event packet 280. This flexibility may allow for the insertion of additional information at any point in the data stream.

**FIG. 4** also illustrates how package sequences may differ based on the timestamp mode being used. As discussed above with reference to **FIG. 2F****,** in an off-pixel timestamp mode 270, where timestamp information is shared (e.g., by each row or by each EVS frame), a column address LSB package 210 may be followed by a column address MSB package 208, another column address LSB package 210, a row address MSB package 202, a row address LSB package 204, or an embedded packet identifier package 214.

In a frame-wise off-pixel timestamp mode 270a, a row address LSB package 204 may be followed by a row-append package 206 that includes timestamp information for the entire frame. After the row-append package 206, the sequence may continue with a column address MSB package 208, a column address LSB package 210, or an embedded packet identifier package 214.

In a row-wise off-pixel timestamp mode 270b, a row address LSB package 204 may be followed by a row-append package 206 containing timestamp information for that specific row. After the row-append package 206, the sequence may continue with a column address MSB package 208, a column address LSB package 210, or an embedded packet identifier package 214.

In an in-pixel timestamp mode 275, where timestamp information is streamed for each pixel that detects an event, a column address LSB package 210 may be followed by a column-append package 212 that includes timestamp information for that specific pixel. After the column-append package 212, the sequence may continue with a column address MSB package 208, another column address LSB package 210, a row address MSB package 202, a row address LSB package 204, or an embedded packet identifier package 214.

These various package sequences and timestamp modes may provide flexibility in encoding event data from event-based vision sensors, allowing for efficient data transmission while maintaining temporal and spatial information about detected events.

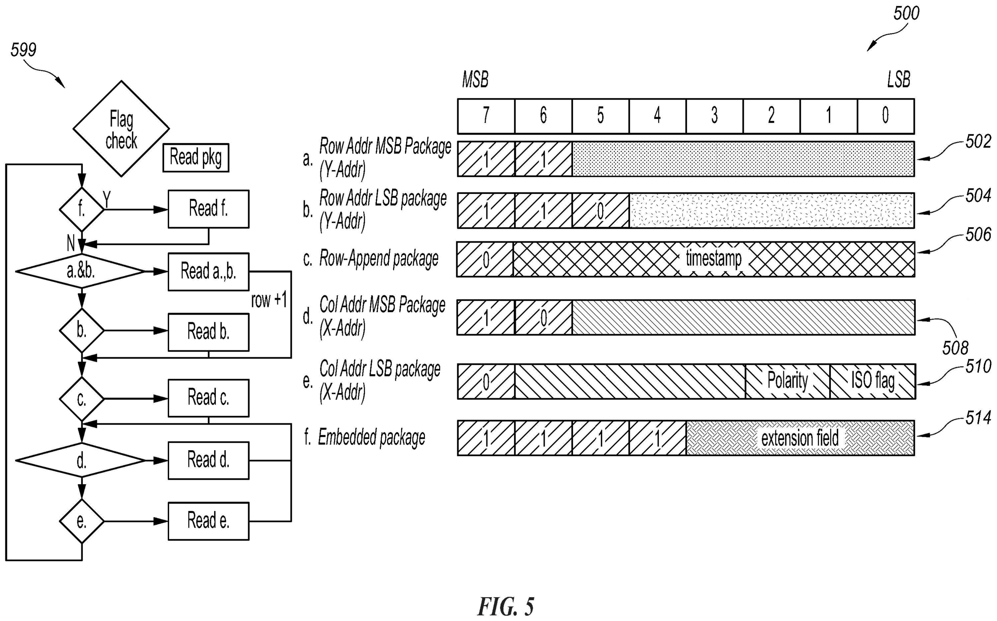

**FIG. 5** illustrates another encoding format 500 for pixel-wise encoding in event-based vision sensors, the encoding format 500 configured in accordance with various embodiments of the present technology. As shown, the encoding format 500 utilizes different flag identifiers (IDs) for various package types compared to the encoding format 200 described above with reference to **FIGs. 2-4****.**

For example, a row address MSB package 502 may use a flag ID of '11' instead of'0110' (as is used in the encoding format 200). This modification may allow for two additional bits in the row address MSB package 502 to be used for row address MSB information. Similarly, a row address LSB package 504 may use a flag ID of '110' instead of '00' (as is used in the encoding format 200). These changes may enable the encoding of 11 bits of row address information in total, potentially allowing for addressing of up to 2048 rows.

The encoding format 500 of **FIG. 5** may also modify other package flag IDs. For example, a row-append package 506 may use a flag ID of '0' instead of '1' (as is optionally used in the encoding format 200), a column address MSB package 508 may use '10' instead of '010' (as is used in the encoding format 200), a column address LSB package 510 may use '0' instead of '1' (as is used in the encoding format 200), and an embedded event packet identifier package 514 may use '1111' instead of '0111' (as is used in the encoding format 200).

In some cases, this alternative flag ID scheme may introduce potential ambiguity between the row address MSB package 504 and the embedded packet identifier package 514, as both may start with '11'. To address this, the encoding format may be limited to addressing 1536 total rows (e.g., row 0 through row 1535), which ensures the highest value for bits 7:4 of the row address MSB package 502 is '1110' and never reaches '1111', thereby allowing a decoder to distinguish it from the embedded packet identifier package 514. In other words, the illustrated encoding format 500 may support pixel arrays of up to 1536 x 2048 pixels, using 11 row address bits and 11 column address bits (as opposed to 10 row address bits and 10 column address bits used in the encoding format 200 described above with reference to **FIGs. 2-4****).**

As shown, the encoding format illustrated in **FIG. 5** may insert timestamps on a frame or row basis using the row-append package 506. This approach may provide efficient temporal information encoding while maintaining compatibility with the modified flag ID scheme.

**FIG. 5** also includes a flow diagram 599 illustrating a decoding process for the encoding format 500. The decoding process may begin by checking for the embedded packet identifier package flag ('1111'). If present, the decoder may read the package as an embedded packet identifier package 514. If not present, the decoder may attempt to determine whether a row address MSB package 502 and a row address LSB package 504 have been consecutively transmitted together. This determination may be made by examining two consecutive packages and looking for a flag of '11' in the first package followed by a flag of '110' in the second package. If this pattern is detected, the decoder may interpret the first package as a row address MSB package 502 and the second as a row address LSB package 504. If this pattern is not detected, the decoder may check whether a row address LSB package 504 was transmitted separately from a row address MSB package 502 and, if so, read it accordingly. The decoder may then check for a row-append package 506 and, if present, read it accordingly. The decoder may proceed with sequentially checking for a column address MSB package 508 and a column address LSB package 510. In the event that either a column address MSB package 508 or a column address LSB package 510, the decoder can read out the identified package and return to sequentially checking for a column address MSB package 508 and a column address LSB package 510. In the event that neither a column address MSB package 508 nor a column address LSB package 510 are present, the decoder can return to checking for an embedded packet identifier package 514.

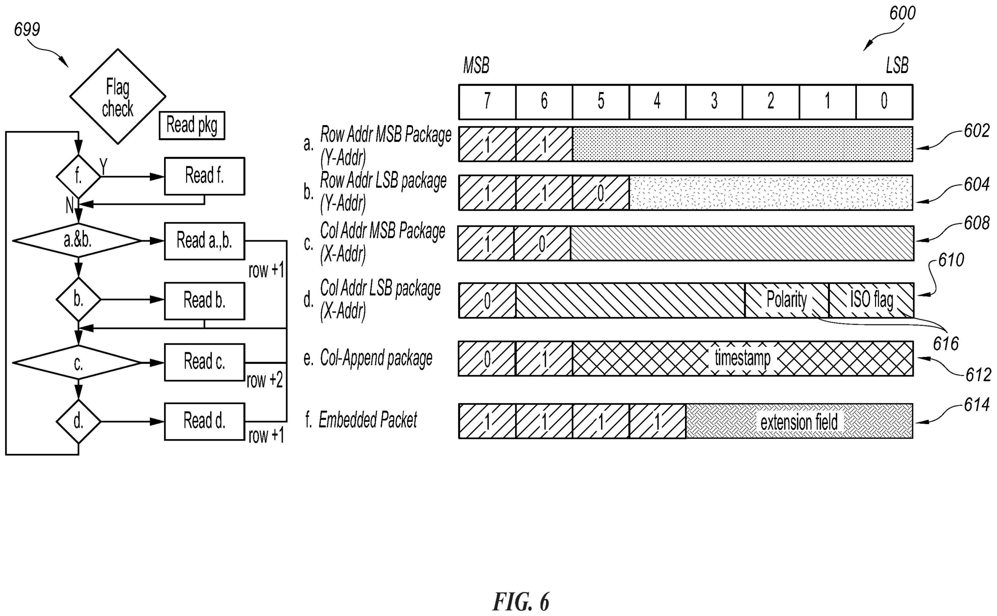

**FIG. 6** depicts another encoding format 600 for pixel-wise encoding in accordance with various embodiments of the present technology. This encoding format 600 may focus on inserting timestamps for each individual event. More specifically, a timestamp for each event may be encoded in a column-append package 612 that follows each column address LSB package 610. This approach may provide precise temporal information for every detected event, potentially allowing for more accurate reconstruction of event sequences or improved temporal analysis in applications requiring high temporal resolution.

**FIG. 6** also includes a flow diagram 699 illustrating a decoding process for the encoding format 600. As shown, the flow diagram is relatively similar to the flow diagram 599 illustrated in and described above with reference to **FIG. 5****.**

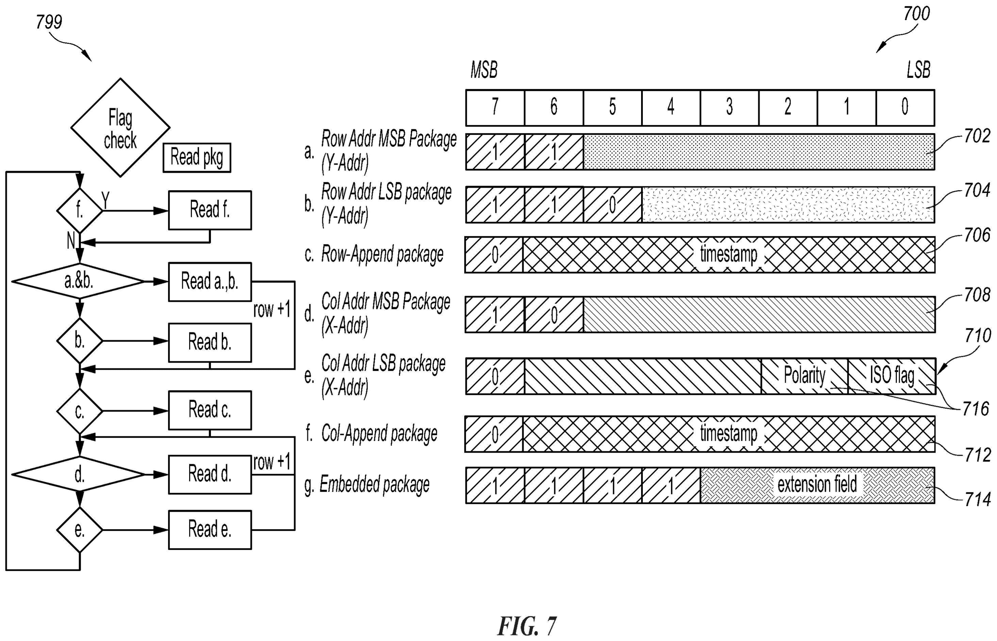

**FIG. 7** illustrates another encoding format 700 for pixel-wise encoding in accordance with various embodiments of the present technology. The encoding format 700 may implement both (a) row-wise or frame-wise timestamping and (b) column-wise timestamping simultaneously. In some cases, the encoding format 700 may use row-append packages 706 to encode row-wise or frame-wise timestamp information. Concurrently, column-append packages 712 may be used to encode column-wise timestamp information. This dual approach to timestamp encoding may provide flexibility in temporal data representation, potentially allowing for efficient encoding of both global (row or frame) and local (column or pixel) temporal information.

**FIG. 7** also includes a flow diagram 799 illustrating a decoding process for the encoding format 700. As shown, the flow diagram is relatively similar to the flow diagrams 599 and 699 illustrated in and described above with reference to **FIGs. 5** and **6****,** respectively.

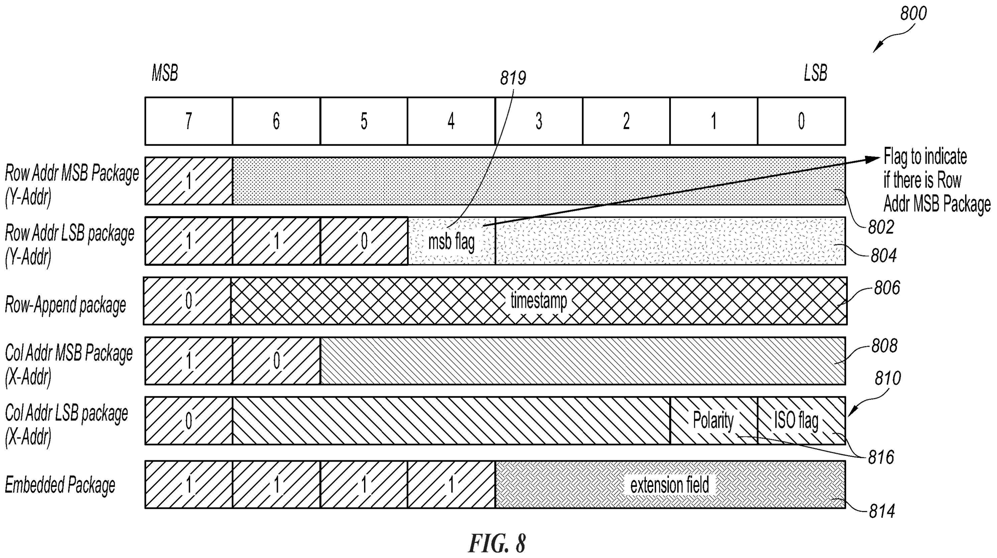

**FIG. 8** illustrates another encoding format 800 for pixel-wise encoding in accordance with various embodiments of the present technology. The encoding format 800 may introduce a modified flag scheme for row address packages. More specifically, the encoding format 800 may implement an MSB flag bit 819 in row address LSB packages 804. The MSB flag bit 819 may be used to indicate whether the immediately previous package is a row address MSB package 802. For example, when a row address LSB package 804 is transmitted with bits 7:4 as '1100', respectively, this may indicate to a decoder that the previously received package is not a row address MSB package 802. Conversely, when a row address LSB package 804 is transmitted with bits 7:4 as '1101', this may indicate that the previously received package is a row address MSB package 802.

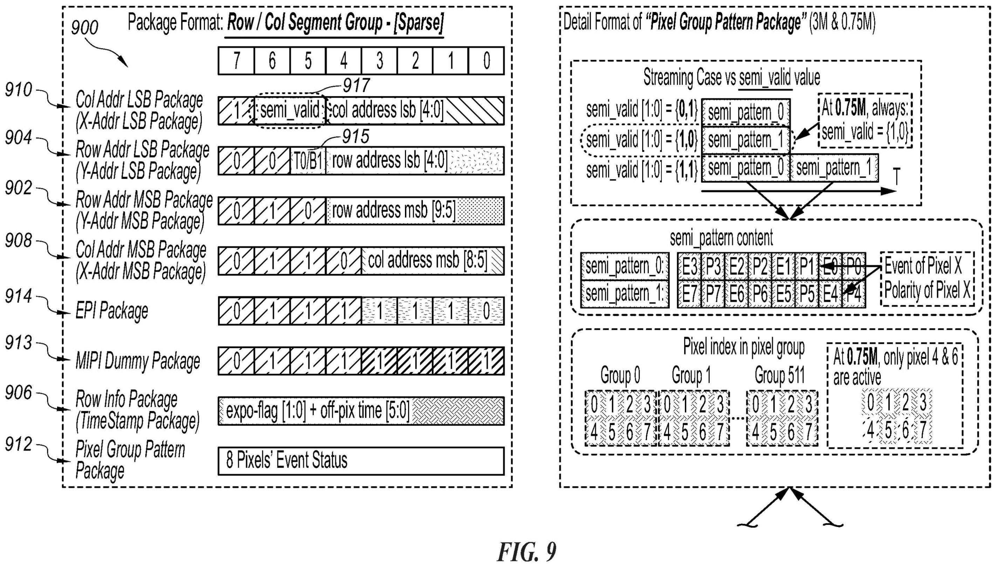

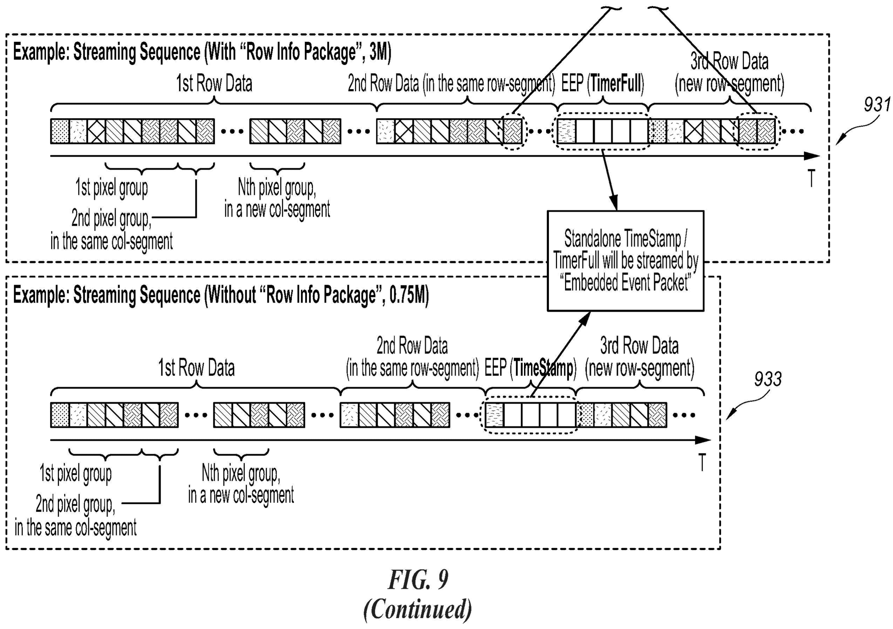

**FIG. 9** illustrates an alternative encoding format 900 for pixel group vector encoding in accordance with various embodiments of the present technology. This encoding format 900 may be particularly suitable for sparse event scenarios, where relatively few pixels in a group detect events.

In some implementations, the encoding format 900 of **FIG. 9** may repurpose the column embed bits in the column address LSB package 910 as semi-valid bits 917. For example, bits 6:5 of the column address LSB package 910 may be used as semi-valid bits 917 to indicate which rows within a pixel group have detected events.

The encoding format 900 may organize pixels into groups. One such 2x4 group of pixels is labeled "Group 0" in **FIG. 9****.** In some cases, two bytes may be required to encode events for every pixel in this group. However, the use of semi-valid bits 917 may allow for more efficient encoding when only some pixels in the group detect events.

For example, if no events are detected by the top four pixels of the group (pixels 0-3), encoding for those pixels may be skipped. The semi-valid bits 917 in the column address LSB package 910 may be used to indicate this skipped encoding. In some implementations, if the column address LSB package 910 is transmitted with semi-valid bits set to '10', this may indicate to a decoder that the top row of pixels in the group did not detect events. Consequently, no package (e.g., no column-append package 912) may be sent for the top pixels, and only a package (e.g., a column-append package 912) for the bottom row of pixels in the group may be transmitted.

Similarly, if the column address LSB package 910 is transmitted with semi-valid bits 917 set to '01', this may indicate to the decoder that the bottom row of pixels (pixels 4-7) in the group did not detect events. In this case, no package (e.g., no column-append package 912) may be sent for the bottom pixels, and only a package (e.g., a column-append package 912) for the top row of pixels in the group may be transmitted.

In some cases, if the column address LSB package 910 is transmitted with semi-valid bits 917 set to '11', this may indicate to the decoder that events were detected in both rows of the pixel group. Consequently, packages (e.g., column-append packages 912) may be sent for both rows. Optionally, if the column address LSB package 910 is transmitted with semi-valid bits 917 set to '00', this may indicate to the decoder that no events were detected in either row of the pixel group, and both packages (e.g., both column-append packages 912) may be skipped for both rows of the group.

**FIG. 9** also illustrates the use of a top/bottom bit 915 in the row address LSB package 904. In some implementations, this bit 915 may be used when the top half of a pixel array or pixel array segment is scanned simultaneously (or in parallel) with the bottom half of the pixel array or pixel array segment. The top/bottom bit 915 in the row address LSB package 904 may indicate to the decoder whether the pixel row is located in the top half of the pixel array/pixel array segment or the bottom half. For example, a top/bottom bit value of '0' may indicate that the pixel row is in the top half of the pixel array/pixel array segment, while a value of '1' may indicate that the pixel row is in the bottom half.

The encoding format 900 can utilize embedded event packets to communicate timestamp and/or timer information. As shown in **FIG. 9****,** for example, the extension field (bits [3:0]) of the embedded event packet identifier package 914 can be used to communicate timestamp information and/or to indicate when a timer is full/exhausted. In the specific example 931 shown in **FIG. 9****,** row-append packages 906 can be used to communicate row information (e.g., an expo flag to indicate whether events occurred within or outside of a CIS exposure period such as of CIS pixels of a hybrid image sensor that includes both CIS and EVS functionality in one pixel array, and/or off-pixel time information) that are shared by pixels of a same pixel group, and an embedded event packet can be used to communicate timer information, such as using bits of the extension field of a corresponding embedded event packet identifier package 914. In the other example 932 shown in **FIG. 9****,** embedded event packets (as opposed to row-append packages 906) are used to communicate timestamp information, such as using bits of the extension field of a corresponding embedded event packet identifier package 914. As shown in **FIG. 9****,** the encoding format 900 also defines a MIPI dummy package 913 that, for example, can be similar to the embedded event packet identified package 914 with the exception of bit 0.

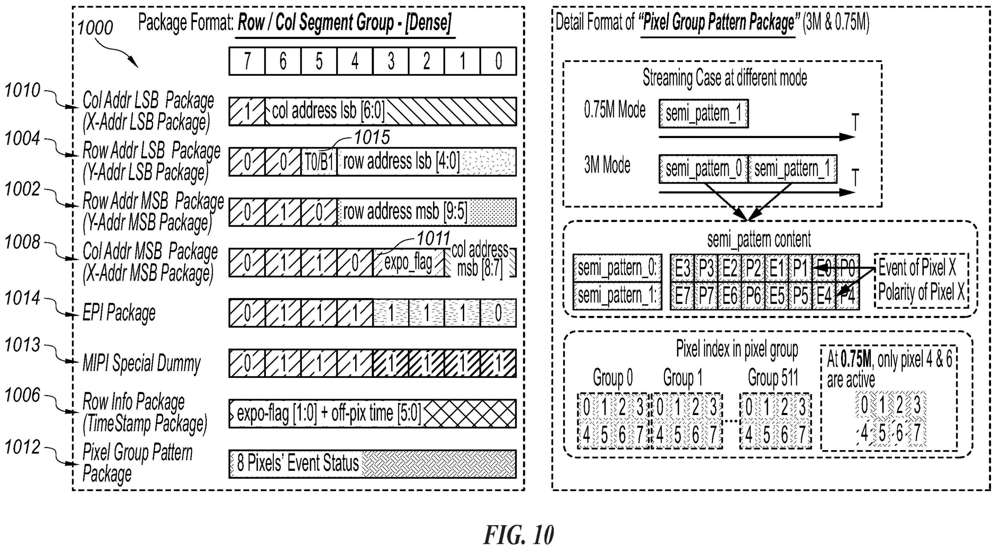

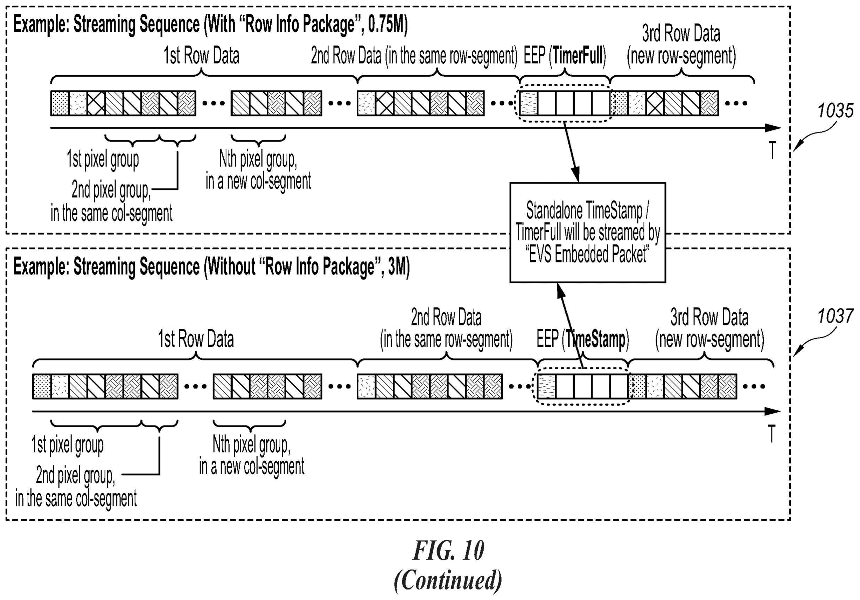

**FIG. 10** depicts another encoding format 1000 for pixel group vector encoding in accordance with various embodiments of the present technology. The encoding format 1000 may be particularly suitable for dense event scenarios, where a large number of pixels in a group detect events.

In some implementations, the encoding format 1000 of **FIG. 10** may modify the bit allocation in the column address LSB package 1010 to accommodate more row address information. For example, the semi-valid bits 917 used in the sparse event scenario (as described in **FIG. 9****)** may be eliminated from the column address LSB package 1010 of the encoding format 1000. Instead, 7 bits of the column address LSB package 1010 may be used to communicate address information, as opposed to the 5 bits used in the sparse event scenario.

The use of 7 bits for address information in the column address LSB package 1010 may allow for larger event groups. In some cases, this may enable the communication of more events per segment, potentially reducing the overall number of packets that need to be transmitted. This approach may be more efficient in scenarios where a high density of events is expected.

**FIG. 10** also illustrates the inclusion of an expo flag bit 1011 in the column address MSB package 1008. In some implementations, this expo flag bit 1011 may be used to indicate whether events occurred within or outside of a CIS exposure period, such as of CIS pixels of a hybrid image sensor that includes both CIS and EVS functionality in one pixel array. This approach may differ (a) from the embodiment described above with reference to **FIGs. 2-4** in which the expo flag may be communicated in column embedded bits 216 of the column address LSB package 210 and/or (b) from the embodiment described above with reference to **FIG. 9** in which the expo flag may be communicated in a row-append package 906.

The encoding formats 900 and 1000 illustrated in **FIGs. 9** and **10****,** respectively, demonstrate how the event-based vision sensor encoding scheme may adapt to different event densities. By utilizing different bit allocations and package structures based on the expected event density, these encoding formats 900 and 1000 may optimize data transmission efficiency for various scenarios encountered in event-based vision sensing applications.

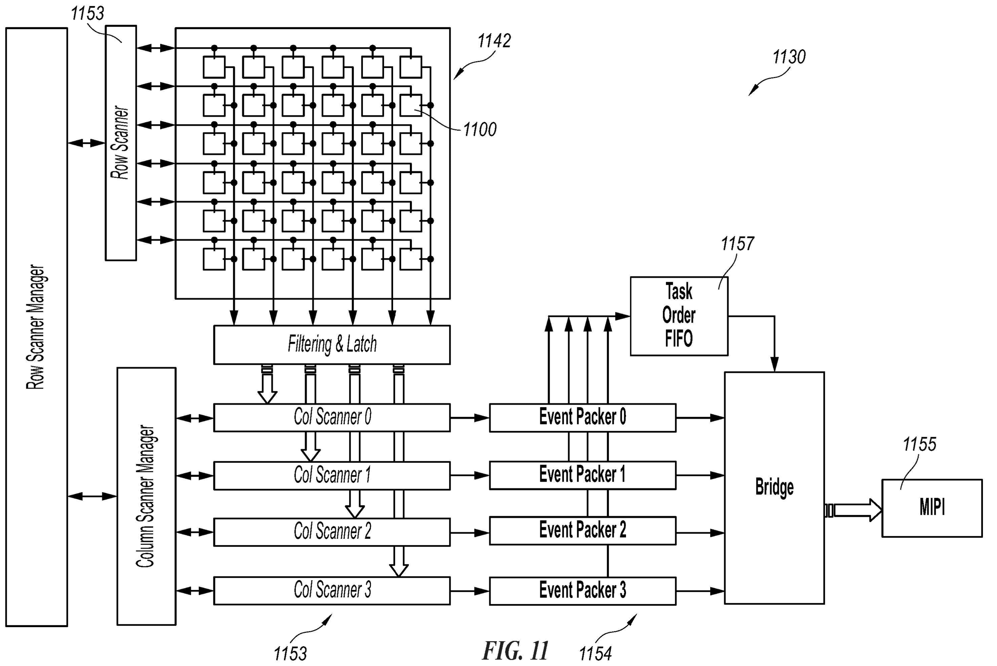

**FIG. 11** illustrates a block diagram of an event vision sensor system 1130 configured in accordance with various embodiments of the present technology. The system 1130 may implement any one or more of the encoding formats described above or any one or more of the encoding formats described below.

The event vision sensor system 1130 may include an event-based vision sensor (EVS) pixel array 1142. The EVS pixel array 1142 may contain a plurality of pixels 1100 configured to asynchronously detect changes in light intensity and generate corresponding event signals.

Connected to the EVS pixel array 1142, the system 1130 may include a scanner 1153. In some cases, the scanner 1153 may be implemented as a full scanner capable of performing row and column scanning in parallel. This parallel scanning capability may allow for efficient readout of events from the EVS pixel array 1142.

The scanner 1153 may be coupled to event packers 1154. The event packers 1154 may receive event information from the scanner 1153, including the locations of fired events within the EVS pixel array 1142. In some implementations, the event packers 1154 may perform the encoding operations described in previous sections and/or described in greater detail below, converting the event data into a structured package format.

Following the event packers 1154, the system may include a sequencer 1157. The sequencer 1157 may arrange the encoded packages from the event packers 1154 into the appropriate order for transmission. This sequencing operation may ensure that the packages are organized according to the encoding format specifications.

The final component in the illustrated data path may be a MIPI (Mobile Industry Processor Interface) transmitter 1155. The MIPI transmitter 1155 may receive the sequenced packages and transmit them off-chip, potentially to other processing components or systems.

This hardware architecture may provide an efficient implementation of the encoding scheme, allowing for rapid processing and transmission of event data from the EVS pixel array. The parallel scanning capabilities, combined with dedicated encoding and sequencing components, may enable high-speed, low-latency operation of the event vision sensor system 1130.

In some cases, the hardware components described may be integrated into a single chip or module, potentially reducing system complexity and power consumption. The modular nature of the architecture may also allow for flexibility in system design, with the possibility of scaling or modifying individual components to meet specific application requirements.

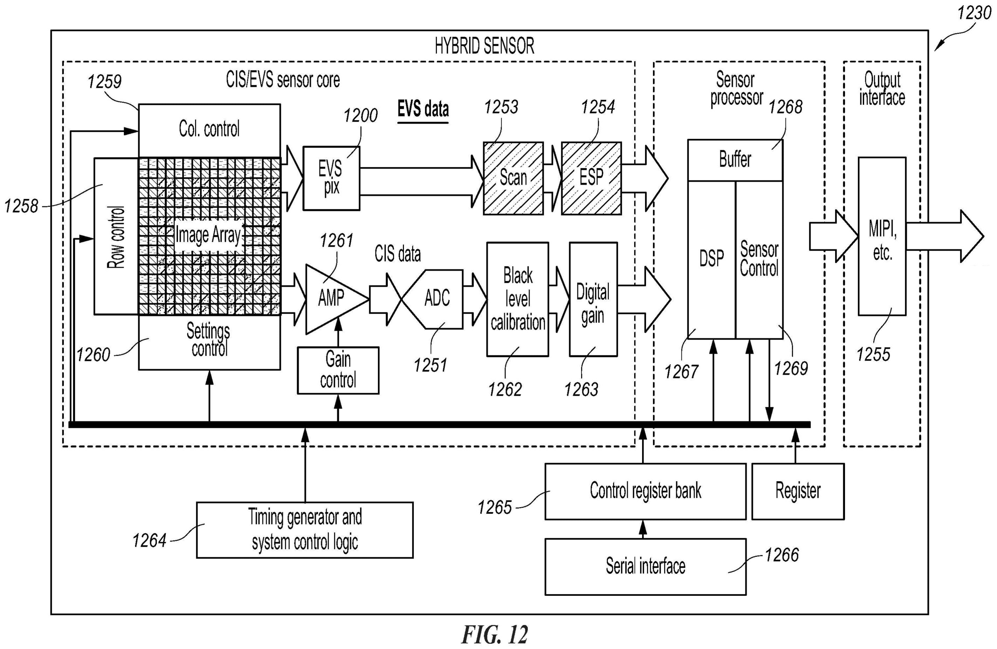

**FIG. 12** illustrates a block diagram of a hybrid image sensor system 1230 configured in accordance with various embodiments of the present technology. The hybrid image sensor system 1230 may integrate both event-based vision sensor (EVS) and CMOS image sensor (CIS) data paths, enabling efficient processing and transmission of hybrid sensor data.

The hybrid image sensor system 1230 may include a CIS/EVS sensor core containing an image array with row control and column control circuitry 1258 and 1259, respectively, for managing pixel readout. A settings control module 1260 may interface with the row and column control circuitry 1258 and 1259. The sensor core may include two parallel data paths: an EVS data path and a CIS data path.

The EVS data path may include EVS pixel circuitry 1200 connected to scan and event signal processor (ESP) blocks 1253 and 1254, respectively. The scan block 1253 may perform row and/or column scanning of the EVS pixel circuitry 1200, while the ESP block 1254 may process the scanned event data. In some cases, the ESP block 1254 may perform encoding operations on the event data using one or more of the encoding formats described herein.

The CIS data path may contain an amplifier (AMP) 1261, analog-to-digital converter (ADC) 1251, black level calibration 1262, and digital gain processing blocks 1263. The AMP 1261 may amplify analog signals from the CIS pixels, while the ADC 1251 may convert the amplified analog signals to digital signals. The black level calibration 1262 block may adjust baseline signal levels, and the digital gain block 1263 may apply additional amplification to the digital signals.

A timing generator and system control logic block 1264 may provide timing and control signals to the sensor core components. A control register bank 1265 may interface with the timing generator through a serial interface 1266 and may connect to a digital signal processor (DSP) 1267 in the sensor processor section.

The sensor processor section may include a buffer 1268 and sensor control circuitry 1269 connected to the DSP 1267. The buffer 1268 may temporarily store data from both the EVS and CIS paths, while the DSP 1267 may perform additional processing on the buffered data. The sensor control circuitry 1269 may manage various aspects of sensor operation, potentially including configuration of sensor settings and operational modes.

The output interface section may contain MIPI (Mobile Industry Processor Interface) interface circuitry 1255 for transmitting processed sensor data. The MIPI interface circuitry 1255 may enable high-speed data transmission to external devices or processors.

In some cases, the hybrid image sensor system 1230 may allow for flexible operation in different modes, such as CIS-only mode, EVS-only mode, or a hybrid CIS/EVS mode. The system architecture may enable efficient processing of both CIS and EVS data, with dedicated processing paths for each type of sensor data before combining at the output interface.

The integration of both CIS and EVS capabilities within a single system 1230 may provide advantages in various applications. For example, the system 1230 may capture high-resolution image data through the CIS path while simultaneously detecting rapid changes in the scene through the EVS path. This combination may enable enhanced performance in scenarios such as low-light imaging, high-speed motion capture, or dynamic range optimization.

The hybrid image sensor system 1230 illustrated in **FIG. 12** may provide a flexible and efficient architecture for capturing and processing both conventional image data and event-based vision data. By integrating these capabilities, the system 1230 may offer improved performance and versatility compared to traditional image sensors or standalone event-based vision sensors.

**FIG. 13** illustrates another encoding format 1300 for transmitting event data from an event-based vision sensor, the encoding format 1300 configured in accordance with various embodiments of the present technology. Similar to the encoding formats described above (e.g., similar to the encoding format 200 described above with reference to **FIGs. 2-4****),** the encoding format 1300 of **FIG. 13** defines four coordinate packages (also referred to herein as Address Event Representation (AER) Packages): a row address MSB package 1302, a row address LSB package 1304, a column address MSB package 1308, and a column address LSB package 1310. The coordinate packages can be used to encode events (also referred to herein as "contrast detection" events) generated by event sensor pixels, and more specifically (i) an address (x, y coordinate location) of where in an event sensor pixel array each event is detected and (ii) a polarity (e.g., up or down) of the event.

Each coordinate package includes (a) a different prefix (or flag) and (b) several bits of content. Each prefix is used to identify a corresponding package type, and the content bits are used to embed address and/or polarity information corresponding to events. For example, the row address MSB package 1302 includes a four-bit prefix (shown as '1110') and four content bits [9:6] for specifying four most significant row address bits for encoded events. The row address LSB package 1304 includes a two-bit prefix (shown as '10') and six content bits [5:0] for specifying six least significant row address bits for encoded events. Thus, the four content bits [9:6] of the row address MSB package 1302 and the six content bits [5:0] of the row address LSB package 1304 can together specify a row address corresponding to encoded events. Similarly, the column address MSB package 1308 includes a three-bit prefix (shown as '110') and five content bits [9:5] for specifying five most significant column address bits for encoded events. The column address LSB package 1310 includes a one-bit prefix (shown as '0') and seven content bits, five of which can be used to specify five least significant column address bits for encoded events and another two of which can be column embedded bits 1316 that can be used to communicate various information (e.g., two other least significant column address bits, event polarity, isolation flags, etc.), as described in greater detail below. Thus, the five content bits [9:5] of the column address MSB package 1308 and the five-to-seven content bits [5:0] of the column address LSB package 1304 can together specify a column address corresponding to encoded events.

During the encoding process, packages that contain higher (or most significant) address bits (e.g., the row address MSB package 1302 and/or the column address MSB package 1310) can be encoded prior to packages that contain lower (or least significant) address bits such that (i) the packages with higher address bits may be encoded a fewer number of times and (ii) packages with lower address bits can share packages with higher address bits, consistent with the description of the present technology provided above.

As shown, the encoding format 1300 can further define row-append packages 1306 and/or column-append packages 1312. The row-append packages 1306 and the column-append packages 1312 can be generally similar to the row-append packages 206 and the column-append packages 212, respectively, described above with reference to **FIGs. 2-4****.** Thus, a detailed description of the row-append packages 1306 and the column-append packages 1312 is largely omitted here for the sake of brevity in light of the detailed description provided above with reference to **FIGs. 2-4****.** As shown, the row-append packages 1306 and the column-append packages 1312 do not include a prefix and therefore, when used, can be placed in a fixed position in an encoded data stream (e.g., immediately following a row address LSB package 1304 for row-append packages 1306, immediately following a column address LSB package 1310 for column-append packages 1312) to assist a decoder with identifying and decoding the row-append packages 1306 and the column-append packages 1312. As discussed in greater detail above and below, the row-append packages 1306 and/or the column-append packages 1312 can be user defined, such as to communicate timestamp information associated with events, pixel group vectors, and/or other information.

The encoding format 1300 further defines embedded event packets 1380. Each embedded event packet 1380 is a recognizable data segment formed from several consecutive embedded event packages: (i) an embedded event packet identifier (EPI) package 1314, (ii) an embedded event packet header (EPH) package 1382, and (iii) one or more embedded event packet data (EPD) packages 1384. In some embodiments, embedded event packets 1380 can be used to encode events and/or other information, such as events or other information that is less frequently generated and/or transmitted within an encoded data stream. In other words, embedded event packets 1380 can provide greater flexibility to the encoding format 1300 for encoding and representing all various events and/or information.

As shown, the embedded event packet identifier package 1314 includes (i) a four-bit prefix (or flag) that is (shown as '1111'), such as to signify to a decoder a start of an embedded event packet 1380 and (ii) a four-bit package extension field 1387. In other embodiments, the prefix for the embedded event packet identifier package 1314 can differ from that shown in **FIG. 13****.** Additionally, or alternatively, the prefix for the embedded event packet identifier package 1314 can be customizable. In some embodiments, the package extension field 1387 can be unused. Alternatively, as described in greater detail below, the package extension field 1387 can be used (a) to extend the bit-width of data type information and/or word count information at least partially communicated using the embedded packet header package 1382, and/or (b) further design other packages (e.g., a row address extension package, a column address extension package) based on the '1111' prefix.

The embedded event packet header package 1382 can include (i) a two-bit data type (DT) field 1383 and (ii) a six-bit word count (WC) field 1385. The two-bit data type field 1383 can be used to specify a content type for information included in a payload (e.g., the embedded event packet data package(s) 1384) of the embedded event packet 1380. The word count field 1385 can be used to specify a number of embedded event packet data packages 1384 (or bytes) included in the embedded event packet 1380. In other words, the word count field 1385 can be used to specify a payload size of the embedded event packet 1380.

The embedded event packet data package(s) 1384 can contain the actual data payload of the embedded event packet 1380. Although any number of embedded event packet data packages 1384 can be used in a single embedded event packet 1380, the data/information included in the embedded event packet data packages 1384 can be limited to data/information of a single type and/or to type(s) specified in the data type field 1383 of a corresponding embedded event packet header package 1382.

**FIG. 13A** illustrates an encoding methodology 1340 for the encoding format 1300 of **FIG. 13** in accordance with various embodiments of the present technology. In the illustrated embodiment, one of the column embedded bits 1316 (e.g., bit 1) of the column address LSB package 1310 can be used as column address bit, thereby increasing addressable resolution to 1280 x 720. The other of the column embedded bits 1316 of the column address LSB package 1310 can be used to convey polarity of events encoded and streamed using the encoding format 1300. For example, a value of '0' for the column embedded bit 1316 designated to represent event polarity can indicate a negative event, and a value of '1' for the column embedded bit 1316 designated to represent event polarity can indicate a positive event, or *vice versa.* As discussed above, this approach may eliminate the need for separate packages to communicate event polarity, potentially reducing the overall data overhead.

In some embodiments, timestamp information can be encoded and transmitted using embedded event packets 1380. **FIG. 13A** illustrates two specific example embedded event packets 1380a and 1380b that may be used to transmit timestamp information in an encoded data stream using the methodology 1340. In the embedded event packet 1380a, changes in least significant bits (e.g., bits [7:0]) of event timestamps can be encoded and transmitted using (1) an embedded event packet identifier package 1314 comprising (i) the package identifier (PI) or flag '1111' and (ii) an extension field (PX); (2) an embedded event packet header package 1382 having a data type field 1383 specifying a data type of 1 (DT=1) to indicate LSB timestamp information is included in the payload of the embedded event packet 1380a; and (3) an embedded event packet data package 1384. In this example, a word count field 1385 of the embedded event packet header package 1382 is set to 1 (WC=1), indicating that a single embedded event packet data package 1384 containing LSB timestamp information is included in the embedded event packet 1380a.

In the embedded event packet 1380b, changes in most significant bits (e.g., bits [31:8]) of event timestamps can be encoded and transmitted using (1) an embedded event packet identifier package 1314 comprising (i) the package identifier (PI) or flag '1111' and (ii) an extension field (PX); (2) an embedded event packet header package 1382 having a data type field 1383 specifying a data type of 2 (DT=2) to indicate MSB timestamp information is included in the payload of the embedded event packet 1380b; and (3) one or more embedded event packet data packages 1384. In this example, a word count field 1385 of the embedded event packet header package 1382 is set to 3 (WC=3), indicating that three embedded event packet data packages 1384 (identified individually in **FIG. 13A** as event packet data packages 1384a-1384c) containing MSB timestamp information is included in the embedded event packet 1380b.

In some embodiments, the row-append packages 1306 and/or the column-append packages 1312 are not used and/or are not used to encode and transmit timestamp information. In other embodiments, row-append packages 1306 and/or column-append packages 1312 can be used in addition to or in lieu of embedded event packets 1380 to encode and transmit timecode information. As a specific example, column-append packages 1312 can (e.g., in lieu of the embedded event packets 1380a described above) be used to encode and transmit changes in least significant bits (e.g., bits [7:0]) of event timestamps.

**FIG. 13B** illustrates a group-based encoding methodology 1350 for the encoding format 1300 of **FIG. 13** in accordance with various embodiments of the present technology. In the illustrated embodiment, both of the column embedded bits 1316 (e.g., bits 0 and 1) of the column address LSB package 1310 can be used as column address bits, thereby increasing addressable resolution to 4096 x 4096. In this example, the pixel array can be partitioned into 4096 x 1024 pixel groups, with each pixel group including four pixels arranged in four rows and one column. Each pixel group can be scanned, and events detected by the pixels of the pixel group can be encoded together in a column-append package 1312. For example, in the example illustrated in **FIG. 13B****,** bits [1:0] of a column-append package 1312 can correspond to a first pixel of a pixel group, bits [3:2] of the column-append package 1312 can correspond to a second pixel of the pixel group, bits [5:4] of the column-append package 1312 can correspond to a third pixel of the pixel group, and bits [7:6] of the column-append package 1312 can correspond to a fourth pixel of the pixel group. Continuing with this example, bits 7, 5, 3, and 1 of the column-append package 1312 can each indicate whether a corresponding one of the four pixels in the pixel group detected an event (e.g., a value of '0' can indicate that no event was detected by the corresponding pixel, a value of '1' can indicate that an event was detected by the corresponding pixel), and bits 6, 4, 2, and 0 of the column-append package 1312 can each indicate a polarity of the corresponding event detected by the corresponding pixel. Thus, events can be encoded in the column-append package 1312 using pairs of bits, such as with {1,1} indicating a corresponding pixel detected an event having a positive polarity, {1,0} indicating a corresponding pixel detected an event having a negative polarity, and {0,0} indicating a corresponding pixel did not detect an event. Similar to the methodology 1340 described above with reference to **FIG. 13A****,** embedded event packets 1380 can be used to encode and transmit timestamp information for the events under the methodology 1350 illustrated in **FIG. 13B****.**

**FIG. 13C** illustrates an event run-length encoding methodology 1360 for the encoding format 1300 of **FIG. 13** in accordance with various embodiments of the present technology. In the illustrated embodiment, one of the column embedded bits (e.g., bit 0) of the column address LSB package 1310 is used to communicate polarity information for detected events, and the other of the column embedded bits (e.g., bit 1) of the column address LSB package 1310 is used as an isolation flag 1362 similar to the isolation flag bit 262 described above with reference to **FIG. 2E****.** As such, the addressable resolution of AER packages (e.g., the row address MSB package 1302, the row address LSB package 1304, the column address MSB package 1308, and the column address LSB package 1310) is 1024 x 1024. In some embodiments, row-append packages 1306 can be used to communicate LSB timestamp information for detected events. The row-append packages 1306 can be shared to amongst events detected by pixels of a same row. Similar to the methodologies 1340 and 1350 described above with reference to **FIGs. 13A** and **13B****,** embedded event packets 1380 (e.g., similar to the embedded event packet 1380b) can be used to encode and transmit MSB timestamp information for the events under the methodology 1360 illustrated in **FIG. 13C****.**

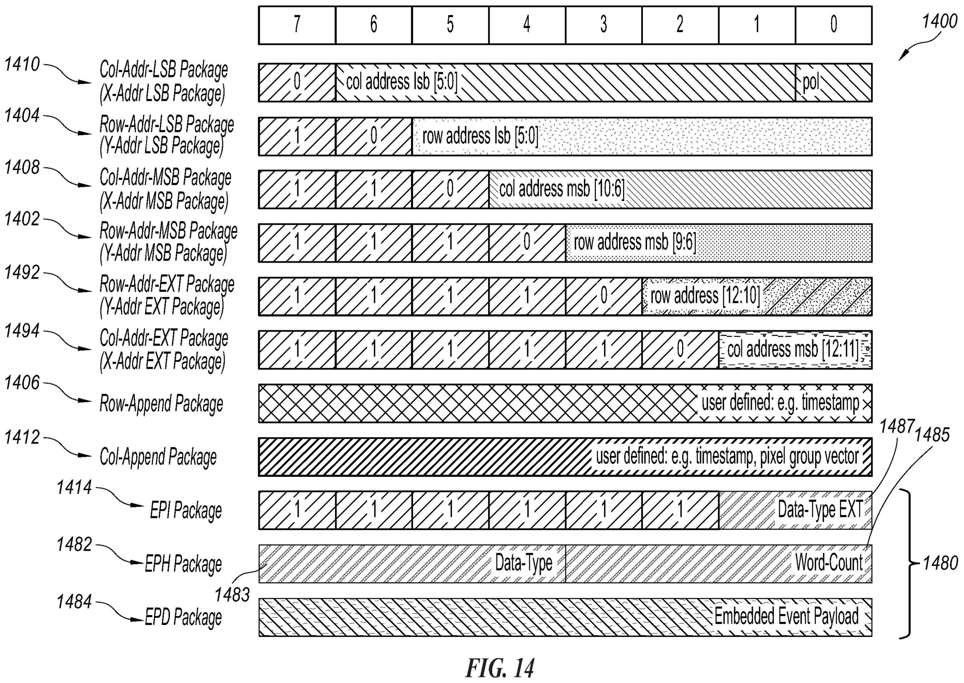

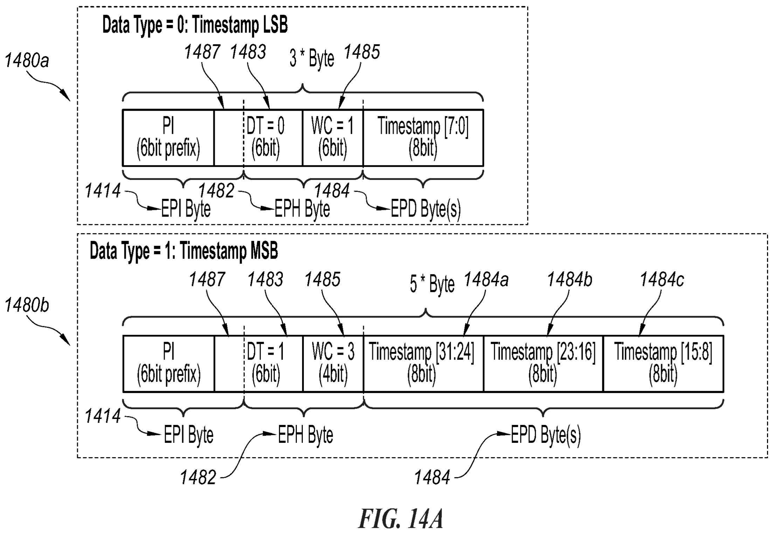

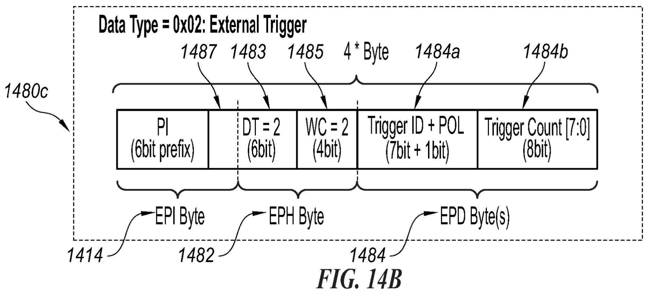

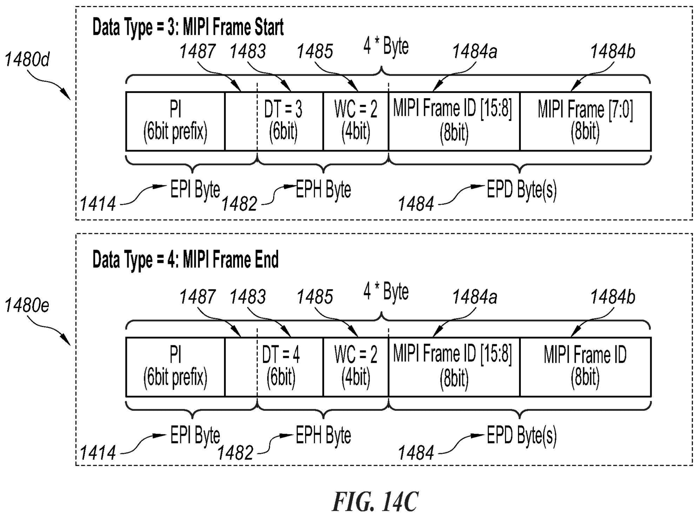

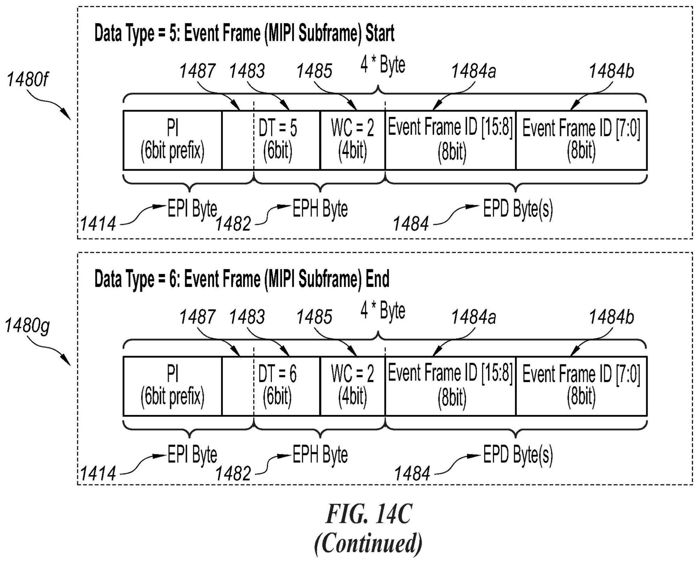

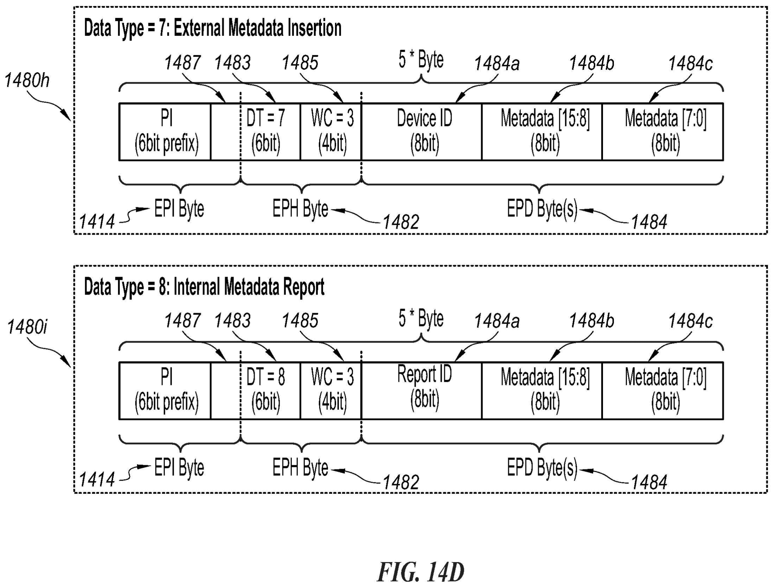

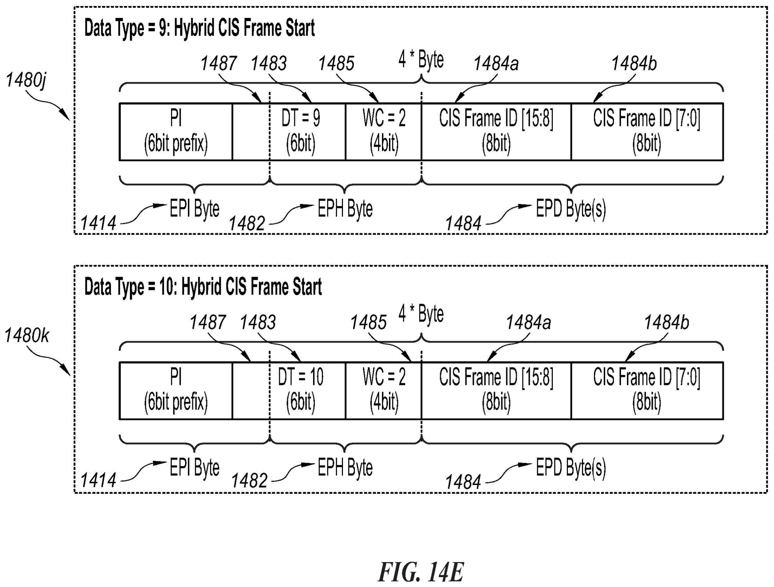

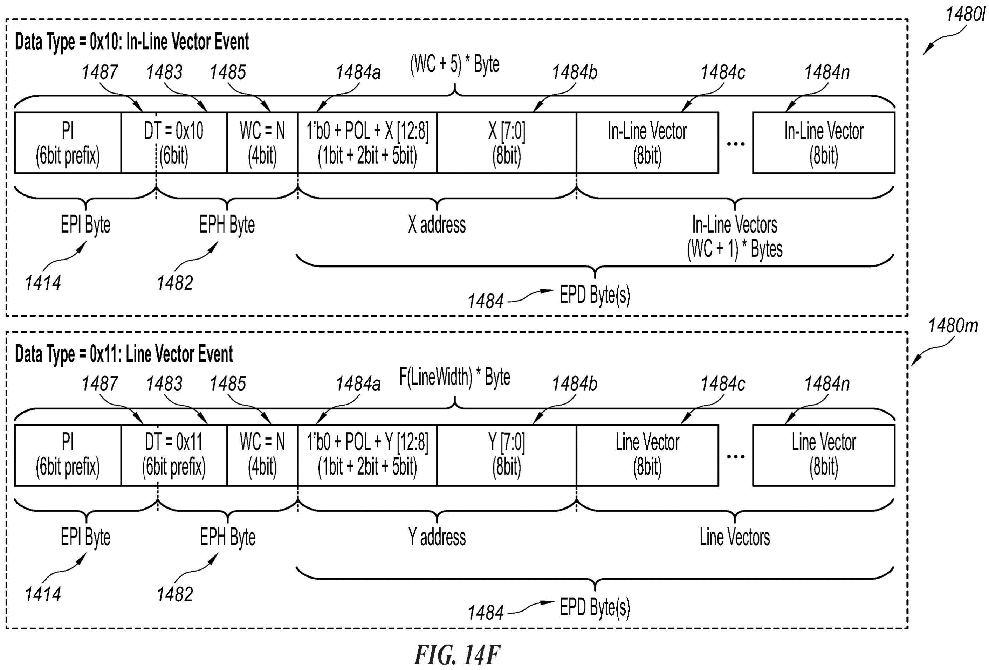

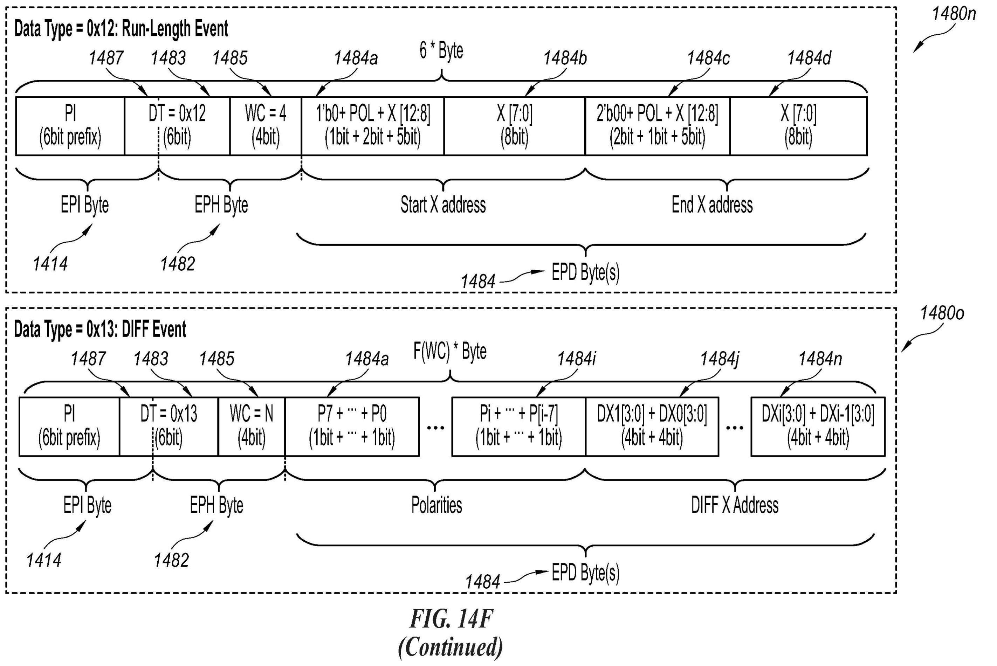

**FIG. 14** illustrates another encoding format 1400 for transmitting event data from an event-based vision sensor, the encoding format 1400 configured in accordance with various embodiments of the present technology. As shown, the encoding format 1400 is generally similar to the encoding format 1300 of **FIG. 13****.** Thus, a detailed description of several aspects of the encoding format 1400 is omitted here for the sake of brevity in light of the detailed description provided above with reference to **FIG. 13****.** In contrast with the encoding format 1300, the encoding format 1400 defines two AER packages (e.g., a row address extension package 1492 and a column address extension package 1494) in addition to the four AER packages (e.g., a row address MSB package 1402, a row address LSB package 1404, a column address MSB package 1408, and a column address LSB package 1410) described above. As shown, the row address extension package 1492 includes a five-bit prefix or flag (shown as '11110') and three content bits [2:0] for specifying three most significant row address bits for encoded events. In addition, the column address extension package 1494 includes a six-bit prefix or flag (shown as '111110') and two content bits [1:0] for specifying two most significant column address bits for encoded events. The prefixes for the row address extension package 1492 and the column address extension package 1494 each begin with '1111,' which tracks the prefix for an embedded event packet identifier package 1314 of the encoding format 1300 of **FIG. 13****.** Thus, in some embodiments, the row address extension package 1492 and the column address extension package 1494 of the encoding format 1400 of **FIG. 14** can be defined under the embedded event packet 1480 definition. As described in greater detail below, an embedded event packet identifier package 1414 can include a prefix (shown as '111111') to distinguish other types of embedded event packets 1480 from the row address extension package 1492 and the column address extension package 1494. Because the row address extension package 1492 and the column address extension package 1494 provide additional content bits [2:0] and [1:0], respectively, that can be used to specific additional row and column address bits, respectively, use of the row address extension package 1492 and the column address extension package 1494 can increase an addressable resolution from 1024 x 2048 to 8192 x 8192.

Defining six AER packages in the encoding format 1400 is expected to provide the encoding format 1400 greater flexibility to adapt to a given resolution of an image sensor. For example, for an image sensor with a resolution less than or equal to 64 x 64, two of the six AER packages defined in the encoding format 1400 can be used to adequately address each pixel of the image sensor. Similarly, for an image sensor with a resolution less than or equal to 1024 x 2048, four of the six AER packages defined in the encoding format 1400 can be used to adequately address each pixel of the image sensor. As still another example, for an image sensor with a resolution less than or equal to 8192 x 8192, all six AER package defined in the encoding format 1400 can be used to adequately address each pixel of the image sensor.

Similar to the encoding format 1300 of **FIG. 13****,** the encoding format 1400 of **FIG. 14** also defines embedded event packets 1480. Each embedded event packet 1480 is a recognizable data segment formed from several consecutive embedded event packages: (i) an embedded event packet identifier (EPI) package 1414, (ii) an embedded event packet header (EPH) package 1482, and (iii) one or more embedded event packet data (EPD) packages 1484. In comparison to the embedded event packet identifier package 1314 of **FIG. 13** that uses a four-bit prefix, the embedded event packet identifier package 1414 of **FIG. 14** utilized a six-bit prefix (shown as '111111') that allows a decoder to identify the embedded event packet identifier package as a start of an embedded event packet 1480 and to distinguish it from the row address extension package 1492 and the column address extension package 1494. The two remaining bits [1:0] of the embedded event packet identifier package 1414 can form a package extension field 1487.

In comparison to the embedded event packet header package 1382 of **FIG. 13** that includes a two-bit data type field 1383 and a six-bit word count field 1385, the embedded event packet header package 1482 of **FIG. 14** can include a four-bit data type field 1483 and a four-bit word count field 1487. In some embodiments, the package extension field 1487 of the embedded packet identified package 1414 can be used in combination with the data type field 1483 of the embedded event packet header package 1482 to specify a six-bit data type of content in the payload of the corresponding embedded event packet 1480. For example, the package extension field 1487 of the embedded packet identified package 1414 can be used to specify most significant bits of a data type of the content, and the data type field 1483 of the embedded event packet header package 1482 can be used to specify least significant bits of the data type.

As discussed above, the package extension field 1487 of the embedded packet identifier package 1414 and the data type field 1483 of the embedded event packet header package 1482 can be used to specify a six-bit data type of content in the payload of the corresponding embedded event packet 1480. Thus, up to 64 data types can be supported by the embedded event packets 1480 of the encoding format 1400. Data types can be arranged in data type classes. *Table 1* below lists four different examples of data type classes and corresponding example ranges for six-bit data type values:

**Table 1**

| **Data Type (6-bit)** | **Data Type Class Description** |
|---|---|
| 0x00 ~ 0x0F | Function Event Types |
| 0x10 ~ 0x1F | Special Contrast Detection (CD) Event Types |
| 0x20 ~ 0x2F | User-Defined Event Types |
| 0x30 ~ 0x3F | Reserved for high-level escape code, such as JPEG marker |

Within each of the above data type classes, there can be up to 16 different data type definitions. Data types falling under the Function Event Types class can include data types of events that are generated by system modules (e.g., as opposed to being generated natively from event sensor pixels). For example, data falling within the Function Event Types class can include data useful for various system functions, such as internal timeline construction (timestamp change events), multi-system synchronization (external trigger events), data segmentation and identification (frame start/end events), etc. *Table* 2 below lists several example data types (and corresponding example data type values and/or corresponding word count values) that can be included in the Function Event Types class:

**Table 2**

| **Data Type (6-bit)** | **Word Count (4-bit)** | **Data Type Description** | **Embedded Information** |
|---|---|---|---|
| 0x00 | 0x01 | Timestamp LSB change | Timestamp [7:0] |
| 0x01 | 0x03 | Timestamp MSB change | Timestamp [31:8] |
| 0x02 | 0x02 | External Trigger | Trigger ID [6:0] |
| | | | Trigger POL |
| | | | Trigger Count [7:0] |
| 0x03 | 0x02 | MIPI Frame Start | MIPI Frame ID [15:0] |
| 0x04 | 0x02 | MIPI Frame End | MIPI Frame ID [15:0] |
| 0x05 | 0x02 | Event Frame Start (MIPI Sub-Frame Start) | Event Frame ID [15:0] |
| 0x06 | 0x02 | Event Frame End (MIPI Sub-Frame End) | Event Frame ID [15:0] |
| 0x07 | 0x03 | External Metadata Insertion (e.g., IMU) | Device ID [7:0] |
| | | | Metadata [15:0] |
| 0x08 | 0x03 | Internal Metadata Insertion (e.g., Contrast Threshold Update) | Report ID [7:0] |
| | | | Metadata [15:0] |
| 0x09 | 0x02 | Hybrid CIS Frame Start | CIS Frame ID [15:0] |
| 0x0A | 0x02 | Hybrid CIS Frame End | CIS Frame ID [15:0] |

**FIGs. 14A-14E** illustrate example embedded event packets 1480 that can correspond to the data types listed in *Table 2* above and that can be used in the encoding format 1400 of **FIG. 14** to encode and communicate information in accordance with various embodiments of the present technology. **FIG. 14A** illustrates (i) an embedded event packet 1480a that can be used to communicate LSB timestamp changes and (ii) an embedded event packet 1480b that can be used to communicate MSB timestamp changes. Referring to the embedded event packet 1480a, a package extension field 1487 of the embedded event packet identifier package 1414 and a data type field 1483 of the embedded event packet header package 1482 specify a data type of DT=0, indicating that the content in the embedded event packet data package 1484 of the embedded event packet 1480a is timestamp LSB change information. The word count field 1483 of the embedded event packet 1480a indicates that the embedded even packet 1480a includes a single byte of embedded event packet data packages 1484.

Referring to the embedded event packet 1480b, a package extension field 1487 of the embedded event packet identifier package 1414 and a data type field 1483 of the embedded event packet header package 1482 specify a data type of DT=1, indicating that the content in the embedded event packet data package 1484 of the embedded event packet 1480b is timestamp MSB change information. The word count field 1483 of the embedded event packet 1480b indicates that the embedded even packet 1480b includes three bytes of embedded event packet data packages 1484.

As discussed above, timestamp can be a common characterization parameter for contrast detection events and any other types of events. For a given event stream, it can be desirable to use a single global timeline that is shared by multiple events such that the timestamps of different events can be compared relative to that timeline.

In many event-streams, events can be generated at a higher frequency than timestamp changes. As a result, multiple events can share a same timestamp value. This concept can be leveraged to achieve better encoding efficiency by separately defining timestamp change events and encoding each event's timestamp relative to those timestamp change events (e.g., as opposed to embedding/encoding a timestamp value for each and every event).

For example, two types of "timestamp change" events can be defined to describe different levels of time-change: (1) a "timestamp LSB change event" can be defined to describe the case when the eight least significant bits [7:0] of a timestamp changes and (2) a "timestamp MSB change event" can be defined to describe the case when the 24 most significant bits [31:8] of a timestamp changes. When a "timestamp change" event is generated, subsequent events detected by EVS pixels can share a different timestamp value than EVS events that occurred before the timestamp change event was generated. As such, the event encoding order should be: "timestamp MSB change" events, "timestamp LSB change" events, subsequent EVS events.

**FIG. 14B** illustrates an embedded event packet 1480c that can be used to communicate external trigger data type information, such as trigger ID, trigger polarity, and trigger count. External trigger events can specify a value-change on a monitored input (trigger line). Trigger lines are commonly external to event sensors and can be useful for synchronizing external devices to the event sensor, thereby allowing the user to correlate the event sensor's timeline with external devices. As shown, a package extension field 1487 of the embedded event packet identifier package 1414 and a data type field 1483 of the embedded event packet header package 1482 specify a data type of DT=2, indicating that the content in the embedded event packet data packages 1484a and 1484b of the embedded event packet 1480c is external trigger information. The word count field 1483 of the embedded event packet 1480c indicates that the embedded even packet 1480a includes two bytes of embedded event packet data packages 1484. The first embedded event packet data package 1484a can be used to encode and transmit a trigger ID [7:0]/Device ID [7:0] and a 1-bit indication of a trigger polarity (e.g., '0' for a falling edge change, '1' for a rising edge change). The second embedded event packet data package 1484b can be used to encode and transmit a trigger count.

**FIG. 14C** illustrates embedded event packets 1480d-1480g that can be used to communicate MIPI Frame Start information, MIPI Frame End information, Event Frame Start information, and Event Frame End information, respectively. MIPI Frame Start events and MIPI Frame End events can be used to identify the starts and ends of MIPI frames, which is commonly useful for a platform that receives event data from an event sensor via a MIPI interface. The payload for such embedded event packets 1480d and 1480e can be a MIPI frame ID (or frame count), which commonly starts form 0 at a first MIPI transmitted frame and thereafter increments at the start or end of every subsequent MIPI frame.

For an event sensor, an event frame typically refers to a scan of an entire EVS pixel array for events. Such a scan can be either synchronous or asynchronous. Event Frame Start events and Event Frame End events can be used to identify starts and ends of event frames, which is commonly useful for identifying event frames within a given MIPI frame. The payload for such embedded event packets 1480f and 1480g can be an event frame ID (or frame count), which commonly starts at 0 for each new MIPI frame and thereafter increments at the start or end of every new event frame/MIPI sub-frame within the same MIPI frame.

Referring to the embedded event packets 1480d-1480g, each has a similar structure in which a package extension field 1487 of the corresponding embedded event packet identifier package 1414 and a data type field 1483 of the corresponding embedded event packet header package 1482 specify a corresponding data type (e.g., DT=3 for the embedded event packet 1480d, indicating that the content in the embedded event packet data packages 1484a and 1484b is MIPI frame start information; DT=4 for the embedded event packet 1480e, indicating that the content in the embedded event packet data packages 1484a and 1484b is MIPI frame end information; DT=5 for the embedded event packet 1480f, indicating that the content in the embedded event packet data packages 1484a and 1484b is event frame start information; and DT=6 for the embedded event packet 1480g, indicating that the content in the embedded event packet data packages 1484a and 1484b is event frame end information). The word count fields 1483 of the embedded event packets 1480d-1480g indicate that the embedded event packets 1480d-1480g each includes two bytes of embedded event packet data packages 1484.

**FIG. 14D** illustrates embedded event packets 1480h and 1480i that can be used to communicate external metadata insertion information and internal metadata report information, respectively. External metadata insertion event information can specify an external data insertion request received on a monitored input (insertion line). This is commonly received from external sensors (e.g., inertial measurement units (IMUs)) that cooperate with an event sensor. The metadata information can be device dependent.

Internal metadata report event information can specify an internal status update report. This is commonly useful when an event sensor adjusts internal operating parameters of event pixels or function cores, and informs an external system of the new parameters' effective time. For example, an event sensor may change a contrast threshold used for event pixels. Subsequent events that are generated using the updated contrast threshold can be identified in a continuous event-stream using an internal metadata report embedded event packet.

Referring to the embedded event packets 1480h and 1480i, each has a similar structure in which a package extension field 1487 of the corresponding embedded event packet identifier package 1414 and a data type field 1483 of the corresponding embedded event packet header package 1482 specify a corresponding data type (e.g., DT=7 for the embedded event packet 1480h, indicating that the content in the embedded event packet data packages 1484a-1484c is external metadata insertion information; and DT=8 for the embedded event packet 1480i, indicating that the content in the embedded event packet data packages 1484a-1484c is internal metadata report information). The word count fields 1483 of the embedded event packets 1480h and 1480i indicate that the embedded event packets 1480h and 14801 each includes three bytes of embedded event packet data packages 1484. The first byte 1484a of the embedded event packets 1480h can specify a device ID of a device that supplies the metadata includes in the second and third bytes 1484b and 1484c. The first byte 1484a of the embedded event packets 14801 can specify a report ID (e.g., an internal report type) corresponding to the metadata (e.g., the updated operating parameter) includes in the second and third bytes 1484b and 1484c.

**FIG. 14E** illustrates embedded event packets 1480j and 1480k that can be used to communicate hybrid CIS frame start information and hybrid CIS frame end information, respectively. For hybrid sensors that combine CMOS image sensors with EVS image sensors, embedded event packets can be used to identify the start and end of CIS image frames, which can be useful for achieving on-chip synchronization between two systems (e.g., a CMOS image sensor and an EVS image sensor). A start of a CIS image frame can correspond to a first line's scan time, and an end of the CIS image frame can correspond to a last line's scan time or an exposure finish time for the image frame. The payload of such embedded event packets can be an image sensor's frame ID (or frame count), which commonly starts at 0 at a first image frame and thereafter increments at the start or end of every subsequent image frame.

Referring to the embedded event packets 1480j and 1480k, each has a similar structure in which a package extension field 1487 of the corresponding embedded event packet identifier package 1414 and a data type field 1483 of the corresponding embedded event packet header package 1482 specify a corresponding data type (e.g., DT=9 for the embedded event packet 1480j, indicating that the content in the embedded event packet data packages 1484a and 1484b is hybrid CIS frame start information; and DT=10 for the embedded event packet 1480k, indicating that the content in the embedded event packet data packages 1484a and 1484b is hybrid CIS frame end information). The word count fields 1483 of the embedded event packets 1480j and 1480k indicate that the embedded event packets 1480j and 1480k each includes two bytes of embedded event packet data packages 1484.

Referring momentarily back to *Table 1* above, data types falling under the Special CD Event Types class can include data types of events that are generated by EVS pixels of an EVS image sensor. The distribution of events generated by EVS pixels can be highly scene-dependent. In some specially distributed event cases, it may be more efficient to encode events detected by EVS pixels using embedded event packets 1480 rather than using the AER packages of the encoding format 1400 described above. Special CD event types can be defined to serve this purpose. Each special CD event type can refer to a specially distributed event pattern and a corresponding specially designed encoding scheme. *Table 3* below lists several example data types (and corresponding example data type values and/or corresponding word count values) that can be included in the Special CD Event Types class:

**Table 3**

| **Data Type (6-bit)** | **Word Count (4-bit)** | **Data Type Description** | **Embedded Information** |
|---|---|---|---|
| 0x10 | N | In-Line Vector Event | X-Address [12:0] |
| | | | In-Line Vector Polarity [1:0] |
| | | | In-Line Vectors |
| 0x11 | N | Line Vector Event | Y-Address [12:0] |
| | | | Line Vector Polarity [1:0] |
| | | | Line Vectors |
| 0x12 | 0x04 | Run-Length Event | Start X-Address [12:0] |
| | | | End X-Address [12:0] |
| | | | Run-Length Event Polarity [1:0] |
| 0x13 | N | Diff Event | Diff X-Addresses [3:0] |
| | | | Diff Event Polarities |

**FIG. 14F** illustrates example embedded event packets 1480l-1480o that can correspond to the data types listed in *Table 3* above and that can be used in the encoding format 1400 of FIG. 14 to encode and communicate event information in accordance with various embodiments of the present technology. More specifically, **FIG. 14F** illustrates (i) an embedded event packet 14801 that can be used to communicate in-line vector event information, (ii) an embedded event packet 1480m that can be used to communicate line vector event information, (iii) an embedded event packet 1480n that can be used to communicate run-length event information, and (iv) an embedded event packet 1480o that can be used to communicate Diff event information. The embedded event packet 14801 and the embedded event packet 1480m can be used for group-based encoding. An example configuration for the embedded event packet 14801 and 1480m are described in *Table 4* and *Table 5*, respectively, below.

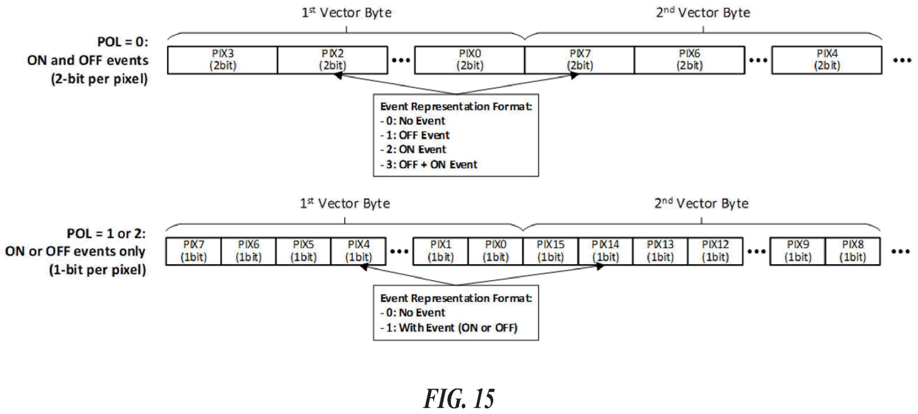

Referring first to the embedded event packet 1480m (which can be used to encode a whole line event as one group), two bytes of embedded event packet data packages 1484 (e.g., embedded event packet data packages 1484a and 1484b) can be used to specify a 13-bit Y-address and a line vector polarity. In the illustrated embodiment, the embedded event packet data package 1484a includes an MSB bit with a value of '0,' followed by two bits that encode line vector polarity, followed by five bits that can be used to encode MSB bits [12:8] of a Y-address. In addition, the embedded event packet data package 1484b includes eight bits to encode LSB bits [7:0] of the Y-address. Line vector polarity can be used to specify a type of events included in a corresponding group (e.g., ON events only, OFF events only, ON and OFF events). Additional embedded event packet data packages 1484c-1484n can be used to encode line vectors of events detected by groups of pixels. Events can be encoded in the line vectors using a single bit or multiple bits (e.g., two bits). In this manner, the embedded event packet 1480m can be used to encode and communicate one or more events detected by one or more pixels of a same row. **FIG. 15** illustrates further information on single-bit and multi-bit techniques for encoding event polarity information for in-line vector event encoding in accordance with various embodiments of the present technology. In addition, although described above in the context of encoding events line-by-line, embedded event packets 1480 can also be used to encode events detected by pixels belonging to multiple row/lines.

**Table 4**

| **In-Line Vector Event** | | | | | |
|---|---|---|---|---|---|
| **Data Type** | 0x10 | | | | |
| **Word Count** | N | | | | |
| **Payload Length** | N+3 Bytes | | | | |
| **Payload (EPD)** | 1^{st} Byte | Bit [7] | 0 | | |
| | | Bit [6:5] | In-Line Vector Event Polarity (POL): | | |
| | | | | • 0: ON and OFF events | |
| | | | | • 1: OFF events only | |
| | | | | • 2: ON events only | |
| | | Bit [4:0] | X address [12:8] | | |
| | 2^{nd} Byte | Bit [7:0] | X address [7:0] | | |
| | 3^{rd} ~ (N+3)^{th} Byte | Bit [7:0] | In-Line Vectors | | |
| **Encoding Moment (position in the event-stream)** | "In-Line Vector Event" detected in a line. | | | | |
| | | | | | |

| **2-bit polarity value (POL)** | **Encoded events in the current "In-Line Vector Event"** | | | | **Event representation format in "in-line vectors"** |
|---|---|---|---|---|---|
| 0 | ON and OFF events | | | | 2-bit per pixel |
| 1 | OFF events only | | | | 1-bit per pixel |
| 2 | ON events only | | | | 1-bit per pixel |

Referring to the embedded event packet 14801 (which can be used to encode events in pixel groups as part of a line), two bytes of embedded event packet data packages 1484 (e.g., embedded event packet data packages 1484a and 1484b) can be used to specify a 13-bit X-address and an in-line vector polarity. In the illustrated embodiment, the embedded event packet data package 1484a includes an MSB bit with a value of '0,' followed by two bits that encode in-line vector polarity, followed by five bits that can be used to encode MSB bits [12:8] of an X-address. The in-line vector polarity can be used to specify the type of events in the group (e.g., ON events only, OFF events only, ON and OFF events). In addition, the embedded event packet data package 1484b includes eight bits to encode LSB bits [7:0] of the X-address. Additional embedded event packet data packages 1484c-1484n can be used to encode in-line vectors of events detected by groups of pixels. Events can be encoded in the line vectors using a single bit or multiple bits (e.g., two bits). The embedded event packet 14801 can be used in combination with one or more other packages (e.g., a row address MSB package 1402, a row address LSB package 1404, and/or a row address extension package 1406) to encode and transmit group event information. More specifically, the one or more other packages can be used to specify a Y-address or a block of Y-addresses, and the embedded event packet 14801 can be used to encode and communicate one or more events detected by one or more pixels of a same column. **FIG. 15** illustrates further information on single-bit and multi-bit techniques for encoding event polarity information for line vector event encoding in accordance with various embodiments of the present technology. In addition, although described above in the context of encoding events line-by-line, embedded event packets 1480 can also be used to encode events detected by pixels belonging to multiple row/lines.

**Table 5**

| **Line Vector Event** | | | | | |
|---|---|---|---|---|---|
| **Data Type** | 0x11 | | | | |
| **Word Count** | 0x00 | | | | |
| **Payload Length** | $\left(\frac{LineWidth}{4}+2\right) or \left(\frac{LineWidth}{4}+2\right)$ Bytes (depends on the event representation format of the "line vectors") | | | | |
| **Payload (EPD)** | 1^{st} Byte | Bit [7] | 0 | | |
| | | Bit [6:5] | Line Vector Event Polarity (POL): | | |
| | | | | • 0: ON and OFF events | |
| | | | | • 1: OFF events only | |
| | | | | • 2: ON events only | |
| | | Bit [4:0] | Y address [12:8] | | |
| | 2^{nd} Byte | Bit [7:0] | Y address [7:0] | | |
| | 3^{rd} ~ N^{th} Byte | Bit [7:0] | Line Vectors | | |
| **Encoding Moment (position in the event-stream)** | "Line Vector Event" is identified for a new line. | | | | |
| | | | | | |
| **2-bit polarity value (POL)** | Encoded events in the current "Line Vector Event" | | | | Event representation format of "line vectors" |
| 0 | ON and OFF events | 2-bit per pixel | | | |
| 1 | OFF events only | 1-bit per pixel | | | |
| 2 | On events only | 1-bit per pixel | | | |

Referring now to the embedded event packet 1480n, the embedded event packet 1480n can be used for run-length encoding of event information. An example configuration for the embedded event packet 1480n is described in *Table 6* below. As shown, two bytes of embedded event packet data packages 1484 (e.g., embedded event packet data packages 1484a and 1484b) can be used to specify (i) a 13-bit X-address for a pixel at a start of a run of detected events and (ii) a polarity of the events. In the illustrated embodiment, the embedded event packet data package 1484a includes an MSB bit with a value of '0,' followed by two bits that encode event polarity, followed by five bits that can be used to encode MSB bits [12:8] of an X-address for the start pixel. In addition, the embedded event packet data package 1484b includes eight bits to encode LSB bits [7:0] of the X-address for the start pixel. In addition, two bytes of embedded event packet data packages 1484 (e.g., embedded event packet data packages 1484c and 1484d) can be used to specify (i) a 13-bit X-address for a pixel at an end of the run of detected events and (ii) the polarity of the events. In the illustrated embodiment, the embedded event packet data package 1484c includes an MSB bit with a value of '0,' followed by two bits that encode event polarity, followed by five bits that can be used to encode MSB bits [12:8] of an X-address for the end pixel. In addition, the embedded event packet data package 1484b includes eight bits to encode LSB bits [7:0] of the X-address for the end pixel. In some embodiments, the embedded event packet 1480n can be used in combination with one or more other packages (e.g., a row address MSB package 1402, a row address LSB package 1404, and/or a row address extension package 1406). More specifically, the one or more other packages can be used to specify a Y-address, and the embedded event packet 1480n can be used for run-length encoding of events within that row.

**Table 6**

| **Run-Length Event** | | | | |
|---|---|---|---|---|
| **Data Type** | 0x12 | | | |
| **Word Count** | 0x05 | | | |
| **Payload Length** | 6 Bytes | | | |
| **Payload (EPD)** | 1^{st} Byte | Bit [7] | 0 | |
| | | Bit [6:5] | Run-Length Event Polarity (POL): | |
| | | | | • 0: No event |
| | | | | • 1: OFF event |
| | | | | • 2: ON event |
| | | | | • 3: ON and OFF event |
| | | Bit [4:0] | SX address [12:8] | |
| | 2^{nd} Byte | Bit [7:0] | SX address [7:0] | |
| | 3^{rd} Byte | Bit [7] | 0 | |
| | | Bit [6:5] | Run-Length Event Polarity (POL): Same with above. | |
| | | Bit [4:0] | EX address [12:8] | |
| | 4^{th} Byte | Bit [7:0] | EX address [7:0] | |
| **Encoding Moment (position in the event-stream)** | "Run-Length Event" detected in a line. | | | |

Referring now to the embedded event packet 1480o, the embedded event packet 1480o can be used for pixel-level encoding and to encode each different event address. An example configuration for the embedded event packet 1480o is described in *Table 7* below. In *Table 7,* "Different event address" can refer to a group of events generated at a same time by pixels that are spaced up to 16 pixels apart from one another in the X-direction. For example, a number of bytes of embedded event packet data packages 1484 (e.g., embedded event packet data packages 1484a-1484i) can be used to encode polarities of events detected to a group of pixels (e.g., a row, a subset of a row), and a corresponding number of bytes of embedded event packet data packages 1484 (e.g., embedded event packet data packages 1484j-1484n) can be used to encode adjacent pixel address difference information on X-addresses for pixels corresponding to the encoded events. In each byte of the embedded event packet data packages 1484 that is used to encode and communication X-address information, the X-address information provided can be relative to a starting pixel of a pixel of a known address. For example, in the embedded event packet data package 1484i, four bits can be used to communicate X-address information for a first pixel and another four bits can be used to communicate X-address for a second pixel, the first and second pixels each being a pixel that detected an event for which a polarity is encoded in the embedded event packet data package 1484a. The four bits in the embedded event packet data package 1484i that encode X-address information for the first pixel can encode a first difference (or a first delta) in the first pixel's X-address relative to a starting/known pixel address. In addition, the four bits in the embedded event packet data package 1484i that encode X-address information for the second pixel can encode a second difference (or a second delta) in the second pixel's X-address relative to the starting/known pixel address. In this manner, the embedded event packet 1480o can be used to communicate several different events using pixel-level encoding. Diff event encoding using embedded event packets is expected to be especially efficient in processing scenarios with low-density, near-uniformly distributed events in a same line.

**Table 7**

| **Diff Event** | | | | |
|---|---|---|---|---|
| **Data Type** | 0x13 | | | |
| **Word Count** | N | | | |
| **Payload Length** | $ceil \left(\frac{N + 1}{8}\right) + ceil \left(\frac{N + 1}{2}\right) Bytes$ *ceil*() *means round up to an integer* | | | |
| **Payload (EPD)** | 1^{st} Byte | Bit [7:0] | Polarity of event 0 ~ 7. | |
| | | | | • 0: OFF event |
| | | | | • 1: ON event |
| | 2^{nd} Byte | Bit [7:0] | Polarity of event 8 ~ 15. | |
| | 3^{rd} Byte | Bit [3:0] | Delta X address of event 0. | |
| | | Bit [7:4] | Delta X address of event 1. | |
| | 4^{th} Byte | Bit [3:0] | Delta X address of event 2. | |
| | | Bit [7:4] | Delta X address of event 3. | |
| | ... | ... | ... | |
| **Encoding Moment (position in the event-stream)** | "Diff Event" detected in a line. | | | |

For each of the embedded event packets 1480l-1480p, a package extension field 1487 of the corresponding embedded event packet identifier package 1414 and a data type field 1483 of the corresponding embedded event packet header package 1482 specify a corresponding data type (e.g., DT=0x10 for the embedded event packet 14801, indicating that the content in the embedded event packet data packages 1484a-1484n is in-line vector event information; DT=0x11 for the embedded event packet 1480m, indicating that the content in the embedded event packet data packages 1484a-1484n is line vector event information; DT=0x12 for the embedded event packet 1480n, indicating that the content in the embedded event packet data packages 1484a-1484d is run-length event information; and DT=0x13 for the embedded event packet 1480o, indicating that the content in the embedded event packet data packages 1484a-1484n is Diff event information). The word count field 1483 of the embedded event packet 1480n indicates that the embedded event packet 1480n includes four bytes of embedded event packet data packages 1484. The word count fields 1483 of the embedded event packets 14801, 1480m, and 1480o indicate that the embedded event packets 14801, 1480m, and 1480o each includes N bytes of embedded event packet data packages 1484 (e.g., depending on a number of in-line vectors, line vectors, and polarities/Diff X-addresses, respectively, used to encode and communicate event information in these embedded event packets 14801, 1480m, and 1480n). Alternatively, in embodiments in which word count (WC) is defined by the number of pixels in one line, the word count field 1483 of the embedded event packet 1480m can be set to WC=0 as line-by-line encoding is used with the embedded event packet 1480m.

In some embodiments, the encoding format 1400 of **FIG. 14** can include one or more other or additional packages than the packages illustrated in **FIGs. 14-14F****.** For example, encoding format 1400 can include a padding package (not shown) in which all eight bits [7:0] are assigned the value '1.' In other words, the padding package can be an eight-bit 0xFF package. The padding package can be used to pad encoded data to a certain length, or to serve as an escape package for another high-level protocol.

### C. Examples

Several aspects of the present technology are set forth in the following Examples. The following Examples are provided merely for the sake of example and understanding, and do not limit the present technology in any way. Indeed, it is noted that all or a subset of any one or more of the following Examples may be combined (in any combination) with (i) all or a subset of any one or more other Examples below and/or (ii) with any one or more aspects of the present technology described above. In addition, all or a subset of any one or more of the dependent Examples below may be incorporated into a respective independent Example below. Furthermore, although aspects of the present technology are set forth below in Examples that are each directed to a specific category (e.g., system, apparatus, method, or computer-readable medium), those aspects of the present technology can similarly be set forth in other Examples directed to any of the other categories (e.g., systems, apparatuses, methods, and/or computer-readable mediums). Such other Examples, although omitted below for the sake of brevity, form part of the present disclosure.

Example 1. An encoding format for transmitting event data from an event-based vision sensor, the encoding format comprising a row address most significant bit (MSB) package including a first prefix code and content bits for encoding MSB row address information; a row address least significant bit (LSB) package including a second prefix code and content bits for encoding LSB row address information, wherein the second prefix code is different from the first prefix code; a column address MSB package including a third prefix code and content bits for encoding MSB column address information, wherein the third prefix code is different from the first and second prefix codes; and a column address LSB package including a fourth prefix code and content bits for encoding LSB column address information, wherein the fourth prefix code is different from the first, second, and third prefix codes, wherein at least one of the first, second, third, and fourth prefix codes has a different length from at least one other one of the first, second, third, and fourth prefix codes.

Example 2. The encoding format of Example 1, further comprising an embedded event packet comprising an embedded packet identifier package having a fifth prefix code that is different from the first, second, third, and fourth prefix codes.

Example 3. The encoding format of Example 1 or Example 2, wherein the embedded event packet further comprises an embedded packet header package and one or more embedded packet data packages.

Example 4. The encoding format of any of Examples 1-3, wherein the embedded packet header package includes a data type field usable to specify a content type of a payload in the embedded event packet and a word count field usable to indicate a payload size of the embedded event packet.

Example 5. The encoding format of any of Examples 1-4, wherein the data type field is usable to specify relative timestamp information and/or absolute timestamp information, and wherein the one or more embedded packet data packages are usable to encode relative timestamp data and/or absolute timestamp information.

Example 6. The encoding format of any of Examples 1-5, wherein the data type field is usable to specify timestamp LSB change information and/or timestamp MSB change information, and wherein the one or more embedded packet data packages are usable to encode timestamp least significant bits and/or timestamp most significant bits.

Example 7. The encoding format of any of Examples 1-6, wherein the data type field is usable to specify external trigger information, and wherein the one or more embedded packet data packages are usable to encode a trigger identifier and/or a polarity indicator.

Example 8. The encoding format of any of Examples 1-7, wherein the one or more embedded packet data packages are usable to encode a trigger count.

Example 9. The encoding format of any of Examples 1-8, wherein the data type field is usable to specify MIPI frame start information and/or MIPI frame end information, and wherein the one or more embedded packet data packages is usable to encode a MIPI frame identifier.

Example 10. The encoding format of any of Examples 1-9, wherein the data type field is usable to specify event frame start information and/or event frame end information, and wherein the one or more embedded packet data packages is usable to encode an event frame identifier.

Example 11. The encoding format of any of Examples 1-10, wherein the data type field is usable to specify external metadata insertion information and/or internal metadata report information.

Example 12. The encoding format of any of Examples 1-11, wherein the data type field is usable to specify hybrid CIS frame start information and/or hybrid CIS end information, and wherein the one or more embedded packet data packages are usable to encode a CIS frame identifier.

Example 13. The encoding format of any of Examples 1-12, wherein the data type field is usable to specify run-length event information, and wherein the one or more embedded packet data packages are usable to encode a start X-address for a pixel at a start of a run of detected events, an end X-address for a pixel at an end of the run of detected events, and a polarity of the detected events.

Example 14. The encoding format of any of Examples 1-13, wherein the data type field is usable to specify in-line vector event information, and wherein the one or more embedded packet data packages are usable to encode an X-address, an in-line vector polarity specifying a type of events in a group, and in-line vectors of events detected by groups of pixels.

Example 15. The encoding format of any of Examples 1-14, wherein the embedded packet identifier package includes an extension field, and wherein the extension field is unused; or the extension field is usable to, at least in part, indicate a data type of data included in the embedded packet identifier package, is usable to encode timestamp information, and/or is usable to indicate when a timer is full or exhausted.

Example 16. The encoding format of any of Examples 1-15, wherein the embedded event packet does not include an end identifier package, and wherein a word count value in the embedded packet header package is usable to determine an end of the embedded event packet.

Example 17. The encoding format of any of Examples 1-16, wherein the encoding format implements a package sharing methodology in which events detected by two or more pixels of a same row share a same row address MSB package and a same row address LSB package.

Example 18. The encoding format of any of Examples 1-17, wherein the encoding format implements a package sharing methodology in which events detected by two or more pixels having a same column address MSB share a same column address MSB package.

Example 19. The encoding format of any of Examples 1-18, wherein the encoding format implements a package sharing methodology in which events detected by two or more pixels of rows having a same row address MSB share a same row address MSB package.

Example 20. The encoding format of any of Examples 1-19, wherein the column address LSB package includes column embedded bits for encoding event polarity information.

Example 21. The encoding format of any of Examples 1-20, wherein the encoding format encodes event polarity information using a single-bit representation for encoding events of a single polarity type.

Example 22. The encoding format of any of Examples 1-21, wherein the encoding format encodes event polarity information using a multi-bit representation for encoding events of multiple polarity types.

Example 23. The encoding format of any of Examples 1-22, wherein the multi-bit representation uses two bits per pixel to encode no event, an OFF event, an ON event, or both OFF and ON events.

Example 24. A method of encoding event data from an event-based vision sensor, the method comprising encoding row address information using a row address MSB package and a row address LSB package, the row address MSB package including a first prefix code and the row address LSB package including a second prefix code that is different from the first prefix code; and encoding column address information using a column address MSB package and a column address LSB package, the column address MSB package including a third prefix code and the column address LSB package including a fourth prefix code that is different from the third prefix code, wherein at least one of the first, second, third, and fourth prefix codes has a different length from at least one other one of the first, second, third, and fourth prefix codes.

Example 25. The method of Example 24, further comprising selectively transmitting an embedded event packet comprising an embedded packet identifier package with a fifth prefix code.

Example 26. The method of Example 24 or Example 25, further comprising encoding timestamp information in the embedded event packet.

Example 27. The method of any of Examples 24-26, further comprising encoding external trigger information in the embedded event packet, wherein the external trigger information includes a trigger identifier, a polarity indicator, a trigger count, or any combination thereof.

Example 28. The method of any of Examples 24-27, further comprising encoding MIPI frame start information or MIPI frame end information in the embedded event packet.

Example 29. The method of any of Examples 24-28, further comprising encoding event frame start information or event frame end information in the embedded event packet.

Example 30. The method of any of Examples 24-29, further comprising encoding hybrid CIS frame start information or hybrid CIS frame end information in the embedded event packet.

Example 31. The method of any of Examples 24-30, further comprising sharing the row address MSB package and the row address LSB package among events detected by two or more pixels of a same row.

Example 32. The method of any of Examples 24-31, further comprising sharing the column address MSB package among events detected by two or more pixels having a same column address MSB.

Example 33. The method of any of Examples 24-32, further comprising sharing the row address MSB package among events detected by two or more pixels of rows having a same row address MSB.

Example 34. An event-based vision sensor system, comprising an event-based vision sensor pixel array configured to detect events; and an event signal processor configured to encode detected events using an encoding format that includes coordinate packages comprising a row address most significant bit (MSB) package, a row address least significant bit (LSB) package, a column address MSB package, and a column address LSB package, wherein each coordinate package includes a variable-length prefix code for package identification, and wherein lengths of at least two of the variable-length prefix codes differ from one another.

Example 35. The event-based vision sensor system of Example 34, wherein the encoding format further includes embedded event packets that each comprise an embedded packet identifier package with a prefix code, an embedded packet header package, and an embedded packet data package.

Example 36. The event-based vision sensor system of Example 34 or Example 35, wherein the embedded packet header package includes a data type field that specifies a content type of a payload and a word count field that indicates a payload size.

Example 37. The event-based vision sensor system of any of Examples 34-36, wherein the event signal processor is configured to implement a package sharing methodology in which events detected by two or more pixels of a same row share a same row address MSB package and a same row address LSB package; events detected by two or more pixels having a same column address MSB share a same column address MSB package; and/or events detected by two or more pixels of rows having a same row address MSB share a same row address MSB package.

Example 38. The event-based vision sensor system of any of Examples 34-37, further comprising a MIPI transmitter configured to transmit encoded event data.

Example 39. An encoding format for transmitting event data from an event-based vision sensor, the encoding format comprising a row address most significant bit (MSB) package including a first prefix code and content bits for encoding MSB row address information; a row address least significant bit (LSB) package including a second prefix code and content bits for encoding LSB row address information, wherein the second prefix code is different from the first prefix code; a column address MSB package including a third prefix code and content bits for encoding MSB column address information, wherein the third prefix code is different from the first and second prefix codes; and a column address LSB package including a fourth prefix code and content bits for encoding LSB column address information, wherein the fourth prefix code is different from the first, second, and third prefix codes, wherein the encoding format further comprises one or more row-append packages positionable in an encoded event stream after the row address LSB package, wherein the one or more row-append packages are usable to encode row-wise information, one or more column-append packages positionable in an encoded event stream after the column address LSB package, wherein the one or more column-append packages are usable to encode pixel-wise information, or a combination thereof.

Example 40. The encoding format of Example 39, wherein the first, second, third, and fourth prefix codes are assigned based at least in part on package frequency, with more frequently occurring packages receiving shorter prefix codes.

Example 41. The encoding format of Example 39 or Example 40, wherein the encoding format includes the one or more row-append packages, and wherein the row-wise information includes timestamp information sharable by events detected by pixels of a same row.

Example 42. The encoding format of any of Examples 39-41, wherein the encoding format includes the one or more column-append packages, and wherein the pixel-wise information includes a pixel group vector representing event information for a group of pixels.

Example 43. The encoding format of any of Examples 39-42, wherein the pixel group vector encodes event status and polarity information for each pixel within the group of pixels.

Example 44. The encoding format of any of Examples 39-43, wherein the column address LSB package includes semi-valid bits usable to indicate which rows within the group of pixels have detected events.

Example 45. The encoding format of any of Examples 39-44, wherein the column address LSB package includes one or more column embedded bits usable to convey event polarity information.

Example 46. The encoding format of any of Examples 39-45, wherein the column address LSB package includes one or more column embedded bits usable as additional column address bits to expand an addressable range of column addresses.

Example 47. The encoding format of any of Examples 39-46, wherein the encoding format includes the one or more column-append packages, and wherein the one or more column-append packages are usable to encode timestamp information for each event detected by each pixel.

Example 48. The encoding format of any of Examples 39-47, wherein the column address LSB package includes an isolation flag usable to distinguish between isolated events and non-isolated events.

Example 49. The encoding format of any of Examples 39-48, wherein the isolation flag is usable to indicate a start or an end of a run of events.

Example 50. The encoding format of any of Examples 39-49, wherein the row address LSB package includes an MSB flag usable to indicate whether an immediately preceding package is the row address MSB package.

Example 51. The encoding format of any of Examples 39-50, wherein the encoding format supports a row-wise timestamp mode in which the one or more row-append packages are usable to encode timestamp information shared by events detected by pixels of a same row.

Example 52. The encoding format of any of Examples 39-51, wherein the encoding format supports an adaptive row-wise timestamp output mode in which timestamp information is selectively encoded based at least in part on event distribution.

Example 53. The encoding format of any of Examples 39-52, wherein the encoding format include the one or more row-append packages, and wherein the row-wise information includes an exposure flag indicating whether events occurred within or outside of an exposure period.

Example 54. The encoding format of any of Examples 39-53, wherein the row address LSB package includes a top-bottom bit indicating whether a pixel row is located in a top half or a bottom half of a pixel array segment.

Example 55. The encoding format of any of Examples 39-54, further comprising an embedded event packet comprising an embedded packet identifier package having a fifth prefix code that is different from the first, second, third, and fourth prefix codes.

Example 56. The encoding format of any of Examples 39-55, wherein the embedded event packet further comprises an embedded packet header package and one or more embedded packet data packages.

Example 57. The encoding format of any of Examples 39-56, wherein, using the embedded event packet, the encoding format supports line vector event encoding in which events detected by pixels of a same line are encoded together.

Example 58. The encoding format of any of Examples 39-57, wherein the embedded packet header package is usable to specify a data type indicating line vector event information; and the one or more embedded packet data packages are usable to encode (a) a Y-address for a line of events, (b) a line vector polarity indicator, and (c) line vectors encoding event information for pixels along the line.

Example 59. The encoding format of any of Examples 39-58, wherein the line vector polarity indicator is usable to specify whether the line contains ON events only, OFF events only, or both ON and OFF events.

Example 60. The encoding format of any of Examples 39-59, wherein, using the embedded event packet, the encoding format supports differential event encoding in which the embedded packet header package is usable to specify a data type indicating differential event information; and the one or more embedded packet data packages are usable to encode (a) polarity information for a plurality of events and (b) differential X-address information for each event relative to a preceding pixel address.

Example 61. A method of encoding event data from an event-based vision sensor, the method comprising encoding row address information using a row address MSB package and a row address LSB package, the row address MSB package including a first prefix code and the row address LSB package including a second prefix code that is different from the first prefix code; encoding column address information using a column address MSB package and a column address LSB package, the column address MSB package including a third prefix code and the column address LSB package including a fourth prefix code that is different from the third prefix code, wherein the method further comprises encoding row-wise information using one or more row-append packages positioned after the row address LSB package, encoding pixel-wise information using one or more column-append packages positioned after the column address LSB package, or a combination thereof.

Example 62. The method of Example 61, wherein the method comprises encoding the row-wise information, and wherein encoding the row-wise information includes encoding timestamp information that is sharable by events detected by pixels of a same row.

Example 63. The method of Example 61 or Example 62, wherein the method comprises encoding the row-wise information, and wherein encoding the row-wise information includes encoding, using an exposure flag, whether events occurred within or outside of an exposure period.

Example 64. The method of any of Examples 61-63, wherein the method comprises encoding the pixel-wise information, and wherein encoding the pixel-wise information includes encoding a pixel group vector representing event information for a group of pixels.

Example 65. The method of any of Examples 61-64, further comprising encoding, using semi-valid bits of the column address LSB package, which rows within a group of pixels have detected events.

Example 66. The method of any of Examples 61-65, further comprising encoding, using one or more column embedded bits of the column address LSB package, event polarity information.

Example 67. The method of any of Examples 61-66, wherein the method comprises encoding the pixel-wise information, and wherein encoding the pixel-wise information includes encoding timestamp information for each event detected by each pixel using the one or more column-append packages.

Example 68. The method of any of Examples 61-67, further comprising, encoding, using an isolation flag of the column address LSB package, an indication of whether a corresponding event is an isolated event or a non-isolated event.

Example 69. The method of any of Examples 61-68, further comprising encoding, using an MSB flag of the row address LSB package, an indication of whether an immediately preceding package is the row address MSB package.

Example 70. The method of any of Examples 61-69, further comprising encoding, using a top-bottom bit of the row address LSB package, an indication of whether a pixel row is located in a top half or a bottom half of a pixel array segment.

Example 71. The method of any of Examples 61-70, further comprising encoding line vector event information using an embedded event packet, wherein the line vector event information includes (a) a Y-address for a line of events, (b) a line vector polarity indicator, and (c) line vectors encoding event information for pixels along the line.

Example 72. The method of any of Examples 61-71, further comprising encoding differential event information using an embedded event packet, wherein the differential event information includes (a) polarity information for a plurality of events and (b) differential X-address information for each event relative to a preceding pixel address.

Example 73. An event-based vision sensor system, comprising an event-based vision sensor pixel array configured to detect events; and an event signal processor configured to encode detected events using an encoding format that includes coordinate packages comprising a row address most significant bit (MSB) package, a row address least significant bit (LSB) package, a column address MSB package, and a column address LSB package, wherein each coordinate package includes a prefix code for package identification, and wherein the encoding format further includes one or more row-append packages usable to encode row-wise information, one or more column-append packages usable to encode pixel-wise information, or a combination thereof.

Example 74. The event-based vision sensor system of Example 73, wherein the encoding format includes the one or more row-append packages, and wherein the row-wise information includes timestamp information sharable by events detected by pixels of a same row.

Example 75. The event-based vision sensor system of Example 73 or Example 74, wherein the encoding format includes the one or more row-append packages, and wherein the row-wise information includes an exposure flag indicating whether events occurred within or outside of an exposure period.

Example 76. The event-based vision sensor system of any of Examples 73-75, wherein the encoding format includes the one or more column-append packages, and wherein the pixel-wise information includes a pixel group vector representing event information for a group of pixels.

Example 77. The event-based vision sensor system of any of Examples 73-76, wherein the encoding format includes the one or more column-append packages, and wherein the one or more column-append packages are usable to encode timestamp information for each event detected by each pixel.

Example 78. The event-based vision sensor system of any of Examples 73-77, wherein the column address LSB package includes semi-valid bits usable to indicate which rows within a group of pixels have detected events.

Example 79. The event-based vision sensor system of any of Examples 73-78, wherein the column address LSB package includes one or more column embedded bits usable to convey event polarity information.

Example 80. The event-based vision sensor system of any of Examples 73-79, wherein the column address LSB package includes an isolation flag usable to distinguish between isolated events and non-isolated events.

Example 81. The event-based vision sensor system of any of Examples 73-80, wherein the row address LSB package includes an MSB flag usable to indicate whether an immediately preceding package is the row address MSB package.

Example 82. An encoding format for transmitting event data from an event-based vision sensor, the encoding format comprising a row address most significant bit (MSB) package including a first prefix code and content bits for encoding MSB row address information; a row address least significant bit (LSB) package including a second prefix code and content bits for encoding LSB row address information, wherein the second prefix code is different from the first prefix code; a column address MSB package including a third prefix code and content bits for encoding MSB column address information, wherein the third prefix code is different from the first and second prefix codes; and a column address LSB package including a fourth prefix code and content bits for encoding LSB column address information, wherein the fourth prefix code is different from the first, second, and third prefix codes, wherein the encoding format further includes a column-append package positionable in an encoded event stream after the column address LSB package, a row-append package positionable in an encoded event stream after the row address LSB package, an embedded event packet comprising an embedded packet identifier package having a fifth prefix code that is different from the first, second, third, and fourth prefix codes, or any combination thereof.

Example 83. The encoding format of Example 82, wherein the encoding format includes the column-append package, and wherein the column-append package is usable to encode timestamp information for each event detected by each pixel.

Example 84. The encoding format of Example 82 or Example 83, wherein the encoding format includes the column-append package, and wherein the encoding format supports an in-pixel timestamp mode in which the column-append package encodes timestamp information for individual events.

Example 85. The encoding format of any of Examples 82-84, wherein, in the in-pixel timestamp mode, the column-append package is followed by the column address MSB package, another column address LSB package, the row address MSB package, the row address LSB package, or an embedded packet identifier package.

Example 86. The encoding format of any of Examples 82-85, wherein the encoding format includes the row-append package and the column-append package, and wherein the row-append package is usable to encode row-wise timestamp information and the column-append package is usable to encode column-wise timestamp information simultaneously.

Example 87. The encoding format of any of Examples 82-86, wherein the encoding format supports a frame-wise timestamp mode in which a single timestamp is output for each frame of event-based vision sensor data.

Example 88. The encoding format of any of Examples 82-87, wherein the encoding format includes the row-append package, and wherein, in the frame-wise timestamp mode, a row-append package containing timestamp information for an entire frame follows the row address LSB package at a start of the entire frame.

Example 89. The encoding format of any of Examples 82-88, wherein the column address LSB package includes column embedded bits comprising a polarity bit, an isolation flag bit, or a combination thereof.

Example 90. The encoding format of any of Examples 82-89, wherein the isolation flag bit indicates whether an immediately adjacent pixel also detected an event.

Example 91. The encoding format of any of Examples 82-90, wherein the encoding format supports event run-length encoding in which only a first event and a last event of a sequence of consecutive events are encoded using column address LSB packages.

Example 92. The encoding format of any of Examples 82-91, wherein the encoding format is configured such that run pixels between the first event and the last event are not streamed, and such that a decoder can identify the run pixels based at least in part on the first and last column address LSB packages.

Example 93. The encoding format of any of Examples 82-92, wherein the column address LSB package further includes semi-valid bits, and wherein the encoding format includes one or more column-append packages positionable after the column address LSB package, wherein the semi-valid bits are usable to indicate which rows within a pixel group have detected events and are usable to identify how many of the one or more column-append packages are transmitted.

Example 94. The encoding format of any of Examples 82-93, wherein the semi-valid bits comprise at least two bits, and wherein a first value of the semi-valid bits indicates that a top row of pixels in the pixel group did not detect events, a second value indicates that a bottom row of pixels in the pixel group did not detect events, and a third value indicates that events were detected in both rows of the pixel group.

Example 95. The encoding format of any of Examples 82-94, wherein when the semi-valid bits indicate that the top row of pixels did not detect events, the encoding format is configured such that no column-append package is sent for the top row and only a column-append package for the bottom row is transmitted.

Example 96. The encoding format of any of Examples 82-95, wherein the row address LSB package includes a top-bottom bit indicating whether a pixel row is located in a top half or a bottom half of a pixel array segment.

Example 97. The encoding format of any of Examples 82-96, wherein the column address MSB package further includes an exposure flag indicating whether events occurred within or outside of a CMOS image sensor exposure period.

Example 98. The encoding format of any of Examples 82-97, wherein the encoding format includes the column-append package, and wherein the column-append package is usable to encode a pixel group vector that encodes event information for a group of pixels arranged in multiple rows and one column.

Example 99. The encoding format of any of Examples 82-98, wherein each pixel's event status within the group of pixels is represented by at least two bits, and wherein the at least two bits encode no event, a positive polarity event, or a negative polarity event.

Example 100. The encoding format of any of Examples 82-99, wherein the column address LSB package includes column embedded bits that are usable as column address bits to increase addressable resolution.

Example 101. The encoding format of any of Examples 82-100, wherein the encoding format is configured such that event groups in which no pixels detected an event are skipped to enable a reduction of an amount of data encoded and transmitted.

Example 102. The encoding format of any of Examples 82-101, wherein the encoding format includes the row-append package and the embedded event packet, wherein the row-append package is usable to encode timestamp information shared by events detected by pixels of a same row, and wherein the embedded event packet is usable to encode MSB timestamp information while the row-append package encodes LSB timestamp information.

Example 103. A method of encoding event data from an event-based vision sensor, the method comprising encoding row address information using a row address most significant bit (MSB) package including a first prefix code and a row address least significant bit (LSB) package including a second prefix code that is different from the first prefix code; encoding column address information using a column address MSB package including a third prefix code that is different from the first and second prefix codes and a column address LSB package including a fourth prefix code that is different from the first, second, and third prefix codes; and encoding additional event information using a column-append package, a row-append package, an embedded event packet, or any combination thereof.

Example 104. The method of Example 103, wherein encoding additional event information includes encoding timestamp information for each event using the column-append package.

Example 105. The method of Example 103 or Example 104, wherein encoding additional event information includes encoding row-wise timestamp information using the row-append package while simultaneously encoding column-wise timestamp information using the column-append package.

Example 106. The method of any of Examples 103-105, wherein encoding additional event information includes encoding a single timestamp for each frame of event-based vision sensor data using the row-append package at a start of the frame.

Example 107. The method of any of Examples 103-106, further comprising encoding event polarity information in column embedded bits of the column address LSB package; encoding, in column embedded bits of the column address LSB package, an indication of whether an immediately adjacent pixel also detected an event; or a combination thereof.

Example 108. The method of any of Examples 103-107, further comprising implementing event run-length encoding by encoding only a first event and a last event of a sequence of consecutive events using column address LSB packages, wherein run pixels between the first event and the last event are not streamed.

Example 109. The method of any of Examples 103-108, wherein the column address LSB package includes semi-valid bits, and wherein the method further comprises encoding, using the semi-valid bits, an indication of which rows within a pixel group have detected events; and selectively transmitting one or more column-append packages based on the semi-valid bits, wherein column-append packages for rows without detected events are skipped.

Example 110. The method of any of Examples 103-109, further comprising encoding, using an exposure flag in the column address MSB package, an indication of whether events occurred within or outside of a CMOS image sensor exposure period.

Example 111. The method of any of Examples 103-110, further comprising partitioning a pixel array into pixel groups, each pixel group including multiple pixels arranged in multiple rows and one column; encoding events detected by pixels of a pixel group together in the column-append package as a pixel group vector; and skipping pixel groups in which no pixels detected an event.

Example 112. The method of any of Examples 103-111, wherein encoding additional event information includes encoding MSB timestamp information using the embedded event packet while encoding LSB timestamp information using the row-append package.

Example 113. An event-based vision sensor system, comprising an event-based vision sensor pixel array configured to detect events; and an event signal processor configured to encode detected events using an encoding format that includes a row address most significant bit (MSB) package including a first prefix code and content bits for encoding MSB row address information; a row address least significant bit (LSB) package including a second prefix code and content bits for encoding LSB row address information, wherein the second prefix code is different from the first prefix code; a column address MSB package including a third prefix code and content bits for encoding MSB column address information, wherein the third prefix code is different from the first and second prefix codes; a column address LSB package including a fourth prefix code and content bits for encoding LSB column address information, wherein the fourth prefix code is different from the first, second, and third prefix codes; and a column-append package positionable in an encoded event stream after the column address LSB package, a row-append package positionable in an encoded event stream after the row address LSB package, an embedded event packet comprising an embedded packet identifier package having a fifth prefix code that is different from the first, second, third, and fourth prefix codes, or any combination thereof.

Example 114. The event-based vision sensor system of Example 113, wherein the encoding format includes the column-append package, and wherein the column-append package is usable to encode timestamp information for each event detected by each pixel.

Example 115. The event-based vision sensor system of Example 113 or Example 114, wherein the encoding format includes the row-append package and the column-append package, and wherein the row-append package is usable to encode row-wise timestamp information and the column-append package is usable to encode column-wise timestamp information simultaneously.

Example 116. The event-based vision sensor system of any of Examples 113-115, wherein the encoding format supports a frame-wise timestamp mode in which a single timestamp is output for each frame of event-based vision sensor data.

Example 117. The event-based vision sensor system of any of Examples 113-116, wherein the column address LSB package includes column embedded bits comprising a polarity bit, an isolation flag bit, or a combination thereof.

Example 118. The event-based vision sensor system of any of Examples 113-117, wherein the event signal processor is configured to implement event run-length encoding by encoding only a first event and a last event of a sequence of consecutive events.

Example 119. The event-based vision sensor system of any of Examples 113-118, wherein the event signal processor is configured to, for a run of consecutive events of a same polarity, transmit only a first column address LSB package for a start pixel and a second column address LSB package for an end pixel.

Example 120. The event-based vision sensor system of any of Examples 113-119, wherein the column address LSB package further includes semi-valid bits indicating which rows within a pixel group have detected events, and wherein the event signal processor is configured to selectively transmit one or more column-append packages based on the semi-valid bits.

Example 121. The event-based vision sensor system of any of Examples 113-120, wherein the event-based vision sensor pixel array is partitioned into pixel groups, each including multiple pixels arranged in multiple rows and one column, and wherein the encoding format includes the column-append package usable to encode a pixel group vector representing event information for pixels within a pixel group.

Example 122. The event-based vision sensor system of any of Examples 113-121, wherein the encoding format includes the row-append package and the embedded event packet, wherein the row-append package is usable to encode timestamp information shared by events detected by pixels of a same row, and wherein the embedded event packet is usable to encode MSB timestamp information while the row-append package encodes LSB timestamp information.

Example 123. An encoding format for transmitting event data from an event-based vision sensor, the encoding format comprising a row address most significant bit (MSB) package including a first prefix code and content bits for encoding MSB row address information; a row address least significant bit (LSB) package including a second prefix code and content bits for encoding LSB row address information, wherein the second prefix code is different from the first prefix code; a column address MSB package including a third prefix code and content bits for encoding MSB column address information, wherein the third prefix code is different from the first and second prefix codes; a column address LSB package including a fourth prefix code and content bits for encoding LSB column address information and column embedded bits, wherein the fourth prefix code is different from the first, second, and third prefix codes; and an embedded event packet comprising an embedded packet identifier package, an embedded packet header package, and one or more embedded packet data packages, wherein the embedded packet identifier package includes a fifth prefix code, and wherein the fifth prefix code is different from the first, second, third, and fourth prefix codes.

Example 124. The encoding format of Example 123, wherein the first, second, third, fourth, and fifth prefix codes are assigned based on package frequency, with more frequently occurring packages receiving shorter prefix codes.

Example 125. The encoding format of Example 123 or Example 124, further comprising a row-append package positionable in an encoded event stream after the row address LSB package, wherein the row-append package is usable to encode row-wise information.

Example 126. The encoding format of any of Examples 123-125, wherein the row-wise information includes timestamp information sharable by events detected by pixels of a same row.

Example 127. The encoding format of any of Examples 123-126, further comprising a column-append package positionable in an encoded event stream after the column address LSB package, wherein the column-append package is usable to encode pixel-wise information.

Example 128. The encoding format of any of Examples 123-127, wherein the pixel-wise information includes a pixel group vector representing event information for a group of pixels.

Example 129. The encoding format of any of Examples 123-128, wherein the column embedded bits include at least one bit for encoding event polarity information and at least one bit for encoding column address information.

Example 130. A method of encoding event data from an event-based vision sensor, the method comprising encoding row address information using a row address MSB package and a row address LSB package, the row address MSB package include a first prefix code and the row address LSB package including a second prefix code that is shorter than the first prefix code; encoding column address information using a column address MSB package and a column address LSB package, the column address MSB package including a third prefix code and the column address LSB package including a fourth prefix code that is shorter than the third prefix code; encoding event polarity information, an isolation flag, or one or more column address bits in column embedded bits of the column address LSB package; and selectively transmitting an embedded event packet comprising an embedded packet identifier package with a fifth prefix code, an embedded packet header package, and one or more embedded packet data packages.

Example 131. The method of Example 130, further comprising implementing a package sharing methodology wherein packages containing higher address bits are shared across multiple events within a same address segment.

Example 132. The method of Example 130 or Example 131, wherein the package sharing methodology includes sharing the row address MSB package and the row address LSB package for events detected by pixels within a same row.

Example 133. The method of any of Examples 130-132, further comprising encoding timestamp information in a row-append package positioned after the row address LSB package, wherein the timestamp information is shared by events detected by pixels of a same row.

Example 134. The method of any of Examples 130-133, further comprising encoding pixel group vector information in a column-append package positioned after the column address LSB package, wherein the pixel group vector represents event information for a group of pixels.

Example 135. The method of any of Examples 130-134, wherein the pixel group vector information includes event polarity and event detection status for each pixel in the group of pixels.

Example 136. The method of any of Examples 130-135, wherein the embedded event packet is used to encode timestamp change events, external trigger events, or frame synchronization events.

Example 137. An event-based vision sensor system, comprising an event-based vision sensor pixel array configured to detect events; and an event signal processor configured to encode detected events using an encoding format that includes coordinate packages comprising a row address most significant bit (MSB) package, a row address least significant bit (LSB) package, a column address MSB package, and a column address LSB package, each coordinate package including a variable-length prefix code for package identification; and embedded event packets that each comprise an embedded packet identifier package with a prefix code, an embedded packet header package, and an embedded packet data package.

Example 138. The event-based vision sensor system of Example 137, wherein the event signal processor implements a package sharing methodology in which packages containing higher address bits are shared across multiple events within a same address segment.

Example 139. The event-based vision sensor system of Example 137 or Example 138, wherein the package sharing methodology includes sharing the row address MSB package and the row address LSB package for events detected by pixels within a same row of the event-based vision sensor pixel array.

Example 140. The event-based vision sensor system of any of Examples 137-139, wherein the encoding format further includes a row-append package positioned after the row address LSB package, the row-append package usable to encode timestamp information shared by events detected by pixels of a same row.

Example 141. The event-based vision sensor system of any of Examples 137-140, wherein the encoding format further includes a column-append package positioned after the column address LSB package, the column-append package usable to encode a pixel group vector representing event information for a group of pixels.

Example 142. The event-based vision sensor system of any of Examples 137-141, wherein the pixel group vector includes event polarity and event detection status for each pixel in the group of pixels, and wherein the group of pixels comprises a 4×1 arrangement of pixels.

Example 143. An encoding format for transmitting event data from an event-based vision sensor, the encoding format comprising a row address most significant bit (MSB) package including a first prefix code and content bits for encoding MSB row address information; a row address least significant bit (LSB) package including a second prefix code and content bits for encoding LSB row address information, wherein the second prefix code is different from the first prefix code; a row address extension package including a third prefix code and content bits for specifying additional row address bits for encoded events, wherein the third prefix code is difference from the first and second prefix codes; a column address MSB package including a fourth prefix code and content bits for encoding MSB column address information, wherein the fourth prefix code is different from the first, second, and third prefix codes; a column address LSB package including a fifth prefix code and content bits for encoding LSB column address information and column embedded bits, wherein the fifth prefix code is different from the first, second, third, and fourth prefix codes; a column address extension package including a sixth prefix code and content bits for specifying additional column address bits for encoded events, wherein the sixth prefix code is different form the first, second, third, and fourth prefix codes; and an embedded event packet identifier package including a seventh prefix and an extension field, wherein the embedded event packet identifier package is configured to identify a start of an embedded event packet that includes an embedded event packet header package and one or more embedded event packet data packages.

Example 144. The encoding format of Example 143, wherein the first prefix code is a four-bit prefix; and second prefix code is a two-bit prefix code.

Example 145. The encoding format of Example 143 or Example 144, wherein the fourth prefix code is a three-bit prefix code; and the sixth prefix code is a one-bit prefix code.

Example 146. The encoding format of any of Examples 143-145, wherein the column address LSB package includes column embedded bits that are usable to encode event polarity information.

Example 147. The encoding format of any of Examples 143-146, wherein the embedded event packet header package includes a data type field and a word count field, and wherein the extension field of the embedded event packet identifier package is configured to be used in combination with the data type field to specify a data type of content in a payload of the embedded event packet.

Example 148. The encoding format of any of Examples 143-147, wherein the embedded event packet is configured to encode timestamp information, external trigger information, frame start information, frame end information, metadata insertion information, metadata report information, or any combination thereof.

Example 149. The encoding format of any of Examples 143-148, wherein the embedded event packet is usable to encode timestamp least significant bit (LSB) change information or timestamp most significant bit (MSB) change information.

Example 150. A method of encoding event data from an event-based vision sensor, the method comprising encoding, using an embedded event packet, event information for transmission in an encoded data stream, wherein encoding the event information includes specifying a data type of the event information using (i) a data type extension field of an embedded event packet identifier package and (ii) a data type field of an embedded event packet header package, wherein the embedded event identifier package includes a prefix code usable to identify a start of the embedded event packet, and encoding the event information in at least one embedded event packet data package.

Example 151. The method of Example 150, wherein specifying the data type includes specifying the event information includes least significant bit (LSB) timestamp change information; and encoding the event information includes encoding the LSB timestamp change information in the at least one embedded event packet data package.

Example 152. The method of Example 150 or Example 151, wherein specifying the data type includes specifying the event information includes most significant bit (MSB) timestamp change information; and encoding the event information includes encoding the MSB timestamp change information in the at least one embedded event packet data package.

Example 153. The method of any of Examples 150-152, wherein specifying the data type includes specifying the event information includes external trigger information, MIPI frame start information, MIPI frame end information, event frame start information, event frame end information, external metadata insertion information, internal metadata report information, CMOS image sensor (CIS) frame start information, CIS frame end information, or any combination thereof; and encoding the event information includes encoding the external trigger information, the MIPI frame start information, the MIPI frame end information, the event frame start information, the event frame end information, external metadata insertion information, the internal metadata report information, the CMOS image sensor (CIS) frame start information, and/or the CIS frame end information in the at least one embedded event packet data package.

Example 154. The method of any of Examples 150-153, wherein specifying the data type includes specifying the event information includes in-line vector event information, line vector event information, or a combination thereof; and encoding the event information includes encoding the in-line vector event information and/or the line vector event information in the at least one embedded event packet data package.

Example 155. The method of any of Examples 150-154, wherein specifying the data type includes specifying the event information includes run-length event information; and encoding the event information includes encoding the run-length event information in the at least one embedded event packet data package.

Example 156. The method of any of Examples 150-155, wherein specifying the data type includes specifying the event information includes different event information, wherein the different event information refers to a group of events generated at a same time by pixels that are spaced apart a preset distance away from one another in the X-direction; and encoding the event information includes encoding the different event information in the at least one embedded event packet data package.

Example 157. An event-based vision sensor system, comprising an event-based vision sensor pixel array configured to detect events; and an event signal processor configured to encode detected events using an encoding format that includes an embedded event packet comprising (1) an embedded event packet identifier package having a prefix code usable to identify a start of the embedded event packet and a data type extension field, (2) an embedded event packet header package including a data type field and a word count field, and (3) one or more embedded event packet data packages.

Example 158. The event-based vision sensor system of Example 157, wherein the encoding format further includes a row address most significant bit (MSB) package having a second prefix and content bits for specifying most significant row address bits; a row address least significant bit (LSB) package having a third prefix and content bits for specifying least significant row address bits.

Example 159. The event-based vision sensor system of Example 157 or Example 158, wherein the encoding format further includes a row address extension package having a fourth prefix and content bits for specifying additional most significant row address bits.

Example 160. The event-based vision sensor system of any of Examples 157-159, wherein the encoding format further includes a column address MSB package having a second prefix and content bits for specifying most significant column address bits; and a column address LSB package having a third prefix and content bits for specifying least significant column address bits and/or event polarity.

Example 161. The event-based vision sensor system of any of Examples 157-160, wherein the encoding format further includes a column address extension package having a fourth prefix and content bits for specifying additional most significant column address bits.

Example 162. The event-based vision sensor system of any of Examples 157-161, wherein the embedded event packet is usable to encode timestamp least significant bit (LSB) change information, timestamp most significant bit (MSB) change information, in-line vector event information, line vector event information, run-length event information, different event information, or any combination thereof; and the different event information refers to a group of events generated at a same time by pixels that are spaced apart a preset distance away from one another in the X-direction.

### D. Conclusion

The above detailed descriptions of embodiments of the technology are not intended to be exhaustive or to limit the technology to the precise form disclosed above. Although specific embodiments of, and examples for, the technology are described above for illustrative purposes, various equivalent modifications are possible within the scope of the technology as those skilled in the relevant art will recognize. For example, although steps are presented in a given order above, alternative embodiments may perform steps in a different order. Furthermore, the various embodiments described herein may also be combined to provide further embodiments.

From the foregoing, it will be appreciated that specific embodiments of the technology have been described herein for purposes of illustration, but well-known structures and functions have not been shown or described in detail to avoid unnecessarily obscuring the description of the embodiments of the technology. To the extent any material incorporated herein by reference conflicts with the present disclosure, the present disclosure controls. Where context permits, singular or plural terms may also include the plural or singular term, respectively. In addition, unless the word "or" is expressly limited to mean only a single item exclusive from the other items in reference to a list of two or more items, then the use of "or" in such a list is to be interpreted as including (a) any single item in the list, (b) all of the items in the list, or (c) any combination of the items in the list. Furthermore, as used herein, the phrase "and/or" as in "A and/or B" refers to A alone, B alone, and both A and B. Additionally, the terms "comprising," "including," "having," and "with" are used throughout to mean including at least the recited feature(s) such that any greater number of the same features and/or additional types of other features are not precluded. Moreover, as used herein, the phrases "based on," "depends on," "as a result of," and "in response to" shall not be construed as a reference to a closed set of conditions. For example, an exemplary step that is described as "based on condition A" may be based on both condition A and condition B without departing from the scope of the present disclosure. In other words, as used herein, the phrase "based on" shall be construed in the same manner as the phrase "based at least in part on" or the phrase "based at least partially on." Also, the terms "connect" and "couple" are used interchangeably herein and refer to both direct and indirect connections or couplings. For example, where the context permits, element A "connected" or "coupled" to element B can refer (i) to A directly "connected" or directly "coupled" to B and/or (ii) to A indirectly "connected" or indirectly "coupled" to B.

From the foregoing, it will also be appreciated that various modifications may be made without deviating from the disclosure or the technology. For example, one of ordinary skill in the art will understand that various components of the technology can be further divided into subcomponents, or that various components and functions of the technology may be combined and integrated. In addition, certain aspects of the technology described in the context of particular embodiments may also be combined or eliminated in other embodiments. Furthermore, although advantages associated with certain embodiments of the technology have been described in the context of those embodiments, other embodiments may also exhibit such advantages, and not all embodiments need necessarily exhibit such advantages to fall within the scope of the technology. Accordingly, the disclosure and associated technology can encompass other embodiments not expressly shown or described herein.

The following clauses provide general expressions of the disclosure herein:
C1. An encoding format for transmitting event data from an event-based vision sensor, the encoding format comprising:
   a row address most significant bit (MSB) package including a first prefix code and content bits for encoding MSB row address information;
   a row address least significant bit (LSB) package including a second prefix code and content bits for encoding LSB row address information, wherein the second prefix code is different from the first prefix code;
   a column address MSB package including a third prefix code and content bits for encoding MSB column address information, wherein the third prefix code is different from the first and second prefix codes; and
   a column address LSB package including a fourth prefix code and content bits for encoding LSB column address information, wherein the fourth prefix code is different from the first, second, and third prefix codes,
   wherein the encoding format further includes:
      a column-append package positionable in an encoded event stream after the column address LSB package,
      a row-append package positionable in an encoded event stream after the row address LSB package,
      an embedded event packet comprising an embedded packet identifier package having a fifth prefix code that is different from the first, second, third, and fourth prefix codes, or
      any combination thereof.
C2. The encoding format of clause C1, wherein the encoding format includes the column-append package, and wherein the column-append package is usable to encode timestamp information for each event detected by each pixel.
C3. The encoding format of clause C1, wherein the encoding format includes the column-append package, and wherein the encoding format supports an in-pixel timestamp mode in which the column-append package encodes timestamp information for individual events.
C4. The encoding format of clause C3, wherein, in the in-pixel timestamp mode, the column-append package is followed by the column address MSB package, another column address LSB package, the row address MSB package, the row address LSB package, or an embedded packet identifier package.
*C5.* The encoding format of clause C1, wherein the encoding format includes the row-append package and the column-append package, and wherein the row-append package is usable to encode row-wise timestamp information and the column-append package is usable to encode column-wise timestamp information simultaneously.
C6. The encoding format of clause C1, wherein the encoding format supports a frame-wise timestamp mode in which a single timestamp is output for each frame of event-based vision sensor data.
C7. The encoding format of clause C6, wherein the encoding format includes the row-append package, and wherein, in the frame-wise timestamp mode, a row-append package containing timestamp information for an entire frame follows the row address LSB package at a start of the entire frame.
C8. The encoding format of clause C1, wherein the column address LSB package includes column embedded bits comprising a polarity bit, an isolation flag bit, or a combination thereof.
C9. The encoding format of clause C8, wherein the isolation flag bit indicates whether an immediately adjacent pixel also detected an event.
C10. The encoding format of clause C1, wherein the encoding format supports event run-length encoding in which only a first event and a last event of a sequence of consecutive events are encoded using column address LSB packages.
C11. The encoding format of clause C10, wherein the encoding format is configured such that run pixels between the first event and the last event are not streamed, and such that a decoder can identify the run pixels based at least in part on the first and last column address LSB packages.
C12. The encoding format of clause C1, wherein the column address LSB package further includes semi-valid bits, and wherein the encoding format includes one or more column-append packages positionable after the column address LSB package, wherein the semi-valid bits are usable to indicate which rows within a pixel group have detected events and are usable to identify how many of the one or more column-append packages are transmitted.
C13. The encoding format of clause C12, wherein the semi-valid bits comprise at least two bits, and wherein a first value of the semi-valid bits indicates that a top row of pixels in the pixel group did not detect events, a second value indicates that a bottom row of pixels in the pixel group did not detect events, and a third value indicates that events were detected in both rows of the pixel group.
C14. The encoding format of clause C13, wherein when the semi-valid bits indicate that the top row of pixels did not detect events, the encoding format is configured such that no column-append package is sent for the top row and only a column-append package for the bottom row is transmitted.
C15. The encoding format of clause C12, wherein the row address LSB package includes a top-bottom bit indicating whether a pixel row is located in a top half or a bottom half of a pixel array segment.
C16. The encoding format of clause C1, wherein the column address MSB package further includes an exposure flag indicating whether events occurred within or outside of a CMOS image sensor exposure period.
C17. The encoding format of clause C1, wherein the encoding format includes the column-append package, and wherein the column-append package is usable to encode a pixel group vector that encodes event information for a group of pixels arranged in multiple rows and one column.
C18. The encoding format of clause C17, wherein each pixel's event status within the group of pixels is represented by at least two bits, and wherein the at least two bits encode no event, a positive polarity event, or a negative polarity event.
C19. The encoding format of clause C17, wherein the column address LSB package includes column embedded bits that are usable as column address bits to increase addressable resolution.
C20. The encoding format of clause C17, wherein the encoding format is configured such that event groups in which no pixels detected an event are skipped to enable a reduction of an amount of data encoded and transmitted.
C21. The encoding format of clause C1, wherein the encoding format includes the row-append package and the embedded event packet, wherein the row-append package is usable to encode timestamp information shared by events detected by pixels of a same row, and wherein the embedded event packet is usable to encode MSB timestamp information while the row-append package encodes LSB timestamp information.
C22. An event-based vision sensor configured to transmit event data using an encoding format according to any of clauses C1-C21, any of claims 1-15 set out below, and/or any other encoding format disclosed herein.
C23. A method of transmitting event data from an event-based vision sensor using an encoding format according to any of clauses C1-C21, any of claims 1-15 set out below, and/or any other encoding format disclosed herein.
C24. A method of encoding event data from an event-based vision sensor using an encoding format according to any of clauses C1-C21, any of claims 1-15 set out below, and/or any other encoding format disclosed herein.
C25. An event-based vision sensor system comprising: an event-based vision sensor pixel array configured to detect events; and an event signal processor configured to encode detected events using an encoding format according to any of clauses C1-C21, any of claims 1-15 set out below, and/or any other encoding format disclosed herein.
C26. The event-based vision sensor system of clause C25, further comprising a **MIPI** transmitted configured to transmit encoded data.

## Claims

1. An encoding format for transmitting event data from an event-based vision sensor, the encoding format comprising:
a row address most significant bit (MSB) package including a first prefix code and content bits for encoding MSB row address information;
a row address least significant bit (LSB) package including a second prefix code and content bits for encoding LSB row address information, wherein the second prefix code is different from the first prefix code;
a column address MSB package including a third prefix code and content bits for encoding MSB column address information, wherein the third prefix code is different from the first and second prefix codes; and
a column address LSB package including a fourth prefix code and content bits for encoding LSB column address information, wherein the fourth prefix code is different from the first, second, and third prefix codes,
wherein the encoding format further includes:
a column-append package positionable in an encoded event stream after the column address LSB package,
a row-append package positionable in an encoded event stream after the row address LSB package,
an embedded event packet comprising an embedded packet identifier package having a fifth prefix code that is different from the first, second, third, and fourth prefix codes, or
any combination thereof.

2. The encoding format of claim 1, wherein the encoding format includes the column-append package, and wherein the column-append package is usable to encode timestamp information for each event detected by each pixel.

3. The encoding format of claim 1 or claim 2, wherein the encoding format includes the column-append package, and wherein the encoding format supports an in-pixel timestamp mode in which the column-append package encodes timestamp information for individual events.

4. The encoding format of any of claims 1-3, wherein the encoding format includes the row-append package and the column-append package, and wherein the row-append package is usable to encode row-wise timestamp information and the column-append package is usable to encode column-wise timestamp information simultaneously.

5. The encoding format of any of claims 1-4, wherein the encoding format supports a frame-wise timestamp mode in which a single timestamp is output for each frame of event-based vision sensor data.

6. The encoding format of any of claims 1-5, wherein the column address LSB package includes column embedded bits comprising a polarity bit, an isolation flag bit, or a combination thereof, and wherein the isolation flag bit indicates whether an immediately adjacent pixel also detected an event.

7. The encoding format of any of claims 1-6, wherein the encoding format supports event run-length encoding in which only a first event and a last event of a sequence of consecutive events are encoded using column address LSB packages.

8. The encoding format of claim 7, wherein the encoding format is configured such that run pixels between the first event and the last event are not streamed, and such that a decoder can identify the run pixels based at least in part on the first and last column address LSB packages.

9. The encoding format of any of claims 1-8, wherein the column address LSB package further includes semi-valid bits, and wherein the encoding format includes one or more column-append packages positionable after the column address LSB package, wherein the semi-valid bits are usable to indicate which rows within a pixel group have detected events and are usable to identify how many of the one or more column-append packages are transmitted.

10. The encoding format of claim 9, wherein the row address LSB package includes a top-bottom bit indicating whether a pixel row is located in a top half or a bottom half of a pixel array segment.

11. The encoding format of any of claims 1-10, wherein the column address MSB package further includes an exposure flag indicating whether events occurred within or outside of a CMOS image sensor exposure period.

12. The encoding format of any of claims 1-11, wherein the encoding format includes the column-append package, and wherein the column-append package is usable to encode a pixel group vector that encodes event information for a group of pixels arranged in multiple rows and one column.

13. The encoding format of claim 12, wherein:
each pixel's event status within the group of pixels is represented by at least two bits, and wherein the at least two bits encode no event, a positive polarity event, or a negative polarity event; and/or
the encoding format is configured such that event groups in which no pixels detected an event are skipped to enable a reduction of an amount of data encoded and transmitted.

14. The encoding format of any of claims 1-13, wherein the column address LSB package includes column embedded bits that are usable as column address bits to increase addressable resolution.

15. The encoding format of any of claims 1-14, wherein the encoding format includes the row-append package and the embedded event packet, wherein the row-append package is usable to encode timestamp information shared by events detected by pixels of a same row, and wherein the embedded event packet is usable to encode MSB timestamp information while the row-append package encodes LSB timestamp information.

16. An event-based vision sensor system comprising: an event-based vision sensor pixel array configured to detect events; and an event signal processor configured to encode detected events using an encoding format according to any previous claim.
